(19) Europäisches Patentamt
European Patent Office
Office européen des brevets

(11) EP 3 653 541 A1

(12) EUROPEAN PATENT APPLICATION
published in accordance with Art. 153(4) EPC

(43) Date of publication:
20.05.2020 Bulletin 2020/21

(51) Int Cl.:
B65G 1/137 (2006.01)        G06Q 50/28 (2012.01)

(21) Application number: 18831444.7

(22) Date of filing: 11.07.2018

(86) International application number:
PCT/CN2018/095282

(87) International publication number:
WO 2019/011276 (17.01.2019 Gazette 2019/03)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 11.07.2017 CN 201710562402

(71) Applicant: Zhejiang Guozi Robotics Co., Ltd.
Hangzhou, Zhejiang 310053 (CN)

(72) Inventors:
• TAO, Yikun
Hangzhou
Zhejiang 310053 (CN)

• WU, Weifeng
Hangzhou
Zhejiang 310053 (CN)
• LI, Hongye
Hangzhou
Zhejiang 310053 (CN)
• WEI, Lei
Hangzhou
Zhejiang 310053 (CN)
• SHEN, Zhenhua
Hangzhou
Zhejiang 310053 (CN)
• CHEN, Kai
Hangzhou
Zhejiang 310053 (CN)

(74) Representative: LKGLOBAL
Lorenz & Kopf PartG mbB Patentanwälte
Brienner Straße 11
80333 München (DE)

(54) ORDER COMPLETION SYSTEM AND METHOD

(57) Provided is an order completion system, comprising a warehouse, a charging skip for transporting an order, a movable apparatus for transporting the charging skip, a movable device for transporting goods and a control centre. The warehouse comprises an order preparation area, a high-frequency goods-picking area, a low-frequency goods-picking area and a middle cooperative area. The order preparation area is used for associating the order with the charging skip for transporting the order, and associating the charging skip carrying the order with a movable apparatus for transporting goods. The high-frequency goods-picking area is used for the charging skip carrying the order to perform goods-picking. The low-frequency goods-picking area is used for the movable device for transporting goods to perform goods-picking. The middle cooperative area is used for the movable device for transporting goods to put in the picked goods, and for the charging skip to park and putting the goods put by the movable device for transporting goods into the charging skip. The control centre is used for controlling the charging skip for transporting the order, the movable apparatus for transporting goods and the middle cooperative area so that same work. The present invention also relates to an order completion method.

Figure 1

## Description

## RELATED APPLICATION

The present application claims the priority to Chinese Patent Application No.201710562402.4, titled "ORDER COMPLETION SYSTEM AND METHOD", filed on July 11, 2017 with the Chinese Patent Office, which is incorporated herein by reference in its entirety.

## TECHNICAL FIELD

The present disclosure relates to the technical field of warehouse picking, and in particular to an order completion system and an order completion method.

## BACKGROUND

With the development of e-commerce, large and very large warehouses are constantly being built and putted into use. For a large number of orders every day, how to achieve efficient, accurate and timely picking in the warehouse becomes an important factor affecting order processing and delivery speed. Especially for warehouses with many kinds of goods, large quantities of goods, and high picking frequency, scientific and efficient picking methods directly affect the using efficiency of the warehouse and the speed of delivery.

In order to complete the processing of purchase orders issued by consumers as soon as possible, e-commerce needs to pick, package and deliver the goods, from the warehouse, purchased by consumers as soon as possible. The picking in traditional mode is time-consuming and labor-intensive.

In traditional e-commerce warehouses, there are two methods for picking goods. Method 1, "Picking+Seeding mode", that is, multiple orders are combined into one picking list, a picker picks all the goods for once a time according to the picking list (Picking), and the picked goods, in which goods for different orders are mixed together, need to be distributed to respective containers according to the order (Seeding). Method 2, "Picking mode", in some e-commerce warehouses, "Picking mode" is adopted. That is, different containers are associated with different orders respectively before the picking starts, and multiple containers are placed on a special charging vehicle. The picker pushes the charging vehicle and looks for the goods in the warehouse, and a goods is picked and placed directly into the container corresponding to an order including the goods. With this mode, the distribution is not required, however the picker has a higher labor intensity because the charging vehicle and the goods are heavy.

The traditional "goods to person" mode actually refers to a "shelf to person" mode, that is, a movable device moves the entire movable shelf storing the to-be-picked goods to a person. In the traditional mode, for each picking, the movable device needs to move the shelf out of a storage area, and needs to put the entire shelf back after the picking. Only one or a few goods are picked up in one shuttle of the movable device. The traditional picking mode is inefficient, which increases energy consumption and wear of the equipment, and increases maintenance costs.

Therefore, those skilled in the art are directed to developing a warehouse picking method, to reduce the labor and work intensity and increase efficiency. According to the present disclosure, order picking is realized by the aid of automatic equipment, thereby saving manpower and reducing labor intensity. In order to solve the problem of low efficiency of the traditional "goods to person" mode, a "container to person" mode is used in the present disclosure, that is, the goods are stored in a small container or a pallet, and the movable device takes multiple small containers or pallets each time for different orders and transfers the taken containers or pallets to the picking station, under the scheduling of the background system. In the present disclosure, the movable device can transport multiple to-be-picked goods in one shuttle from the storage area to the picking station, thereby significantly improving the efficiency.

## SUMMARY

In order to solve the above problem, an order completion system is provided according to the present disclosure to improve the efficiency.

An order completion system is provided according to the disclosure, the order completion system includes a warehouse, a charging vehicle for transporting an order, a movable apparatus for transporting the charging vehicle, a movable device for transporting goods, and a control center. The warehouse includes an order preparation area, a high-frequency picking area, a low-frequency picking area, and an intermediate cooperation area. The order preparation area is configured for associating the order with the charging vehicle for transporting the order and associating the charging vehicle for transporting the order with the movable apparatus for transporting goods. The high-frequency picking area is configured for the charging vehicle for transporting the order to pick goods. The low-frequency picking area is configured for the movable device for transporting goods to pick goods. The intermediate cooperation area is configured for the movable device for transporting goods to place the goods, picked by the movable device, in the intermediate cooperation area, and is configured for the charging vehicle to park at the intermediate cooperation area and to pick the goods, in the intermediate cooperation area placed by the movable device for transporting goods, into the charging vehicle. The control center is configured to control the charging vehicle for transporting the order, the movable apparatus for transporting goods, and the intermediate cooperation area to operate.

An order completion method is provided according to the disclosure. The method includes:

in an order preparation area, associating an order with a charging vehicle and associating the charging vehicle with a movable apparatus for transporting goods;

transporting the charging vehicle to a high-frequency picking area for picking goods;

picking, by a movable device for transporting goods, goods in a low-frequency picking area and transporting, by the movable device, the goods to a workstation of an intermediate cooperation area; and

generating, by a picking station, a reminder based on order information of the order and placing, according to the reminder, the goods in a container corresponding to the order in the charging vehicle.

With the order completion system and the order completion method provided according to the present disclosure, the order completion efficiency can be improved.

**BRIEF DESCRIPTION OF THE DRAWINGS**

Figure 1 shows an order completion system.

Figure 2 is a schematic structural diagram of a part of a warehouse shown in Figure 1.

Figure 3 is a schematic structural diagram of storage cells and pallets in the warehouse shown in Figure 2.

Figure 4 is a schematic structural diagram of a workstation according to an embodiment of the present disclosure.

Figure 5 is a schematic structural diagram of a charging vehicle according to an embodiment of the present disclosure.

Figure 6 is a schematic structural diagram of the charging vehicle shown in Figure 5 which is docked with a movable apparatus for transporting the charging vehicle.

Figure 7 is a schematic diagram of a movable device working in a warehouse according to the present disclosure.

Figure 8 is a schematic structural diagram of the movable device shown in Figure 7.

Figure 9 is a side view of a movable device according to the present disclosure.

Figure 10 is a schematic structural diagram of a gripping mechanism according to the present disclosure.

Figure 11 is a side view of a gripping mechanism according to the present disclosure.

Figure 12 is an enlarged schematic diagram of the area A in Figure 11 according to the present disclosure.

Figure 13 is an schematic structural diagram of a stroke amplifying component according to an embodiment of the present disclosure.

Figure 14 is a schematic diagram of a working state of a movable device according to the present disclosure.

Figure 15 is a schematic diagram of another working state of a movable device according to the present disclosure.

Figure 16 is a schematic flow chart of a picking method according to an embodiment of the present disclosure.

Figure 17 is a schematic flow chart of a method for comparing position information of the gripping mechanism with storage position information and controlling the gripping mechanism to take goods, according to an embodiment of the present disclosure.

Figure 18 is a schematic flow chart of a method for comparing position information of the gripping mechanism with storage position information and controlling the gripping mechanism to take goods, according to another embodiment of the present disclosure.

Figure 19 is a schematic diagram of a picking device according to an embodiment of the present disclosure.

Figure 20 is a schematic flow chart of a method for correcting a deviation of a pallet according to an embodiment of the present disclosure.

Figure 21 is a schematic flow chart of a method for obtaining the deviation according to an embodiment of the present disclosure.

Figure 22 is a schematic flow chart of a method for correcting the deviation according to an embodiment of the present disclosure.

Figure 23 is a schematic flow chart of a method for correcting an X-axis deviation according to an embodiment of the present disclosure.

Figure 24 is a schematic flow chart of a method for correcting a Y-axis deviation according to an embodiment of the present disclosure.

Figure 25 is a structural block diagram of a device for correcting a deviation of a pallet according to an embodiment of the present disclosure.

Figure 26 is a structural block diagram of a deviation calculating module according to an embodiment of the present disclosure.

Figure 27 is a schematic flow chart of a scheduling method according to an embodiment of the present disclosure.

Figure 28 is a schematic flow chart of a method for moving to a picking station according to an embodiment of the present disclosure.

Figure 29 is a schematic flow chart of a method for matching a current position with a picking station position according to an embodiment of the present disclosure.

Figure 30 is a schematic flow chart of a method for matching a current position with a picking station position according to another embodiment of the present disclosure.

Figure 31 is a structural block diagram of a scheduling device according to an embodiment of the present disclosure.

Figure 32 is a schematic flow chart of a method for generating a reminder for picking according to an embodiment of the present disclosure.

Figure 33 is a schematic flow chart of a method for generating a reminder based on order information according to an embodiment of the present disclosure.

Figure 34 is a schematic flow chart of a method for generating a reminder based on order information according to another embodiment of the present disclosure.

Figure 35 is a schematic flow chart of a method for generating a reminder for picking according to another embodiment of the present disclosure.

Figure 36 is a structural block diagram of a picking reminding device according to an embodiment of the present disclosure.

Figure 37 is a structural block diagram of a reminding module according to an embodiment of the present disclosure.

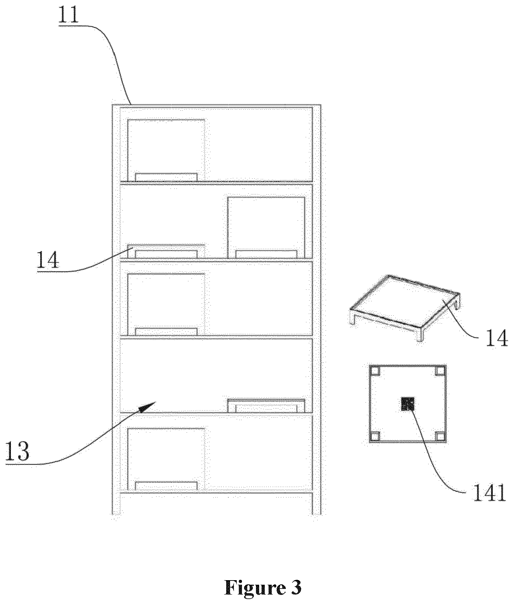

Figure 3 8 is a schematic flow chart of a method for picking a pallet according to an embodiment of the present disclosure.

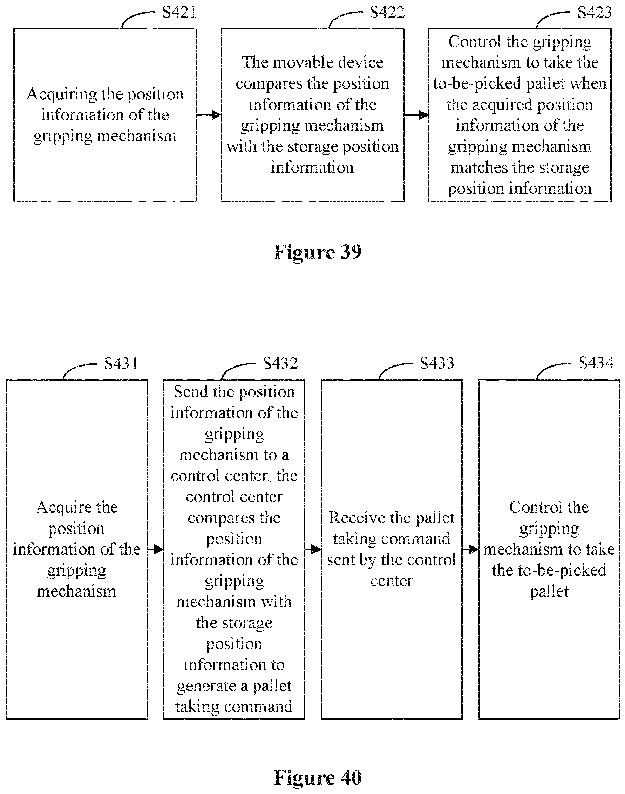

Figure 39 is a schematic flow chart of a method for comparing position information of the gripping mechanism with storage position information and controlling the gripping mechanism to take a to-be-picked pallet, according to an embodiment of the present disclosure.

Figure 40 is a schematic flow chart of a method for comparing position information of the gripping mechanism with storage position information and controlling the gripping mechanism to take a to-be-picked pallet, according to an embodiment of the present disclosure.

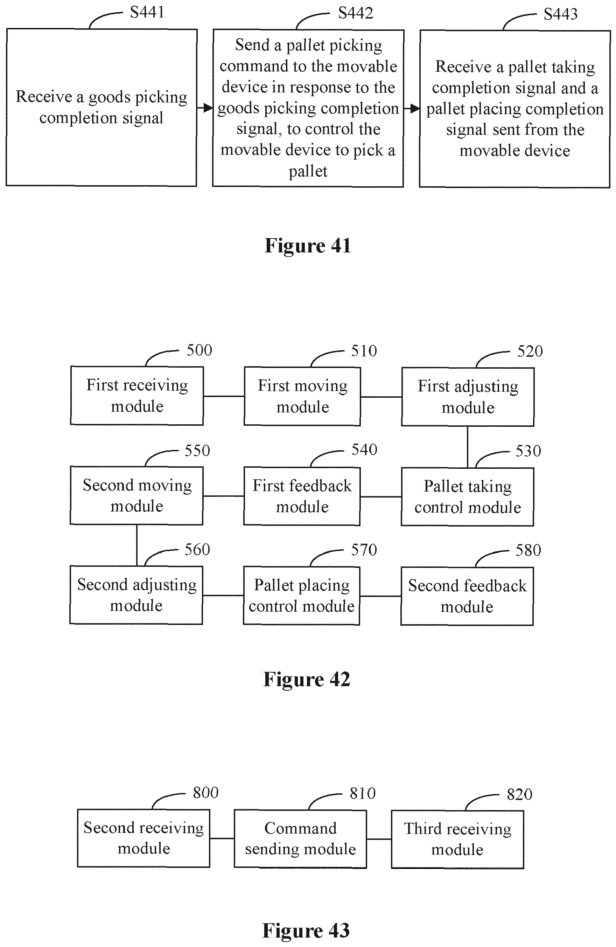

Figure 41 is a schematic flow chart of a method for picking a pallet according to an embodiment of the present disclosure.

Figure 42 is a schematic diagram of an execution terminal of a pallet picking system according to an embodiment of the present disclosure.

Figure 43 is a schematic diagram of a control terminal of the pallet picking system according to an embodiment of the present disclosure.

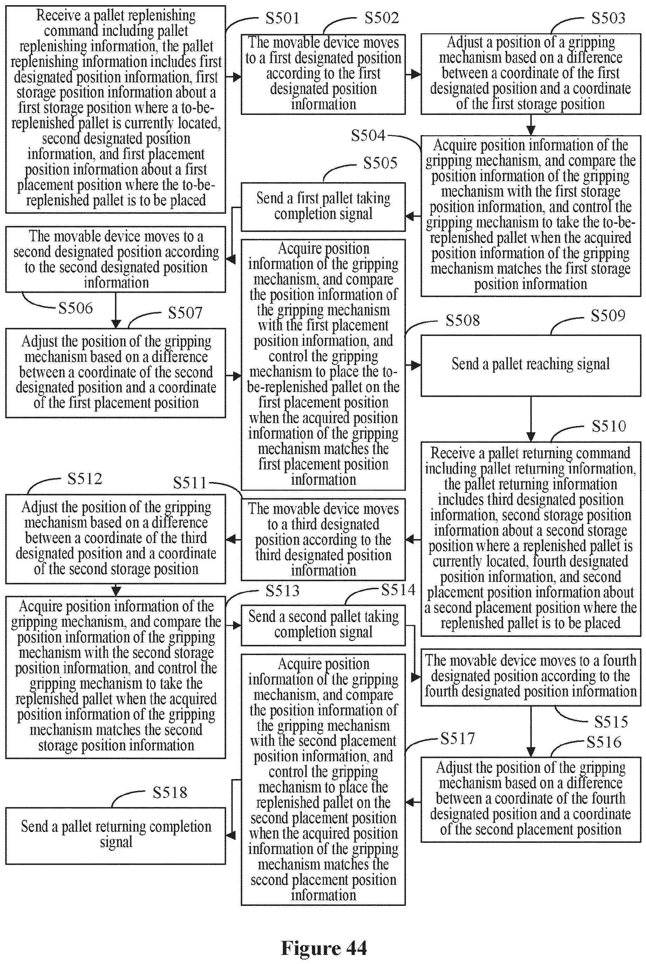

Figure 44 is a schematic flow chart of a method for replenishing according to an embodiment of the present disclosure.

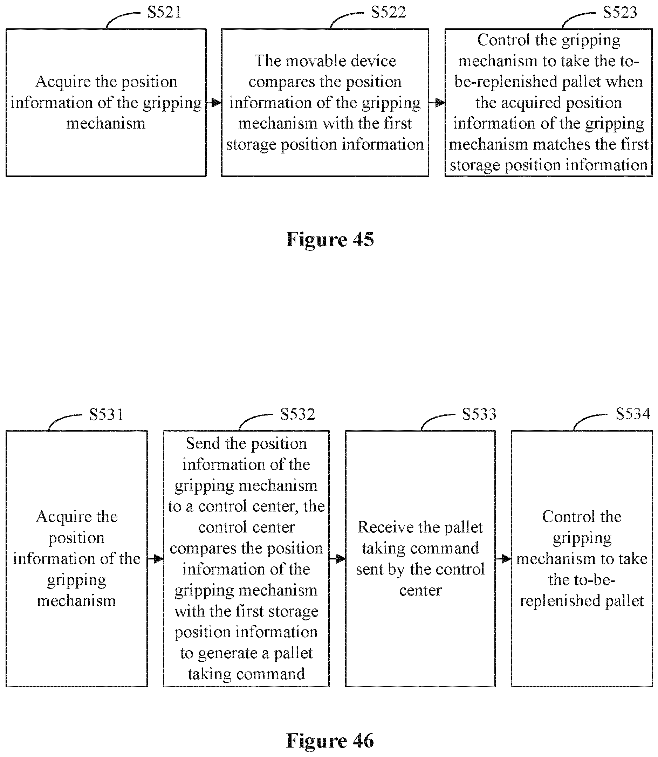

Figure 45 is a schematic flow chart of a method for comparing the position information of the gripping mechanism with the first storage position information, and controlling the gripping mechanism to take the to-be-replenished pallet, according to an embodiment of the present disclosure.

Figure 46 is a schematic flow chart of a method for comparing the position information of the gripping mechanism with the first storage position information, and controlling the gripping mechanism to take the to-be-replenished pallet, according to an embodiment of the present disclosure.

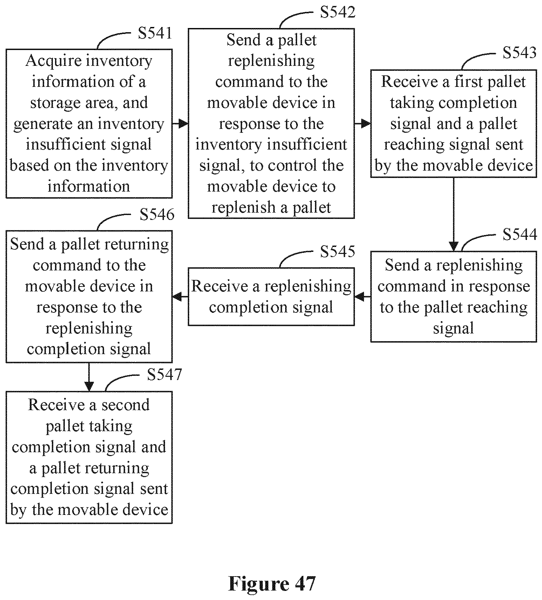

Figure 47 is a schematic flow chart of a method for replenishing according to an embodiment of the present disclosure.

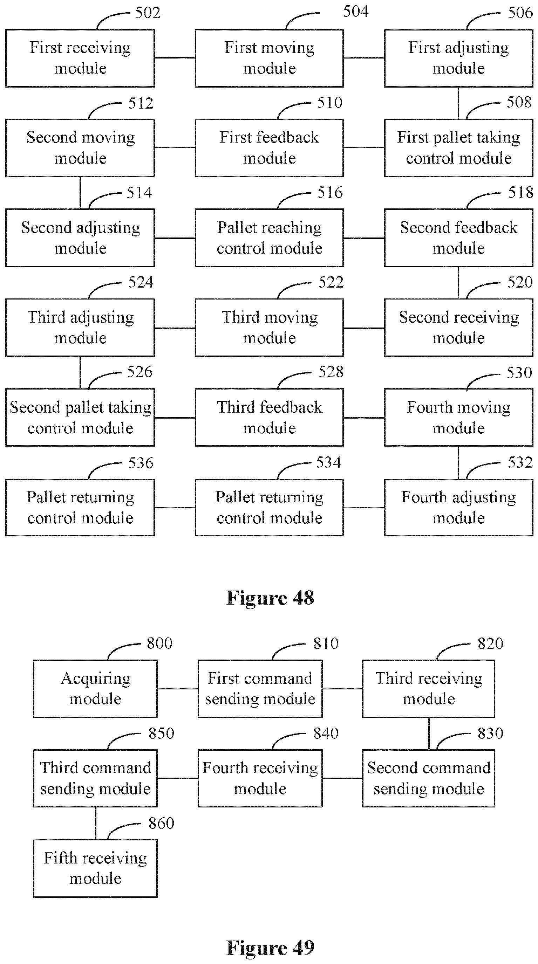

Figure 48 is a schematic diagram of an execution terminal of a replenishing system according to an embodiment of the present disclosure.

Figure 49 is a schematic diagram of a control terminal of the replenishing system according to an embodiment of the present disclosure.

**DETAILED DESCRIPTION OF THE EMBODIMENTS**

The technical solutions in the embodiments of the present disclosure are clearly and completely described below. Apparently, the described embodiments are only a part of the embodiments of the present disclosure, rather than all of the embodiments. Based on the embodiments in the present disclosure, all other embodiments obtained by those skilled in the art without creative work fall within the scope of the protection of the present disclosure.

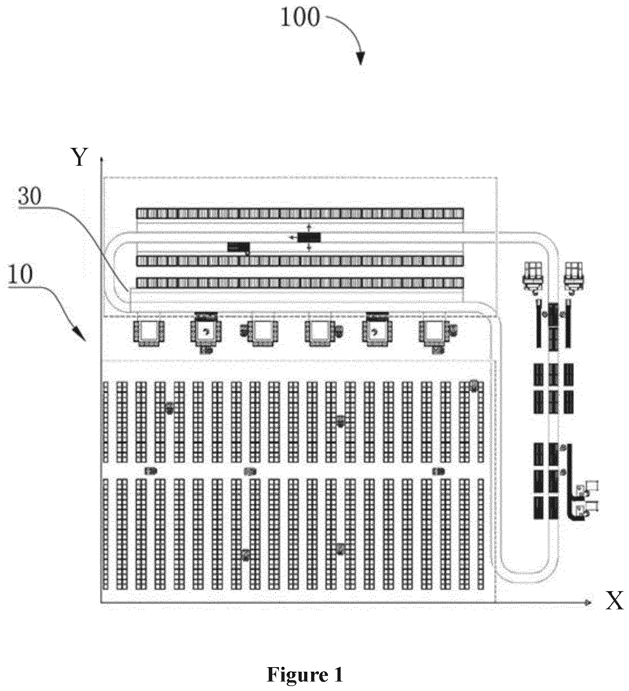

Reference is made to Figure 1, which is an order completion system 100 for processing an order according to an embodiment of the present disclosure. The order completion system 100 includes a warehouse, a charging vehicle for transporting an order, a movable apparatus for transporting goods, a movable device for transporting goods, and a control center. The warehouse includes: an order preparation area, a high-frequency picking area, a low-frequency picking area, an intermediate cooperation area, a replenishing area, and an order completion area. For convenience of presentation, the movable apparatus for transporting goods is named as a trolley, and the movable device for transporting goods is named as a movable device.

It should be noted that the order preparation area is configured for associating the order with the charging vehicle for transporting the order. That is, in the order preparation area, the received order is associated with the charging vehicle, so that the charging vehicle gets the task of transporting the goods in the order. After the charging vehicle passes through the high-frequency picking area and the intermediate cooperation area, the required goods are loaded into the containers on the charging vehicle, and then the charging vehicle is transported to the order completion area. In the order completion area, the container is packaged and the order is completed. It should be noted that, one charging vehicle may be associated with multiple orders at the same time, and the multiple orders may be same or different. Associating the order with the charging vehicle refers to associating the order with storage cells on the charging vehicle. The specific principle of the association is as follows. The charging vehicle generally has multiple layers, each layer has multiple storage cells, and a position of each storage cell on the charging vehicle corresponds to a known value, and the known value is stored in the control center. Each storage cell is provided with an identifier, to facilitate the control center to remind an operator of the position of the order on the charging vehicle. For example, the identifier may be a number, or an indicator light. A terminal control system sends order information to the order preparation area, an operator in the order preparation area prints the order. The order has a barcode or two-dimensional code. The name, specification and quantity of the goods in the order may be obtained based on the barcode or two-dimensional code, and the order may be associated with the storage cells of the charging vehicle based on the barcode or two-dimensional code. The order is first affixed to the container for loading the goods in the order, then the container is placed in the storage cell on the charging vehicle, and then the order is associated with the storage cell by an operating terminal such as a scanning device. After the charging vehicle is associated with the order, the charging vehicle is transported by a trolley, the trolley can be docked with the charging vehicle via a docking mechanism. It can be understood that one part of the docking mechanism is arranged on the trolley, and the other part of the docking mechanism is arranged on the charging vehicle, the two parts of the docking mechanism may be docked together or separated. After the charging vehicle is docked with the trolley, the trolley is associated with the order on the charging vehicle, and the control center controls an action of the trolley to move the charging vehicle.

High-frequency order goods are stored in the high-frequency picking area. Usually, the operator follows the charging vehicle to enter the high-frequency picking area, and places the goods directly into corresponding containers to complete picking in the high-frequency picking area.

Low-frequency order goods are stored in the low-frequency picking area. If the goods in the order are the same as the goods in the low-frequency picking area, the goods are picked by the movable device, and the goods are transported to the intermediate cooperation area by the movable device, and then the goods are inputted into the container on the charging vehicle corresponding to the order, for example by an operator. For convenience of presentation, the movable device for transporting goods is named as a movable device hereinafter. It should be understood that the concept of high-frequency picking area and low-frequency picking area is only used to divide the warehouse. The purpose is to show that there are two areas in the warehouse. In one area, the goods are directly loaded into the container on the charging vehicle. In the other area, the goods are picked by the movable device, then the goods are transported to and placed in the intermediate cooperation area by the movable device, and then the operator in the middle cooperation area places the goods into the container on the charging vehicle corresponding to the order according to reminders. Specifically, for example, multiple picking stations may be arranged in the intermediate cooperation area. The picking station includes a parking position for the charging vehicle to park and a shelf for receiving the goods. Multiple movable devices may place goods in the shelf or take goods out from the shelf at the same time. For example, the picking station further includes operating terminals such as a reminding device and a scanning device. The control system enables the reminding device to generate a reminder, when the goods corresponding to the order are transported to the picking station, and the charging vehicle corresponding to the order is transported to the picking station. The content of the reminder include the name, the quantity, and the picture of the goods. The operating terminal such as the scanning device is configured to scan the order after the order is completed, to give a feedback signal to the control center, so that the trolley is controlled to perform an action.

The replenishing area is configured for replenishing the low-frequency picking area with goods. It should be understood that after the goods in the low-frequency picking area are picked by the movable device, the quantity of goods in the low-frequency picking area are reduced, and if the quantity of any kind of goods in the low-frequency picking area is less than a threshold, the movable device goes to the replenishing area to pick the goods the quantity of which in the low-frequency picking area is less than the threshold, and then the low-frequency picking area is replenished with goods.

In the order completion area, the containers on the charging vehicle are unloaded and packaged after the charging vehicle arrives at the order completion area, to complete the order.

The control center is configured to send commands to the trolley for transporting the charging vehicle, the movable device and the intermediate cooperation area, so that the trolley, the movable device and the intermediate cooperation area cooperate to complete the packaging and transportation of the goods in order. The control center is configured to receive feedback signals from the trolley, the movable device, the intermediate cooperation area and the order completion area, to control the movable device, the trolley, the intermediate cooperation area, and the order completion area to perform operations.

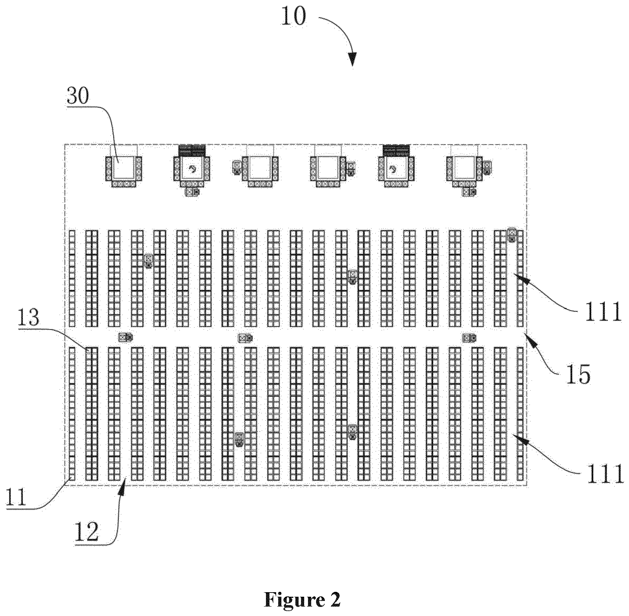

Reference is made to Figure 2, which shows a warehouse 10. The warehouse 10 is used in the order completion system 100 and is used to store goods. Multiple workstations 30 are arranged in the warehouse 10. The workstation 30 may be a picking station, an arranging station, or a replenishing station. The picking station is configured for an operator to compare goods with order information of the order. The arranging station is configured for an operator to arrange goods. The replenishing station is configured for an operator to replenish a storage area of goods. The specific embodiment will be described below by taking a picking station as an example.

An interaction frequency of the movable device in the low-frequency picking area is relatively low, and an interaction frequency of the movable device in the high-frequency picking area is relatively high. After the order information is generated in the order preparation area, the movable device picks a target goods in the low-frequency picking area, and the picked target goods is confirmed with the order information at the workstation 30 in the warehouse 10. After the picker working in the workstation 30 confirms that the target goods meets the order information, the target goods is transported to the order completion area by the charging vehicle to be packaged.

The goods stored in the warehouse 10 may be transported, by the movable device provided in the order completion system 100, to a predetermined target position, the predetermined target position may be the workstation 30 in the warehouse 10 for confirming the order information, or may be sites other than the workstation 30.

It should be understood that the warehouse 10 provided according to the present disclosure is not limited to being applied only to the order completion system 100 based on an intelligent logistics technology. In other embodiments, the warehouse 10 may also be applied to warehousing in a conventional logistics system. The warehouse 10 provided according to the present disclosure can be applied in any usage environment in which the goods can be stored in the warehouse 10.

The movable device for picking operates in the warehouse 10, the warehouse 10 is arranged in a three-dimensional coordinate system. The three-dimensional coordinate system has an X-axis and a Y-axis perpendicular to each other in a horizontal plane, and a Z-axis perpendicular to both the X-axis and the Y-axis. The warehouse includes multiple clusters of shelves 11 arranged in a direction parallel to the X-axis in the three-dimensional coordinate system. Each cluster of the shelves 11 extend in a direction parallel to the Y-axis in the three-dimensional coordinate system. An aisle 12 is formed between adjacent two clusters of the shelves 11 for the movable device to shuttle, and the aisle 12 extends in a direction parallel to the Y-axis. Each cluster of the shelves 11 includes two columns of shelves 11 facing away from each other. Each column of the shelves includes multiple storage cells 13 arranged in an array in a plane formed by a direction parallel to the Y-axis and a direction parallel to the Z-axis. Each of one part of the storage cells 13 is provided with a pallet 14 for carrying goods, and the other part of the storage cells 13 are vacant. The pallet 14 is provided with a positioning identifier 141 for determining position information of the pallet in the three-dimensional coordinate system.

It should be noted that, the coordinate, in the above three-dimensional coordinate system, of any position in the warehouse 10 is known, that is, after the components are arranged in the warehouse 10, the coordinate of the position of each component in the three-dimensional coordinate system is known, and the coordinates of the above components are stored at a terminal controller in the order completion system. In other words, the terminal controller knows that in the three-dimensional coordinate system, a specific component is arranged in the warehouse 10 at a specific coordinate. For example, a shelf 11 is placed at the position where the X-axis coordinate is 1 and the Y-axis coordinate is in a range of (2, 8), and a storage cell 13 of the shelf 11 is at the position where the X-axis coordinate is 1, the Y-axis coordinate is 2, and the Z-axis coordinate is 2.3. It can be understood that, each storage cell 13 has a length, a width and a height, and when determining the specific position of the storage cell 13, the X-axis coordinate of 1 refers to the coordinate of the midpoint of the length of the storage cell 13, and the Y-axis coordinate of 2 refers to the coordinate of the midpoint of the width of the storage cell 13, and the Z-axis coordinate of 2.3 refers to the coordinate of the midpoint of the height of the storage cell 13. It can be further understood that each shelf 11 has a length, a width and a height, and the X-axis coordinate refers to the coordinate of the midpoint of the width of the shelf 11, and the Y-axis coordinate (2, 8) refers to the coordinates of two ends of the shelf 11.

A position coordinate is set for each positioning identifier 141 and each storage cell 13 in the warehouse 10, the position coordinate is corresponding to the X-axis coordinate, the Y-axis coordinate and the Z-axis coordinate of the positioning identifier 141 or the storage cell 13.

The movable device (the movable device for transporting goods) has a fork tooth mechanism, and the fork tooth mechanism can move relative to the movable device. The fork tooth mechanism has a side fork function, and the side fork function means that the fork tooth mechanism can move in a horizontal direction perpendicular to the moving direction of the movable device. The initial position of the fork tooth mechanism in the horizontal plane of the movable device is determined, and the distance that the fork tooth mechanism moves, relative to the initial position, in the horizontal direction perpendicular to the moving direction of the movable device is a fixed value. In addition, the fork tooth mechanism also has a straight fork function. The position of the straight fork is rotated by 90° with respect to the position of the side fork, and the direction of the straight fork is the same as the moving direction of the movable device, and the distance that the fork tooth moves relative to the movable device is a fixed value for the straight fork relative to the initial position. The coordinate of any position of the movable device in the warehouse is known, and the specific principle is as follows. A landmark is placed on the ground of the warehouse 10, for example, the landmark may be a two-dimensional code. The X-axis coordinate and the Y-axis coordinate of arbitrary position of the warehouse 10 in the three-dimensional coordinate system are determined based on the landmark, and the Z-axis coordinate of the arbitrary position in the three-dimensional coordinate system is determined based on the height of the arbitrary position. More specifically, a tracking sensor is provided on the movable device for acquiring landmark information, thereby determining the horizontal coordinate of the movable device in the three-dimensional coordinate system. The movable device has a length, a width and a height, the center of the movable device may be taken to calibrate the coordinate of the movable device, that is, the X-axis coordinate and the Y-axis coordinate of the movable device may be determined by the tracking sensor, and the Z-axis coordinate of the movable device is determined based on the known center height of the movable device. The relative position of the fork tooth mechanism on the movable device is determined, so that the X-axis coordinate and Y-axis coordinate of the fork tooth mechanism in the three-dimensional coordinate system may be determined. The moving distance of the fork tooth mechanism, in the mode of straight fork or side fork, is a fixed value, then the coordinate change (specifically, the X-axis coordinate and the Y-axis coordinate) of the fork tooth mechanism may be determined for the fork tooth mechanism in the mode of straight fork or side fork, by associating the moving distance of the fork tooth in the mode of straight fork or side fork with the three-dimensional coordinate system. Further, the fork tooth mechanism can lift relative to the movable device. For example, the position where the fork tooth mechanism is at the lowest point is the initial position of the fork tooth mechanism in the vertical direction. The position coordinate of the fork tooth mechanism in the vertical direction is the Z-axis coordinate of the fork tooth mechanism, which can also be acquired by measurement. The distance of moving upwards and moving downwards of the fork tooth mechanism reflects the change of the Z-axis coordinate of the fork tooth mechanism. The fork tooth mechanism is moved upwards to a designated height, which matches the height of the to-be-taken goods to allow the fork tooth mechanism to take the goods out, and then the fork tooth mechanism takes the to-be-taken goods in the mode of straight fork or side fork.

For the movable apparatus for transporting goods, the X-axis coordinate and Y-axis coordinate of the movable apparatus in a three-dimensional coordinate system may be acquired by a tracking sensor installed on the movable apparatus. The principle is similar to the above process, and is not described here.

For the definition of the position coordinates of other components in the warehouse 10, reference is also made to the above manner, and details are not described herein again.

It should be further noted that the pallet 14 is a medium for the movable device to grip goods, and the movable device needs to transport the goods to a designated position after the goods are gripped. Therefore, after the pallet 14 is gripped and placed to the designated position, the coordinate of the pallet 14 is re-determined, and the process of the re-determination is detailed below.

Each cluster of shelves 11 includes two columns of shelves 11 facing away from each other, which are abutted each other at rear sides. The abutting each other at rear sides of the two columns of shelves 11, allows the openings of each column of shelves 11 to face outward, thereby facilitating the movable device to pick the goods placed on the shelves 11. It can be understood that for the outermost two clusters of shelves 11 facing the wall, only one column of shelves 11 needs to be provided for each cluster of shelves.

In the present embodiment, there are twenty-one clusters of shelves 11. It can be understood that in another embodiment, the number of shelf 11 may be different from twenty-one clusters.

Adjacent two clusters of shelves 11 are spaced apart, and the formed aisle 12 is capable of allowing the movable device to pass. It can be understood that, multiple clusters of shelves 11 are arranged parallel with each other, therefore the multiple aisles 12 are parallel with each other. The movable device moves through the aisle 12 and reaches a designated storage cell 13, and the movable device takes the goods on the designated storage cell 13 under the guidance of the signal from the control center.

Under the guidance of the signal from the control center in the order completion system, the movable device passes through the aisle 12, shuttles to the storage cell 13 storing the goods to be transported, and transports the goods stored in the storage cell 13 to the workstation 30, thereby realizing the process of picking goods in the order completion system.

Multiple clusters of the shelves 11 arranged in parallel form one storage area 111. The warehouse may include multiple storage areas 111. A main road 15, extending in a direction parallel to the X-axis, is formed between adjacent two storage areas 111. The aisle 12 is a "single lane", a width of the aisle 12 is capable of allowing only one movable device to move along a straight line in a direction parallel to the Y-axis. Moving along a straight line means that the movable device cannot make a turn the aisle 12. The main road 15 is a "two lane", and a width of the main road 15 is capable of allowing multiple movable devices to move oppositely in a direction parallel to the X-axis. Moving oppositely means that multiple movable devices can move in opposite directions in the main road 15.

The movable device can quickly reach the aisle 12 where the to-be-picked goods are located through the laterally arranged main road 15, thereby avoiding a detour behavior of the movable device surrounding circumferentially the warehouse 10 on the outermost side of warehouse 10 to reach the aisle 12 where the to-be-picked goods are located.

Reference is made to Figure 3, which is a schematic structural diagram of storage cells 13 and pallets 14 in the warehouse 10 shown in Figure 2. The storage cell 13 is used for storing goods, and the shelf 11 has multiple storage cells 13 arranged in a plane formed by a direction parallel to the X-axis and a direction parallel to a Z-axis, and one piece of goods is placed in each storage cell 13.

The goods may be carried by the pallet 14, the pallet 14 may have multiple supporting legs. Multiple supporting legs support a load-bearing panel, which is in direct contact with the goods, of the pallet 14, so the goods are not in direct contact with the laminate of the storage cell 13. Therefore, the fork tooth for picking in the movable device may extend into a space formed by the multiple supporting legs, facilitating the movable device to take out the goods.

Apparently, the load-bearing panel of the pallet 14 may also carry the goods directly, in this case, the fork tooth of the movable device extend into the gap between the pallet 14 and the storage cell 13 to carry the goods.

Not all the storage cells 13 in the shelf 11 are provided with the pallet 14, a part of the storage cells 13 are vacant, and the vacant storage cells 13 are used to place the goods replenished by the replenishing system in the order completion system.

The length, width and height of the storage cell 13 need to match the size of the goods, that is, the length of the storage cell 13 needs to be greater than the length of the goods, the width of the storage cell 13 needs to be greater than the width of the goods, and the height of the storage cell 13 needs to be greater than the height of the goods.

The pallet 14 is provided with a positioning identifier 141 for positioning by the movable device, and the positioning identifier 141 provided on the pallet 14 can be used to position the movable device. When the movable device moves to the position of the pallet 14 of a designated storage cell 13, the movable device acquires an error between the current position of the movable device and a standard position based on the positioning identifier 141, and the movable device compensates the error by means of posture adjustment and then carries the designated goods. The error between the current position of the movable device and the standard position, refers to a deviation between the fork tooth of the movable device and the standard position, including cases that the fork tooth is higher than the standard position and that the fork tooth is lower than the standard position.

In the present embodiment, the positioning identifier 141 is a two-dimensional code, and the movable device scans the two-dimensional code on the pallet 14 and takes the position where the two-dimensional code is located as the standard position, and the movable device acquires an error between the current position of the movable device and the standard position. Then the movable device adjusts a posture of the movable device based on the error between the current position of the movable device and the standard position, thereby eliminating the error.

It can be understood that in other embodiments, the positioning identifier 141 may also be a sensor, a groove, a protrusion, and other patterns.

The pallet 14 is a medium for the movable device to grip goods, and the movable device needs to transport the goods to a designated position after the goods are gripped. Therefore, after the pallet 14 is gripped and placed to the designated position, the coordinate of the pallet 14 is re-determined. On determining the coordinate of the pallet 14, the designated position is replenished with goods in the order completion system, and the coordinate of the designated position in the three-dimensional coordinate system is known. When the movable device places the goods in the pallet 14, the movable device obtains a deviation between of the current position of the movable device and the positioning identifier 141 on the pallet 14. Then, the movable device associates the coordinate of the designated position with the coordinate of the pallet 14 and sends the associated coordinates to the control center, that is, the coordinate of the designated position is the coordinate of the current pallet 14, thereby the coordinate of the pallet 14 is re-determined.

The movable device can extend the fork tooth to both sides and pick goods from both sides, therefore the movable device does not need to make a turn or rotate at a fixed position. The width of the aisle 12 only needs to be not less than 1.1 times the width of the movable device. The aisle 12 is 1.1 times to 1.3 times as wide as the movable device. The width of the movable device needs to be not less than 1.5 times the width of the goods, and the length of the movable device needs to be not less than 2.5 times the width of the goods.

Preferably, the aisle 12 is 1.1 times as wide as the movable device.

For example, if the width of the goods is 600mm, the width of the movable device may be 900mm, the length of the movable device may be 1500mm, and the width of the aisle 12 may be 1080mm.

The movable device does not need to make a turn or rotate at a fixed position, the width of the aisle 12 formed between multiple clusters of shelves 11 is greatly reduced, thereby increasing the density of the multiple clusters of shelves 11, and improving the utilization of the warehouse and the operation efficiency of the entire order completion system.

The warehouse includes at least one picking station 30, and each picking station 30 corresponds to at least one cluster of shelves 11, that is, each picking station 30 corresponds to some pallets 14. Preferably, the picking station 30 corresponds to adjacent one or more clusters of shelves 11, and each picking station 30 corresponds to 200 to 3000 pallets. In a case that the number of picking stations 30 is more than one, the picking stations 30 are arranged in a direction parallel to the X-axis in the three-dimensional coordinate system.

In the present embodiment, the number of workstations 30 is six, and each workstation 30 corresponds to multiple clusters of shelves 11.

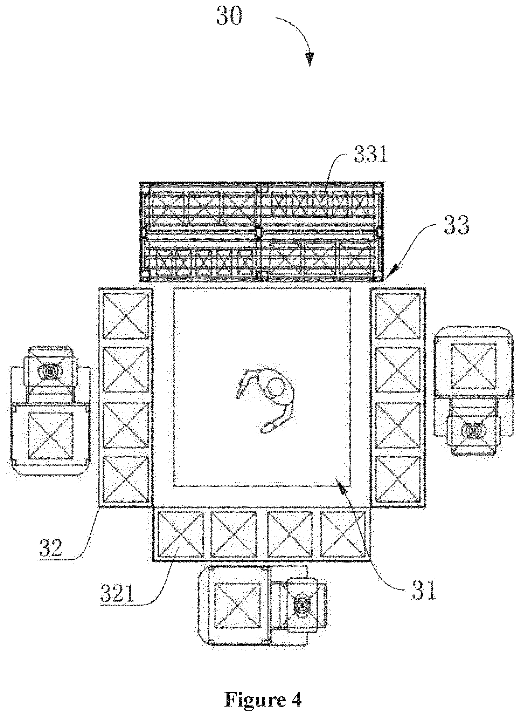

Reference is made to Figure 4, which is a schematic structural diagram of a workstation 30 according to an embodiment of the present disclosure. The workstation 30 is used in the order completion system, and is configured for the picker to confirm that the goods in the container, which are taken from the warehouse of the order completion system, meet the order information, and the container meeting the order information is transported to the order completion area to be packaged.

It should be understood that the workstation 30 provided according to the present disclosure is not limited to being applied only to the order completion system described above. In other embodiments, the workstation 30 can also be applied to the order information confirmation process of other order completion systems or a conventional logistics system.

The workstation 30 includes a picking work area 31, at least one shelf 32, and at least one charging vehicle parking position 33. Both the shelf 32 and the charging vehicle parking position 33 are arranged at a side of the picking work area 31. The shelf 21 is arranged on at least two sides of the picking work area 31, and multiple temporary storage cells 321 are arranged in the shelf 32.

Multiple movable devices are allowed to place the picked goods into the temporary storage cells 321 in the shelf 32. The picking work area 31 is configured for the picker to compare the goods with the order information. The temporary storage cell 321 in the shelf 32 is configured to temporarily store the goods which is picked by the movable device and to be compared with the order information by the picker. The charging vehicle parking position 33 is configured for the order completion system to transport the goods confirmed by the picker to the order completion area. In the order completion area, the goods are packaged and delivered.

In the present embodiment, the picking work area 31 is substantially square, and the shelf 32 and the charging vehicle parking position 33 are both located at a side of the square picking work area 31. The picking work area 31 is set to a square shape, which can be matched with the movable device arranged in rows and columns in the order completion system, to avoid a case that the movable device need to change posture to park next to the shelf 32.

It can be understood that in other embodiments, the picking work area 31 may also be set to other shapes than the square, as long as the shape of the picking work area 31 does not interfere with the normal operation of the shelf 32 and the charging vehicle parking position 33.

The shelf 32 includes multiple temporary storage cells 321 arranged along the Z-axis of the order completion system. The number of shelf 32 may be one or more. The shelf 32 may be arranged along the X-axis of the order completion system or along the Y-axis of the order completion system.

In the present embodiment, the workstation includes three shelves 32, each of the shelves 32 is arranged along a straight line. The temporary storage cells 321 in two shelves 32 are arranged in an array in a plane formed by a direction parallel to the Y-axis and a direction parallel to the Z-axis of the order completion system. The temporary storage cells 321 in remaining one shelf 32 are arranged in an array in a plane formed by a direction parallel to the X-axis and a direction parallel to the Z-axis of the order completion system. The three shelves 32 are respectively located at three sides of the picking work area 31, so the picking work area 31 has one charging vehicle parking position 33. Each of the three shelves 32 may interact with one movable device, and the workstation 30 may interact with three movable devices, thereby reducing the time for the picker to wait for the movable device to carry the picked goods to the temporary storage cells 321, and even eliminating the waiting time of the picker, thereby improving the work efficiency of the workstation.

It should be understood that in other embodiments, the workstation includes two shelves 32, each of the shelves 32 is arranged along a straight line. Two shelves 32 arranged along a straight line allow two movable devices to operate independently, thereby improving the work efficiency of the workstation 30.

Apparently, the workstation may include one shelf 32. The shelf 32 may have a "U" shape or a "C" shape, and the shelf 32 is arranged at three sides of the picking work area 31, so that the shelf 32 can simultaneously interact with three movable devices. The shelf 32 may have an "L" shape, and the shelf 32 is arranged at adjacent two sides of the picking work area 31, in this case the number of the charging vehicle parking position 33 is two, and the shelf 32 can simultaneously interact with two movable devices. In addition, the shelf 32 may also be arranged in a straight line, and the length of the shelf 32 can be appropriately extended, so that multiple movable devices can operate independently at the same time.

With above arrangement of the shelf 32, the movable device can park at or leave from, at multiple angles, the side of the picking work area 31 where the shelf 32 is arranged, and the gesture of the movable device when the movable device interacts with the workstation 30 has more activity levels. That is, the movable device can go in and go out from the workstation 30 at multiple angles, and the movable device can interact with the workstation 30 at multiple angles and perform the handling work.

Preferably, the total height of the shelf 32 matches the height of the picker to facilitate the picker to perform the operation. Each of the shelves 32 is provided with multiple temporary storage cells 321. One part of the temporary storage cells 321 temporarily stores the goods, to be confirmed by the picker, carried by the movable device, and the other part of temporary storage cells 321 are vacant, to store the goods to be carried by the movable device and to be confirmed with the order information.

If the shelf 32 has three or more layers, the first and second layers, the heights of which are close to the height of the picker and convenient for the picker to perform operations, may serve as a direct working area of the picker, and other layers, the heights of which are relatively farther from the height of the picker, may serve as a secondary buffer area. In a case that there is a vacant temporary storage cell 321 in the direct working area, the movable device can carry the to-be-confirmed goods that have been stored in the temporary storage cell 321 in the secondary buffer area, to the direct working area of the shelf 32. The secondary buffer area, as a buffer for the to-be-confirmed goods to be carried to the direct working area, may continuously provide the to-be-confirmed goods to the direct working area at any time, thereby reducing the time for the picker to find the to-be-confirmed goods and improving the picking efficiency.

In a case that the workstation 30 is a picking station, the workstation 30 may include a picking reminding device (not shown in the Figure) configured to remind the picker of the order information to be confirmed by the picker. The picker acquires the order information reminded by the picking reminding device, and confirms whether the goods to be checked on the shelf 32 meet the requirements of the order information by comparing the goods with the order information. If the order information matches the goods, the picker may carry the confirmed goods to the charging vehicle parking position 33 for the order completion system to carry the confirmed goods to the order completion area. In the order completion area, the goods are packaged and delivered.

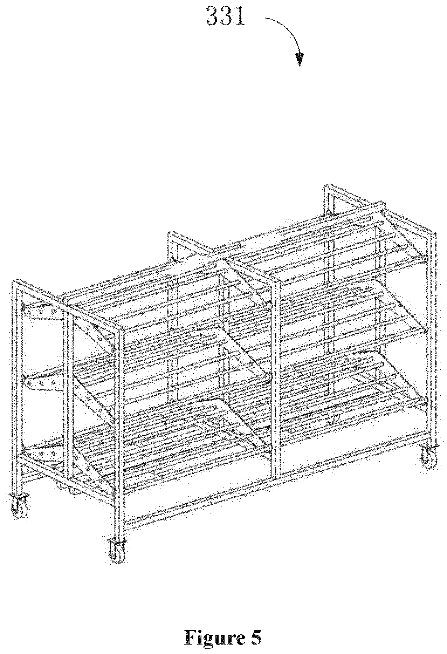

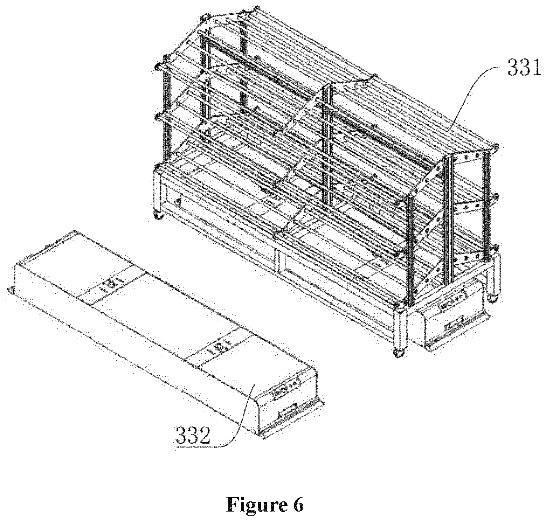

Reference is made to Figure 5 and Figure 6, Figure 5 is a schematic structural diagram of a charging vehicle 331 according to an embodiment of the present disclosure, and Figure 6 is a schematic structural diagram of the charging vehicle 331 shown in Figure 5 which is docked with a movable apparatus 332 for driving the charging vehicle 331 to move. The charging vehicle 331, for carrying the goods confirmed by the picker, parks at the charging vehicle parking position 33. The charging vehicle 331 is driven by the movable apparatus 332 to move. The charging vehicle 331 transports the goods confirmed by the picker to the order completion area of the order completion system, then the goods are packaged in the order completion area.

The charging vehicle 331 may have one layer or multiple layers. In the present embodiment, the charging vehicle 331 preferably has three layers.

The picking reminding device may include a display (not shown in the Figure) for displaying the order information to be confirmed by the picker. The order information includes, but is not limited to, the names of the goods, the quantity of the goods, and the pictures of the goods. The names of the goods include the names of all the goods in the current order, the quantity of the goods refers to the number of each kind of goods, and the pictures of the goods include the pictures of each kind of goods.

The picker confirms whether the goods in the temporary storage cells 321 meet the requirements of the order one by one according to the order information displayed on the display. If the goods meet the requirements of the order, the movable apparatus 332, under the guidance of the information of the control center of the order completion system, drives the charging vehicle 331 carrying the goods to move to the order completion area of the order completion system, and then the goods are packaged in the order completion area.

The picking reminding device may also include an indicator light and a button configured to control a display state of the indicator light. The indicator light is configured to indicate a detection state of the goods, and different display states of the indicator light indicate different detection states of the goods performed by the picker. The button is configured for the picker to switch the display state of the indicator light after the goods are compared with the order, thereby changing an indicator of the detection state of the goods represented by the indicator light.

For example, the indicator light may be switched between flickering and steady lighting by the button. In a case that the goods need to be confirmed by the picker by comparing the goods with the order information, the indicator light is flickering, and after the picker completes the confirmation of the goods, the picker operates button to switch the display state of the indicator light to steady lighting, thereby indicating that the goods at the temporary storage cell 321 have been confirmed.

Apparently, the display state of the indicator light is not limited to the above mentioned flickering and steady lighting, and may also include steady darkness the settings of different colors. For example, different colors of the indicator light can represent various states such as idle, to be picked, to be replenished, replenishing, and error. A first state may be distinguished from a second state by color, brightness, on-state or off-state, and flickering frequency or the like of the indicator light. A state of order confirmation completion and a state of order confirmation waiting may be displayed by any one of the above display methods, as long as a first state of the indicator light indicating the state of order confirmation completion is displayed differently from a second state of the indicator light indicating the state of order confirmation waiting.

The above button also is configured to cause the movable device to carry the goods confirmed by the picker to the charging vehicle 331. After the picker presses the button and the goods in the current temporary storage cell 321 meet the requirements of the order information, the movable device, under the guidance of the control center, may carry the goods in the current temporary storage cell 321, which meet the requirements of the order information, to the charging vehicle 331.

The workstation 30 may also be provided with an operation terminal (not shown in the Figure), the operation terminal may be a code scanning device. The code scanning device may be used by the picker to scan the barcode on the goods to assist the picker to confirm whether the kind of the goods is correct. After the goods are confirmed, the picker may also scan the order on container receiving the goods by the code scanning device, thereby realizing the recording of the order information.

It can be understood that in other embodiments, the operation terminal may also be other devices than the code scanning device.

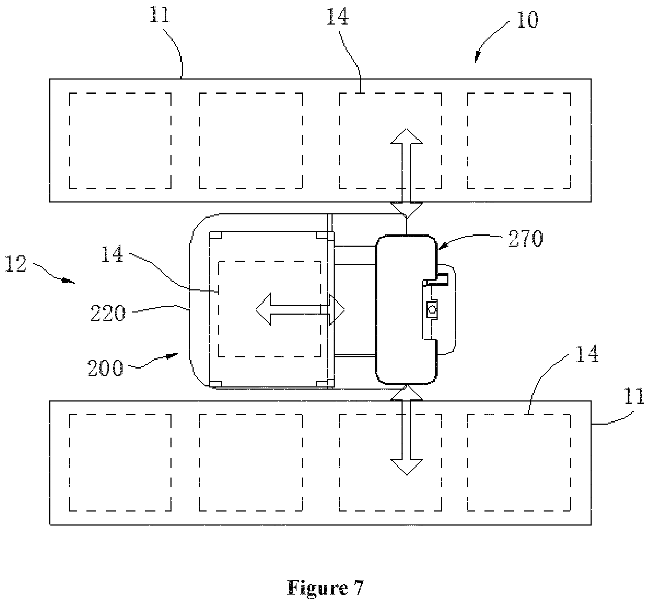

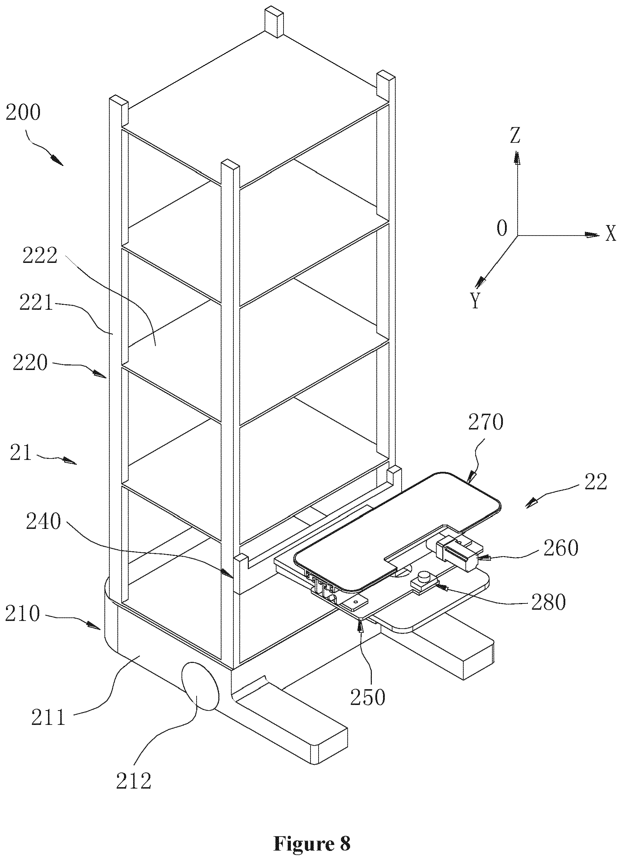

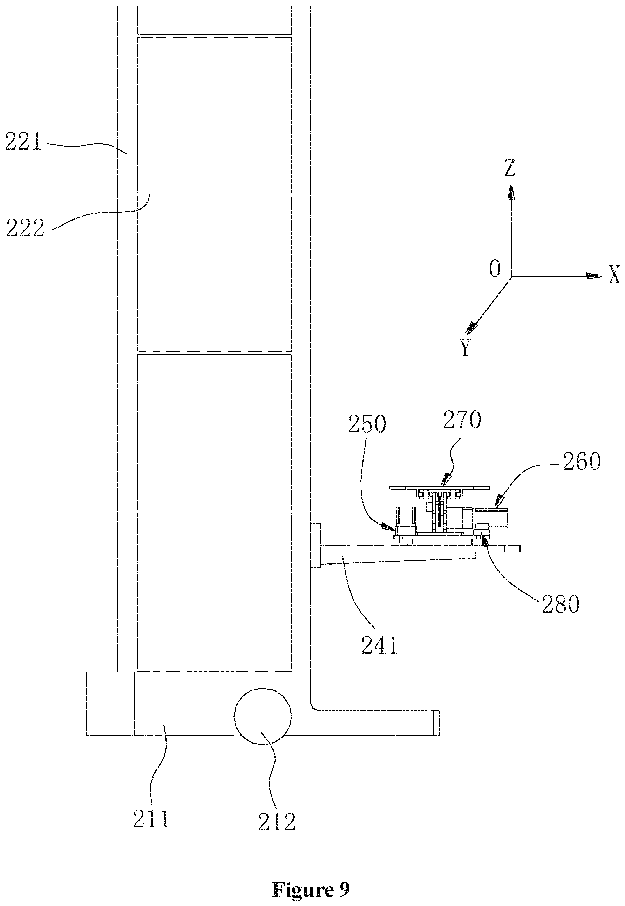

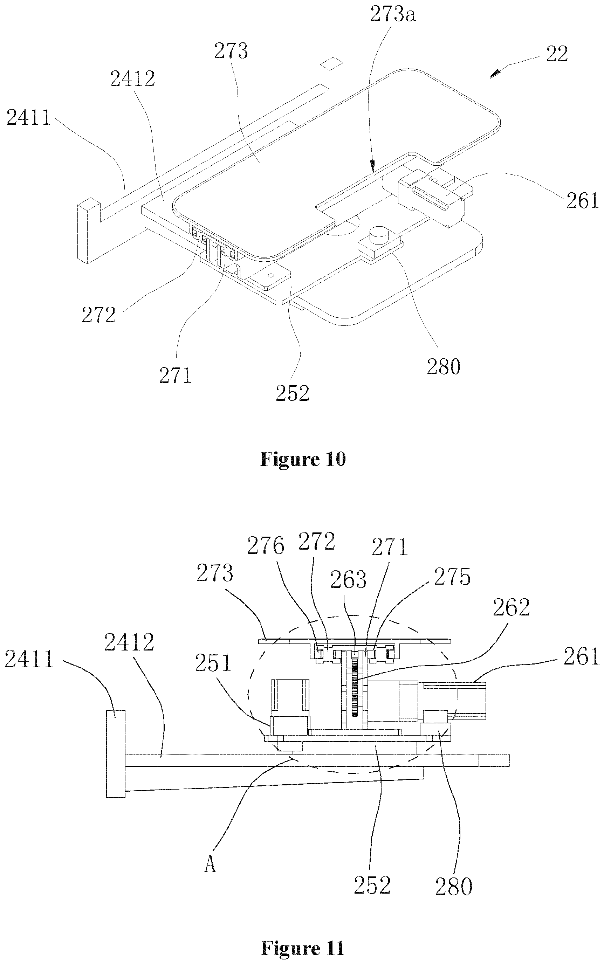

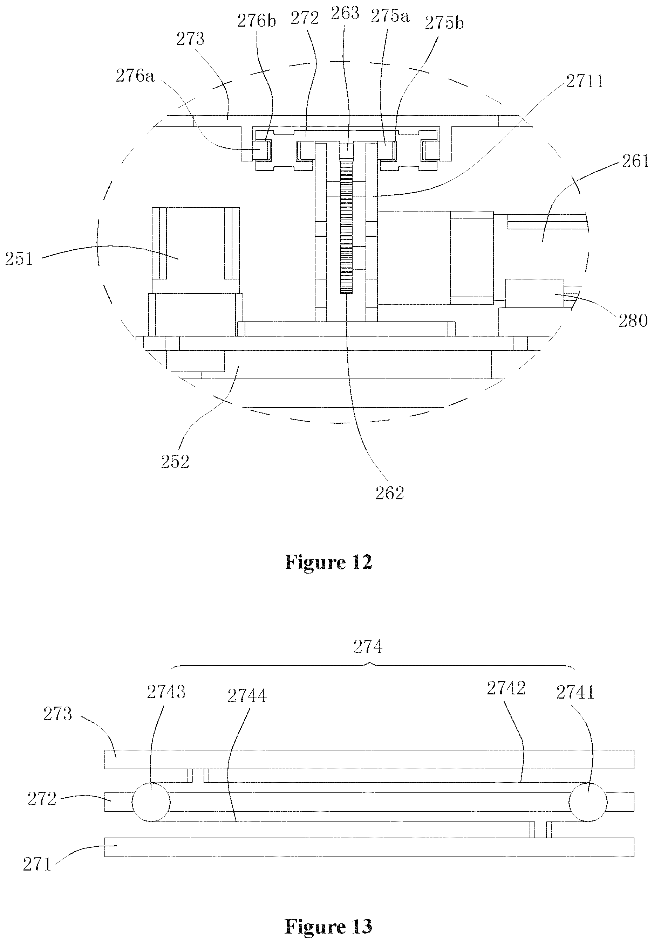

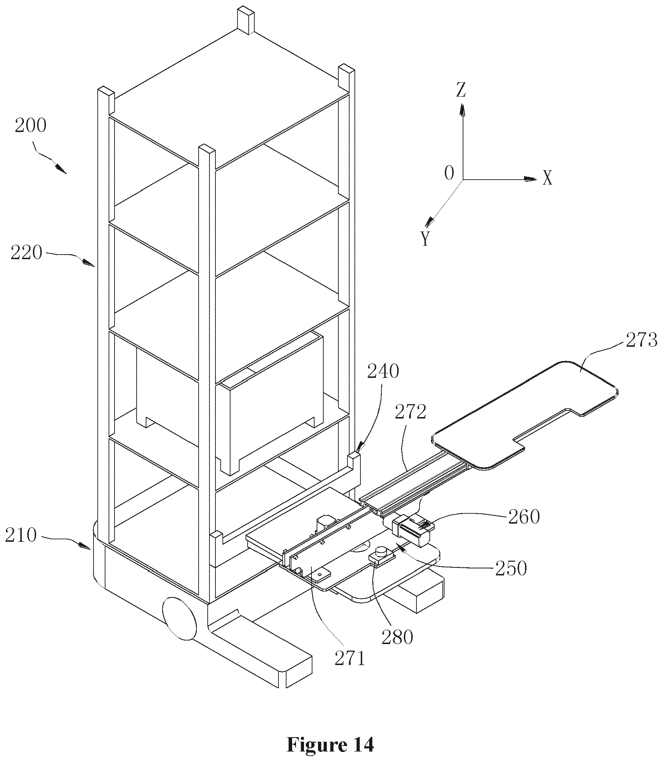

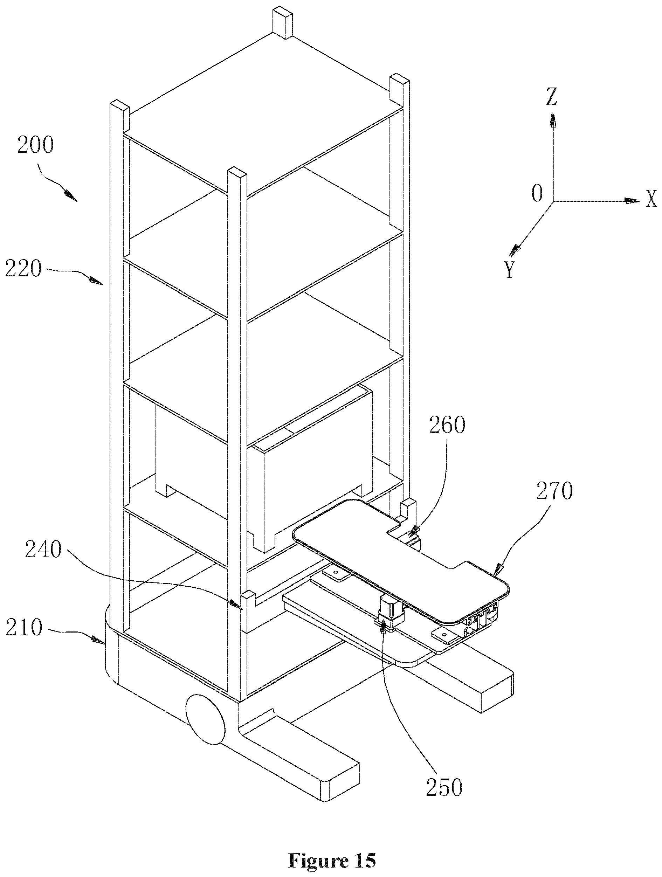

Reference is made to Figure 7 to Figure 15, a movable device 200 is provided according to the disclosure. The movable device 200 is applied in a warehouse 10 and is used for gripping and transporting a to-be-carried object. The warehouse 10 includes multiple picking stations (not shown in the Figure) and multiple columns of shelves 11. The warehouse 10 is provided with a control center (not shown in the Figure). A three-dimensional coordinate system including an X axis, a Y axis and a Z axis is constructed in the warehouse. The warehouse is provided with positioning identifiers. Multiple clusters of the shelves 11 are spaced apart from each other in the warehouse 10, and an aisle 12 is formed between adjacent two clusters of the shelves 11 for the movable device 200 to pass through. There are to-be-carried objects 14 in the picking station and the shelf 11. The control center is configured to send commands to control the movable device 200 to move in the warehouse 10, so that the movable device interacts with the picking station, the shelf 11 or the movable device 200, to realize the automatic gripping and automatic carrying of the to-be-carried objects 14 in the picking station and the shelf 11. In this embodiment, the to-be-carried object 14 may be a pallet or a container or goods. Apparently, there may be goods or containers on the pallet, or the pallet may be vacant.

The movable device 200 includes a main body 21, a gripping mechanism 22 connected with the main body 21, and a processing unit (not shown in the Figure). The main body 21 is capable of moving, the gripping mechanism 22 is configured to grip and carry the to-be-carried object 14, and the processing unit is configured to interact with the control center, and receive a command sent by the control center, to control the main body 21 to move and control the gripping mechanism 22 to grip and carry the to-be-carried object 14. Apparently, in other embodiments, the processing unit operates independently and the command is independently sent by the processing unit, to control the main body 21 to move and control the gripping mechanism 22 to grip and carry the to-be-carried object 14.

The main body 21 includes a driving unit 210, a storage unit 220, and a positioning unit (not shown in the Figure). The driving unit 210 is configured to implement the moving function of the movable device 200, the storage unit 220 for storing the to-be-carried object 14 is arranged on the driving unit 210, and the positioning unit for acquiring the current position information of the movable device 200 based on the positioning identifier is arranged on the driving unit 210. The gripping mechanism 22 for gripping and carrying the to-be-carried object 14 is arranged on the storage unit 220. It should be noted that the to-be-carried object 14, gripped and carried by the gripping mechanism 22, may be gripped from the picking station and the shelf by the gripping mechanism 22, or may be gripped from the storage unit 220 by the gripping mechanism 22.

The driving unit 210 includes a chassis frame 211, driving wheels 212, and a driving motor (not shown in the Figure). The driving motor is provided in the chassis frame 211, and the driving wheels 212 are mounted on the chassis frame 211 and are connected to the driving motor. The driving motor drives the driving wheels 212 to move, to achieve forward, backward, turn, and rotation at a fixed position of the movable device.

Specifically, the driving wheels 212 include at least two wheels, and the two driving wheels 212 are symmetrically mounted on both sides of the chassis frame 11. The number of the driving motors may be matched to the number of the drive wheels 212, and each of the drive wheels 212 may be driven by the matched driving motor to move, that is, each of the drive wheels 212 is driven by a separate driving motor to make the movement of the movable device 200 more flexible.

The driving motor is a servo motor or other type of motor. The control center or the movable device 200 sends a command, the processing unit in the movable device 200 receives the command and transmits the command to the driving unit 210, then the driving motor receives the command and drives the driving wheels 212 to cause the movable device 200 to move.

The storage unit 220 includes stanchions 221 and a partition plate 222. The number of the stanchions 221 is more than one, and the multiple stanchions 221 are vertically arranged on the chassis frame 211. Preferably, the multiple stanchions 221 are vertically, that is, in the Z-axis direction, arranged on the chassis frame 11 in an array. For example, if the number of the stanchions 221 is three, the three stanchions 221 may be arranged on the chassis frame 11 in a triangular arrangement. For another example, if the number of the stanchions 221 is four, the four stanchions 221 may be arranged on the chassis frame 11 in a quadrangular arrangement. The partition plate 222 is connected to the stanchions 221, and the partition plate 222 is configured to partition the space of the storage unit 220 to form a moving shelf 223 for storing the to-be-carried object 14. Preferably, the partition plate 222 may be full or hollowed or partitioned.

The positioning unit is arranged at the bottom of the chassis frame 211, and the positioning unit is a visual sensor or a radio frequency sensor. When the movable device 200 moves to a designated position, the positioning unit acquires the position information of the positioning identifier based the positioning identifier, that is, acquires the X coordinate and the Y coordinate of the designated position. The position information is fed back to the processing unit of the movable device 200, and then the movable device 200 feeds back the position information to the control center to determine the arrival of the movable device 200 at the designated position.

The gripping mechanism 22 is capable of moving relative to the main body 21. The gripping mechanism 22 includes a lifting unit 240, a rotating unit 250, a telescopic driving unit 260, a fork tooth unit 270, and an image acquiring unit 280. The lifting unit 240 is mounted on the storage unit 220. The rotating unit 250 is mounted on the lifting unit 240 and moves upwards and downwards along the vertical direction of the main body under the control of the lifting unit 24. The telescopic driving unit 260 and the fork tooth unit 270 are disposed on the rotating unit 250 and perform a rotary motion under the control of the rotating unit 250. The telescopic driving unit 260 is connected to the fork tooth unit 270 to drive the fork tooth unit 270 to move. The fork tooth unit 270 is configured for gripping the to-be-carried object 14, so that the to-be-carried objects 14 are taken from the picking station or the shelf 11 to the storage unit 220, or the to-be-carried objects 14 are taken from the storage unit 220 to the picking station or the shelf 11. The image acquiring unit 280 is configured to acquire the posture of the to-be-carried object 14 on the fork tooth unit 270.

The lifting unit 240 includes a third driving member (not shown in the Figure), a mounting plate 241, and a guide rail (not shown in the Figure). The guide rail is arranged on the stanchions 221 along the longitudinal direction of the stanchions 221. The mounting plate 241 is mounted on the guide rail. The rotating unit 250 is mounted on the mounting plate 241. The third driving member is directly or indirectly connected to the mounting plate 241 to drive the mounting plate 241 to move along the guide rail, thereby realizing the moving upwards or downwards of the rotating unit 250, that is, the telescopic driving unit 260, the fork tooth unit 270, and the image acquiring unit 280 integrally moves upwards or downwards.

Furthermore, the third driving member is provided with an encoder (not shown in the Figure) associated with the third driving member, and the encoder is configured to calculate the number of revolutions of the third driving member, and the calculated number of revolutions is fed back to the processing unit. The processing unit controls the start and stop of the third driving member based on the revolutions, thereby controlling the distance for which the mounting plate 241 moves upwards or downwards along the guide rail, to control the telescopic driving unit 260, the fork tooth unit 270, and the image acquiring unit 280 to integrally moves upwards or downwards to a designated position, and to control the fork tooth unit 270 to grip and carry the to-be-carried object.

Specifically, the initial height of the fork tooth unit 270 in the three-dimensional coordinate system is known, and the three-dimensional coordinate of the to-be-carried object is known. After the movable device reaches a designated position in the warehouse, the control center sends a command of the required height for moving upwards or downwards to the processing unit of the movable device 200. After receiving the command, the processing unit calculates, by the encoder, the number of revolutions of the third driving member, to control the mounting plate 241 to move upwards or downwards along the guide rail for a designated height, so that the fork tooth unit 270 moves upwards or downwards to a designated position to grip and carry the to-be-carried object.

Apparently, in other embodiments, the lifting unit 240 is not limited to the above described structure, and may have other structures. For example, the lifting unit 240 is a pulley mechanism, or a chain mechanism.

Furthermore, the mounting plate 241 includes a slider 2411 mounted on the guide rail, and a positioning plate 2412 arranged on the slider 2411. The rotating unit 250 is mounted on the positioning plate 2412.

The rotating unit 250 includes a second driving member 251 and a turntable 252. The second driving member 251 is mounted on the mounting plate 241, and the turntable 252 is rotatably mounted on the mounting plate 241 and is connected to the second driving member 251. The second driving member 251 drives the turntable 252 to rotate for an angle, to grip the to-be-carried object 14 on the shelf 11 placed on both sides of the aisle 12 and to put the to-be-carried object 14 in the storage unit 220, or to grip the to-be-carried object 14 on the moving shelf 225 and to put the to-be-carried object 14 on the shelf 11 placed on both sides of the aisle 12. The telescopic driving unit 260, the fork tooth unit 270, and the image acquiring unit 280 are all mounted on the turntable 252 and are rotated with the rotation of the turntable 252. Thus, the telescopic driving unit 260, the fork tooth unit 270, and the image acquiring unit 280 are rotated with the rotation of the turntable 252.

Furthermore, the angle for which the turntable 252 is rotated is determined by the movable device 200 or the control center. The movable device 200 or the control center sends a rotation command, and the second driving member 251 receives the rotation command and drives the turntable 252 to rotate to a designated angle. Preferably, the second driving member 251 may be a servo motor or other type of motor.

Preferably, the second driving member 251 is provided with an encoder (not shown in the Figure) associated with the second driving member 251, and the encoder is configured to calculate the number of revolutions of the second driving member 251, and the calculated number of revolutions is fed back to the processing unit. The processing unit controls the start and stop of the second driving member 251 based on the revolutions, thereby controlling the rotation angle of the turntable 252, so that the telescopic driving unit 260, the fork tooth unit 270, and the image acquiring unit 280 rotate for a designated angle, and the fork tooth unit 270 faces to the to-be-carried object.

The telescopic driving unit 260 includes a first driving member 261, a gear 262, and a rack 263. The first driving member 261 is provided with an output shaft (not shown in the Figure). The first driving member 261 is mounted on the fork tooth unit 270. The gear 262 is mounted on the output shaft. The rack 263 is connected to the fork tooth unit 270 and the rack 263 is engaged with the gear 262. The first driving member 261 drives the gear 262 to rotate, so that the rack 263 moves on the plane where the rack 263 is perpendicular to the stanchions 221, that is thee XOY plane, thereby driving the fork tooth unit 270 to move.

The first driving member 261 may be a servo motor or other type of motor. The movement stroke of the telescopic driving unit 260 is determined by the movable device 200 or the control center, that is, the movement stroke of the rack 263 is determined by the movable device 200 or the control center. The movable device 200 or the control center sends a motion command to control the rotation of the first driving member 261 to drive the rack 263 to move.

Preferably, the first driving member 261 is provided with an encoder (not shown in the Figure) associated with the first driving member 261, and the encoder is configured to calculate the number of revolutions of the first driving member 261, and the calculated number of revolutions is fed back to the processing unit. The processing unit controls the start and stop of the first driving member 261 based on the revolutions, thereby controlling the number of revolutions of the gear 262, to control the rack 263 to move to a designated position, so that the fork tooth unit 270 moves to a designated position to grip and carry the to-be-carried object.

Apparently, in other embodiments, the telescopic driving unit 260 may also be other telescopic driving units, such as a motor.

The fork tooth unit 270 is a folding fork tooth unit, which includes a holder 271, a first fork tooth 272, and a second fork tooth 273. The holder 271 is fixed to the turntable 252 and rotates with the rotation of the turntable 252. The first fork tooth 272 are mounted on the holder 271 and fixedly connected to the rack 263, and are movable relative to the holder 271. Preferably, the rack 263 drives the first fork tooth 272 to move in the XOY plane. The second fork tooth 273 is configured to grip the to-be-carried object 14, and the second fork tooth 273 are connected to the first fork tooth 272, and the second fork tooth 273 can move relative to the first fork tooth 272 in the XOY plane when the first fork tooth 272 moves relative to the holder 271.

Specifically, the holder 271 may be composed of two holder plates 2711 which are substantially "rectangular" and arranged parallel with each other. The two holder plates 2711 are fixed on the turntable 252, and the heights of the two holder plates 2711 are the same. A mounting space is formed between the two holder plates 2711, and the gear 262 and the rack 263 are located in the mounting space. The first fork tooth 272 is generally "rectangular", the second fork tooth 273 is substantially "rectangular", and the second fork tooth 273 is arranged parallel with the first fork tooth 272. Further, there is an avoidance groove 273a on the second fork tooth 273 to reserve a position for the image acquiring unit 280, so that the image acquiring unit 280 can acquire the pose information of the to-be-carried object on the second fork tooth 273.

Furthermore, the first fork tooth 272, the second fork tooth 273 and the holder 271 are connected via a connecting member 274, and the connecting member 274 is configured to drive the second fork tooth 273 to move relative to the first fork tooth 271 when the first fork tooth 272 moves relative to the holder 271.

Preferably, the connecting member 274 is a stroke amplifying component. The stroke amplifying component is capable of causing the movement stroke of the second fork tooth 273 to be greater than the movement stroke of the first fork tooth 272 relative to the holder 11 when the telescopic driving unit 260 drives the first fork tooth 272 to move. In the present embodiment, the stroke amplifying component 274 causes the movement stroke of the first fork tooth 272 relative to the holder 11 to be in a proportional relationship with the movement stroke of the first fork tooth 272 relative to the holder 11. Here, the ratio of the movement stroke of the first fork tooth 272 relative to the holder 11 to the movement stroke of the first fork tooth 272 relative to the holder 11 is K, and the K may be 2, 3 or other values. Apparently, the specific value of K may be set according to the actual situation. For example, in the present embodiment, when the K=2, the stroke amount of the first fork tooth 272 is 300mm, the stroke amount of the second fork tooth 273 is 600mm. As can be seen from the above description, the provision of the stroke amplifying component 274 can increase the stroke amount of the second fork tooth 273, thereby reducing the size of the entire fork tooth unit 270 to save space.

Specifically, the stroke amplifying component includes a first pulley 2741, a first cable 2742, a second pulley 2743, and a second cable 2744. The first pulley 2741 is fixed to the first fork tooth 272. One end of the first cable 2742 is fixed to the holder 271, and the other end of the first cable is wound around the first pulley 2741 and is fixed to the second fork tooth 273. The second pulley 2743 is fixed to the first fork tooth 272. One end of the second cable 2744 is fixed to the second fork tooth 273, and the other end of the second cable is wound around the second pulley 2743 and is fixed to the holder 271. Preferably, the center of the first pulley 2741 is on the same plane as the center of the second pulley 2743.

When the second fork tooth 273 is extended, the rack 263 drives the first fork tooth 272 to extend, and in this case, the first pulley 2741 serves as a driving wheel, and the second pulley 2743 serves as a driven wheel, and the first cable 2742 pulls the second fork tooth 273 to extend to enlarge the amount of extension of the second fork tooth 273. When the second fork tooth 273 retracts, the rack 263 drives the first fork tooth 272 to retract, and in this case, the second pulley 2743 serves as a driving wheel, and the first pulley 2741 serves as a driven wheel, and the second cable 2744 pulls the second fork tooth 273 to retract to enlarge the amount of retraction of the second fork tooth 273.

Preferably, the first pulley 2741 is a fixed pulley, and the second pulley 2743 is also a fixed pulley.

In other embodiments, the stroke amplifying component is not limited to the structure described above, and the stroke amplifying component may be implemented with other mechanisms, such as a ratchet component.

Furthermore, a first guiding structure 275 for guiding the movement of the first fork tooth 272 is arranged between the holder 271 and the first fork tooth 272, and a second guiding structure 276 for guiding the movement of the second fork tooth 273 is arranged between the first fork tooth 272 and the second fork tooth 273.

Specifically, the first guiding structure 275 includes a first guiding wheel 275a arranged on the holder 271 and a first guiding groove 275b arranged on the first fork tooth 272. The first guide wheel 275a is fitted to the first guiding groove 275b, and the first guiding wheel 275a can slide along the first guiding groove 275b. The second guiding structure 276 includes a second guiding wheel 276a arranged on the second fork tooth 273 and a second guiding groove 276b arranged on the first fork tooth 272. The second guiding wheel 276a is fitted to the second guiding groove 276b, and the second guiding wheel 276a can slide along the second guiding groove 276b. Preferably, the first guiding groove 275b and the second guiding groove 276b are all arranged along the length direction of the first fork tooth 272.

Apparently, in other embodiments, the first guiding structure 275 and the second guiding structure 276 are not limited to the structures described above. The first guiding structure 275 and the second guiding structure 276 can also be realized by other structures, such as a guide rail structure and a slider structure.

The image acquiring unit 280 may be a visual sensor or a radio frequency sensor. After the second fork tooth 273 extends to grip the to-be-carried object, the to-be-carried object is retracted with the second fork tooth 273, then the image acquiring unit 280 acquires the current pose image of the to-be-carried object on the second fork tooth 273, and sends the acquired pose image to the processing unit, and then the processing unit sends the pose image to the control center. The control center or the processing unit compares the acquired pose image of the to-be-carried object with a standard pose image of the to-be-carried object, to determine whether there is a pose deviation for the to-be-carried object on the second fork tooth 273, thereby facilitating the correction of the deviation. The deviation includes an X-axis deviation, a Y-axis deviation, and an angle deviation. The specific deviation correction method and principle are as follows.

The using process of the movable device 200 is explained as follows.

The process, of the movable device 200 carrying/gripping the to-be-carried object 14 on the shelf 11 placed on both sides of the aisle to the storage unit 220 by the fork tooth unit 270, is as follows.

First, the movable device 200 moves to the side of the designated shelf 11 through the aisle 12, the fork tooth unit 270 is located at an initial position, and the lifting unit 240 drives the rotating unit 250 and the telescopic driving unit 260 to move upwards to a designated first height, so that the fork tooth unit 270 faces to the designated to-be-carried object 14 on the shelf 11. The telescopic driving unit 260 drives the second fork tooth 273 to extend to the bottom of the designated to-be-carried object 14. The lifting unit 240 continues to move upwards, so that the bottom of the to-be-carried object 14 is in contact with the second fork tooth 273 and the to-be-carried object 14 is lifted. The telescopic driving unit 260 drives the second fork tooth 273 to retract, so that the first fork tooth 272 and the second fork tooth 273 are folded together, and the to-be-carried object 14 is retracted.

Then, the lifting unit 240 drives the rotating unit 250 and the telescopic driving unit 260 to move upwards to a designated second height. The rotation unit 250 rotates to a designated first angle, so that the fork tooth unit 270 faces to the storage unit 220. The telescopic driving unit 260 drives the second fork tooth 273 to extend and move together with the to-be-carried object 14 to the storage unit 220. The lifting unit 240 moves downwards to disengage the bottom of the to-be-carried object 14 from the second fork tooth 273. The telescopic driving unit 260 drives the second fork tooth 73 to retract, so that the to-be-carried object 14 on the shelf 11 placed on both sides of the aisle is transported/gripped in the storage unit 220.

The process, of the movable device 200 carrying/ gripping the to-be-carried object 14 in the storage unit 220 to the shelf 11 placed on both sides of the aisle by the fork tooth unit 270, is described as follows.

First, the movable device 200 moves from the aisle to the side of the designated shelf 11. The lifting unit 240 drives the rotating unit 250 and the telescopic driving unit 260 to move upwards to a designated second height, and the rotation unit 250 rotates to a designated first angle, so that the fork tooth unit 270 faces to the designated to-be-carried object 14 in the storage unit 220. The telescopic driving unit 260 drives the second fork tooth 273 to extend to the bottom of the designated to-be-carried object 14. The lifting unit 240 continues to move upwards, so that the bottom of the to-be-carried object 14 is in contact with the second fork tooth 273 and the to-be-carried object 14 is lifted. The telescopic driving unit 260 drives the second fork tooth 273 to retract, so that the to-be-carried object 14 is retracted.

Then, the lifting unit 240 drives the rotating unit 250 and the telescopic driving unit 260 to move upwards to a designated first height, so that the fork tooth unit 270 faces to the shelf 11. The telescopic driving unit 260 drives the second fork tooth 273 to extend and move together with the to-be-carried object 14 to the shelf 11. The lifting unit 240 moves downwards to disengage the bottom of the to-be-carried object 14 from the second fork tooth 273. The telescopic driving unit 260 drives the second fork tooth 273 to retract, and the first fork tooth 272 and the second fork tooth 273 are folded together, so that the to-be-carried object 14 in the storage unit 220 is transported and gripped to the shelf 11 placed on both sides of the aisle.

According to the present disclosure, an order completion method is provided, which includes the following step 1 to step 5.

In step 1, in an order preparation area, an order is associated with a charging vehicle, and the charging vehicle is associated with a movable apparatus for transporting goods, so that the order is associated with the movable apparatus for transporting goods, and the order information is sent to a movable device for transporting goods. This process is the same as the process in an order preparation area described above, and is not described here.

In step 2, the charging vehicle is transported to a high-frequency picking area, and goods are picked and loaded in the charging vehicle. That is, the goods in the order is loaded in a container corresponding to the order.

In step 3, goods are picked by the movable device for transporting goods in a low-frequency picking area, and the goods are transported to a workstation of an intermediate cooperation area by the movable device, the workstation is specifically a picking station. Step 3 is performed synchronously with step 2.

In step 4, the picking station generates a reminder based on the order information of the order, and the operator puts, according to the reminder, the goods in a container corresponding to the charging vehicle, and a signal, that the goods in the order have been picked, is fed back by an operation terminal such as a scanning device.

In step 5, the charging vehicle is transported to an order completion area, and the containers on the charging vehicle are unloaded and packaged in the order completion area.

It can be understood that the goods located in the low-frequency picking area are placed in a pallet or a small container, and the above movable device for transporting goods obtains the goods by obtaining the pallet or small container corresponding to the goods. In the process of taking the goods, the movable device may take goods from the same pallet or the same small container multiple times, so the position of the pallet or the small container may be deviated from the predetermined position during the multiple goods taking process, resulting in a high probability that the pallet or the small container may not be taken or the taken pallet or small container may fall. The order completion method provided according to the present disclosure further includes the step of correcting the position of the goods.

After the goods in the picking station are picked, the pallet or the small container are still in the picking station, and occupy the storage space of the picking station, so the pallet or the small container needs to be taken away from the picking station to other areas. The order completion method provided according to the present disclosure, further includes the step of moving the already picked goods to other areas (such as a low-frequency picking area or other picking stations).

After the goods in the low-frequency picking area are picked, the quantity of the goods is reduced. Therefore, the order completion method provided according to the present disclosure further includes the step of replenishing the low-frequency picking area with goods.

It should be noted that the sequence of the steps of the order completion method provided according to the present disclosure is not limited, as long as the order can be completed by the above steps.

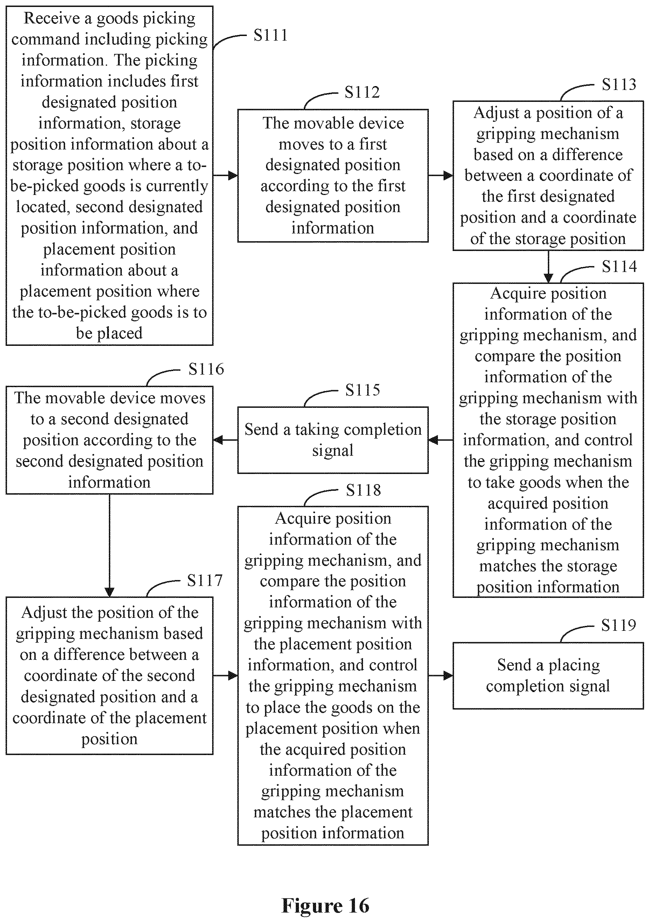

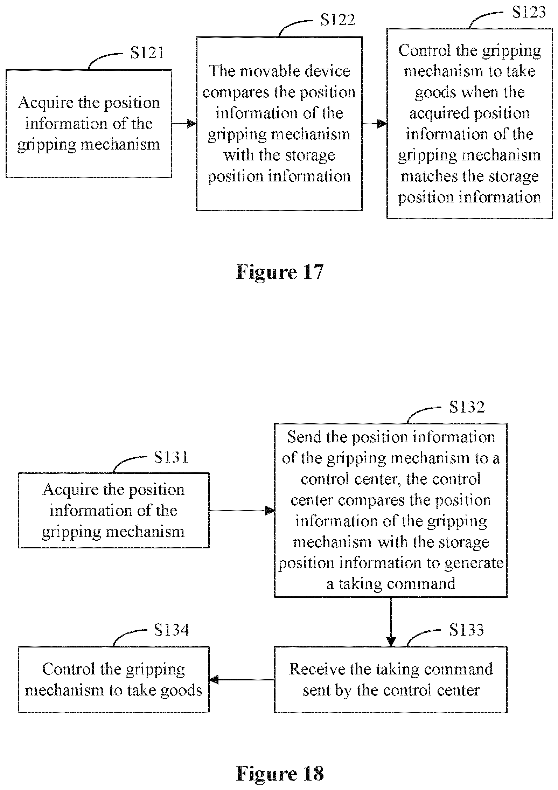

Specifically, reference is made to Figure 16 to Figure 18, a picking method is further provided according to the present disclosure. The picking method is applied to a movable device for the movable device to pick goods in a low-frequency picking area. With the picking method, the movable device can perform the step 3 of the present disclosure. It can be understood that the picking method is not limited to the picking goods by the movable device in a low-frequency picking area, and can be used in any picking area as long as the movable device can picking goods. The picking method includes the following steps S111 to S119.

In step Sill, a goods picking command including picking information is received. The picking information includes first designated position information, storage position information about a storage position where a to-be-picked goods is currently located, second designated position information, and placement position information about a placement position where the to-be-picked goods is to be placed.

In the present embodiment, the control center, after receiving an order, sends a goods picking command to the movable device, the goods picking command includes goods picking information. The picking information includes first designated position information, storage position information about a storage position where a to-be-picked goods is currently located, second designated position information, and placement position information about a placement position where the to-be-picked goods is to be placed. In the present embodiment, the storage position information of the to-be-picked goods includes the position coordinate of specific goods in the storage area, that is, the X-axis coordinate, Y-axis coordinate, and Z-axis coordinate of the goods required by the order in the warehouse. In the present embodiment, the placement position information of the to-be-picked goods includes the coordinate of a position. Specifically, the placement position information includes the coordinate of a temporary storage cell of a picking station, that is, the X-axis coordinate, Y-axis coordinate, and Z-axis coordinate of the temporary storage cell of the picking station in the warehouse. After the movable device takes the goods, the movable device places the goods in the temporary storage cell of the picking station according to the placement position information.

In the present embodiment, the picking information includes one piece of taking information and one piece of placing information. The taking information includes the first designated position information, the storage position information about a storage position where a to-be-picked goods is currently located. The placing information includes the second designated position information, and the placement position information about a placement position where the to-be-picked goods is to be placed.

In another embodiment, the picking information includes multiple pieces of taking information and multiple pieces of placing information. The multiple pieces of taking information correspond to the multiple pieces of placing information respectively. Each piece of the taking information includes one piece of the designated position information, and one piece of the storage position information about a storage position where a to-be-picked goods is currently located. Each piece of the placing information includes one piece of the designated position information, and one piece of the placement position information about a placement position where the to-be-picked goods is to be placed.

In the present embodiment, the first designated position information includes the coordinate of a position corresponding to the storage position information, that is, the X-axis coordinate, the Y-axis coordinate, and the Z-axis coordinate of a first designated position in the warehouse. Specifically, the first designated position is a position of the aisle in front of the storage cell of the shelf where the goods are located.

In the present embodiment, the second designated position information includes the coordinate of a position corresponding to the placement position information, that is, the X-axis coordinate, the Y-axis coordinate, and the Z-axis coordinate of a second designated position in the warehouse. Specifically, the second designated position is a position of the aisle in front of the temporary storage cell of the picking station.

Specifically, there is a difference between the coordinate of the first designated position and the coordinate of the storage position, and there is a difference between the coordinate of the second designated position and the coordinate of the placement position. The differences in the X-axis coordinates and the Y-axis coordinates between the first designated position and the storage position are constant values, and the difference in the Z-axis coordinates between the first designated position and the storage position is a variable value. The differences in the X-axis coordinates and the Y-axis coordinates between the second designated position and the placement position are constant values, and the difference in the Z-axis coordinates between the second designated position and the placement position is a variable value.

In another embodiment, the first designated position information, the storage position information of the to-be-picked goods, the second designated position information, and the placement position information of the to-be-picked goods may be a serial number of the position where the goods, the storage cell, or the temporary storage cell are located. The serial number of the position corresponds to the X-axis coordinate, the Y-axis coordinate, and the Z-axis coordinate of the position.

In the present embodiment, the goods is placed on the pallet, and the process of taking and placing the goods is the process of taking and placing the pallet.

In step S 112, the movable device moves to a first designated position according to the first designated position information.

In the present embodiment, after receiving the picking information, the movable device moves to the first designated position according to the first designated position information in the picking information. The positioning unit of the movable device performs a positioning operation to acquire position information. The position information includes the X-axis coordinate and the Y-axis coordinate of the position where the movable device is current located, and the movable device compares the acquired position information with the coordinate of the first designated position. If the acquired position information matches the coordinate of the first designated position, the next step is performed. If the acquired position information does not match the coordinate of the first designated position, the movable device continues to move and perform the positioning operation and the comparison operation again, until the movable device reaches the designated position. Specifically, the first designated position is a position of the aisle in front of the storage cell of the shelf where the goods are located.

In another embodiment, after receiving the picking information, the movable device moves to the first designated position according to the first designated position information in the picking information. The positioning unit of the movable device performs a positioning operation to acquire position information. The position information includes the X-axis coordinate and the Y-axis coordinate of the position where the movable device is current located, and the movable device feeds the acquired position information back to the control center, and then the control center compares the acquired position information with the coordinate of the first designated position. If the acquired position information matches the coordinate of the first designated position, the control center sends a command of adjusting the gripping mechanism to the movable device, and the movable device receives the command to perform the next step. If the acquired position information does not match the coordinate of the first designated position, the movable device continues to move and perform the positioning operation again, and the comparison operation is performed again, until the movable device reaches the designated position.

In step S 113, a position of the gripping mechanism is adjusted based on a difference between a coordinate of the first designated position and a coordinate of the storage position.

In the present embodiment, the shelf containing the goods includes multiple layers of storage cells. The storage position information further includes a Z-axis coordinate of the goods. The difference between the coordinate of the first designated position and the coordinate of the storage position in the Z-axis direction is the difference between the height of the gripping mechanism and the height of the goods. The movable device adjusts the position of the gripping mechanism based on the difference. Specifically, in an initial state, the gripping mechanism faces to the moving direction of the movable device, and when the position of the gripping mechanism is initially adjusted, the gripping mechanism is controlled to rotate by 90 degrees to face to the direction of the goods, and then the gripping mechanism is controlled to move upwards or downwards to the position of the height of the goods.

In the present embodiment, the gripping mechanism is a fork tooth.

In step S114, position information of the gripping mechanism is acquired, and the position information of the gripping mechanism is compared with the storage position information, and the gripping mechanism is controlled to take goods when the acquired position information of the gripping mechanism matches the storage position information.

In the present embodiment, the position information of the gripping mechanism is acquired and compared with the height information in the storage position information, and when the acquired position information of the gripping mechanism matches the height information, the gripping mechanism is controlled to extend to take the goods from the storage cell of the shelf to the storage unit of the movable device.

In the present embodiment, the height, for which the gripping mechanism moves upwards or downwards, may be acquired by acquiring a rotation amount of a motor that drives the gripping mechanism to move upwards or downwards, thereby acquiring the position information of the gripping mechanism. In another embodiment, each layer of the shelf is provided with a positioning identifier, and the position information of the gripping mechanism may be determined by identifying the positioning identifier.

Specifically, the comparison may be performed by the control unit of the movable device, or may be performed by the control center.

In step S 115, a taking completion signal is sent.

Specifically, the movable device sends a taking completion signal to the control center after taking the goods from the storage cell of the shelf to the storage unit of the movable device. In the present embodiment, the taking completion signal includes the position information of the storage unit, where the goods is located, of the movable device.

In the embodiment in which the picking information includes one piece of taking information and one piece of placing information, the movable device sends the taking completion signal to the control center, after the movable device takes the goods in the taking information.

In the embodiment in which the picking information includes multiple pieces of taking information and multiple pieces of placing information, the movable device sends the picking completion signal to the control center after taking the goods in one piece of taking information, then the movable device continues to take the next goods in the next piece of taking information, until the movable device takes away all the goods in the multiple pieces of taking information in the picking information, then the movable device performs the next step.

In step S 116, the movable device moves to a second designated position according to the second designated position information.

In the present embodiment, the movable device moves to the second designated position according to the second designated position information in the picking information, after the movable device takes the goods to a storage unit. The positioning unit of the movable device performs a positioning operation to acquire position information. The position information includes the X-axis coordinate and the Y-axis coordinate of the position where the movable device is current located, and the movable device feeds the acquired position information back to the control center, and then the control center compares the acquired position information with the coordinate of the second designated position. If the acquired position information matches the coordinate of the second designated position, the control center sends a command of adjusting the gripping mechanism to the movable device, and the movable device receives the command to perform the next step. If the acquired position information does not match the coordinate of the second designated position, the movable device continues to move and perform the positioning operation again, and the comparison operation is performed again, until the movable device reaches the designated position.

In another embodiment, after receiving the picking information, the movable device moves to the second designated position according to the second designated position information in the picking information. The positioning unit of the movable device performs a positioning operation to acquire position information. The position information includes the X-axis coordinate and the Y-axis coordinate of the position where the movable device is current located, and the positioning unit feeds the acquired position information back to the control center, and then the control center compares the acquired position information with the coordinate of the second designated position. If the acquired position information matches the coordinate of the second designated position, the control center sends a command of adjusting the gripping mechanism to the movable device, and the movable device receives the command to perform the next step. If the acquired position information does not match the coordinate of the second designated position, the movable device continues to move and perform the positioning operation again, and the comparison operation is performed again, until the movable device reaches the designated position.

In step S117, the position of the gripping mechanism is adjusted based on a difference between a coordinate of the second designated position and a coordinate of the placement position.

In the present embodiment, the shelf of the picking station includes multiple layers of temporary storage cells. The placement position information includes a Z-axis coordinate of the temporary storage cell of the picking station. The difference between the coordinate of the second designated position and the coordinate of the placement position in the Z-axis direction is the difference between the height of the gripping mechanism and the height of the temporary storage cell. When the movable device moves to the second designated position, the gripping mechanism takes the goods out of the storage unit, and the movable device adjusts the position of the gripping mechanism based on the difference. Specifically, in an initial state, the gripping mechanism faces to the moving direction of the movable device, and when the position of the gripping mechanism is initially adjusted, the gripping mechanism is controlled to rotate by 90 degrees to face to the direction of the placement position, and then the gripping mechanism is controlled to move upwards or downwards to the position of the height of the placement position.

In step S118, the position information of the gripping mechanism is acquired, and the position information of the gripping mechanism is compared with the placement position information, and the gripping mechanism is controlled to place the goods when the acquired position information of the gripping mechanism matches the placement position information.

In the present embodiment, the position information of the gripping mechanism is acquired and compared with the height information in the placement position information, and when the acquired position information of the gripping mechanism matches the placement position information, the gripping mechanism is controlled to extend to put the goods on the gripping mechanism in the placement position, that is, in the temporary storage cell of the shelf of the picking station.

In the present embodiment, the height, for which the gripping mechanism moves upwards or downwards, may be acquired by acquiring a rotation amount of a motor that drives the gripping mechanism to move upwards or downwards, thereby acquiring the position information of the gripping mechanism. In another embodiment, each layer of the shelf is provided with a positioning identifier, and the position information of the gripping mechanism may be determined by identifying the positioning identifier.

Specifically, the comparison may be performed by the control unit of the movable device, or may be performed by the control center.

In step S 119, a placing completion signal is sent.

Specifically, the movable device sends a placing completion signal to the control center after taking the goods from the storage unit to the temporary storage cell of the shelf of the picking station.

In the embodiment in which the picking information includes one piece of taking information and one piece of placing information, the movable device sends the placing completion signal to the control center, after the movable device places the goods in the placing information in the temporary storage cell.

In the embodiment in which the picking information includes multiple pieces of taking information and multiple pieces of placing information, the movable device sends the placing completion signal to the control center after placing the goods in one piece of placing information in the temporary storage cell, then the movable device continues to place the next goods in the next piece of placing information in the temporary storage cell, until the movable device places all the goods in the multiple pieces of placing information, of the picking information, in the temporary storage cell .

For example, in a case that the coordinate of the storage cell in the storage area, where the to-be-picked goods is located, is (50, 50, 5), then the storage position coordinate of the to-be-picked goods is (50, 50, 5). The coordinate of the position of the aisle in front of the storage cell in the storage area, where the to-be-picked goods is located, is (51, 50, 0), then the coordinate of the first designated position is (51, 50, 0). The coordinate of the temporary storage cell of the picking station, where the to-be-picked goods is to be placed, is (10, 10, 8), then the coordinate of the placement position is (10, 10, 8). The coordinate of the position of the aisle in front of the temporary storage cell of the picking station is (11, 10, 0), then the coordinate of the second designated position is (11, 10, 0). After receiving the goods picking command, the movable device goes to the first designated position (51, 50, 0), and after the movable device reaches the first designated position, the coordinate of the gripping mechanism is (51, 50, 0). There is a distance between the gripping mechanism and the to-be-picked goods on the X-axis and the Z-axis, so the grasping mechanism rotates by 90 degrees towards the direction of the to-be-picked goods, then moves upwards for 5 length units to reach the height of the to-be-picked goods, and then extends to reach the storage position (50, 50, 5) of the to-be-picked goods. After reaching the position, the gripping mechanism takes the to-be-picked goods to the storage unit of the movable device. After taking the to-be-picked goods, the movable device goes to the temporary storage cell of the picking station where the to-be-picked goods is to be placed. The movable device first reaches the second designated position (11, 10, 0), then the gripping mechanism takes out the to-be-picked goods from the storage unit, where the coordinate of the grasping mechanism is (11, 10, 0). There is a distance between the gripping mechanism and the temporary storage cell on the X-axis and the Z-axis, so the grasping mechanism carrying the to-be-picked goods rotates by 90 degrees towards the direction of the temporary storage cell, and moves upwards for 8 length units to reach the height of the temporary storage cell, and then extends to reach the placement position (10, 10, 8). After reaching the position, the gripping mechanism places the to-be-picked goods to the temporary storage cell, and retracts.

In an embodiment, a method, for controlling the gripping mechanism to take goods by comparing the position information of the gripping mechanism with the storage position information, is provided. The method includes the following steps S121 to S123.

In step S121, the position information of the gripping mechanism is acquired.

In the present embodiment, the height, for which the gripping mechanism moves upwards or downwards, may be acquired by acquiring a rotation amount of a motor that drives the gripping mechanism to move upwards or downwards, thereby acquiring the position information of the gripping mechanism. In another embodiment, each layer of the shelf is provided with a positioning identifier, and the position information of the gripping mechanism may be determined by identifying the positioning identifier.

In step S122, the movable device compares the position information of the gripping mechanism is with the storage position information.

In the present embodiment, the movable device inputs the acquired position information of the gripping mechanism and the storage position information into a control unit of the movable device. The control unit compares the position information of the gripping mechanism with the height information in the storage position information. If the position information of the gripping mechanism matches the height information, the control unit outputs a taking command.

In step S123, the gripping mechanism is controlled to take the goods when the acquired position information of the gripping mechanism matches the storage position information.

In a case that the acquired position information of the gripping mechanism matches the storage position information, the control unit outputs a taking command to control the gripping mechanism to extend to take the goods from the storage cell of the shelf to the storage unit of the movable device.

In another embodiment, a method, for controlling the gripping mechanism to take goods by comparing the position information of the gripping mechanism with the storage position information, is provided. The method includes the following steps S131 to S134.

In step S131, the position information of the gripping mechanism is acquired.

In the present embodiment, the height, for which the gripping mechanism moves upwards or downwards, may be acquired by acquiring a rotation amount of a motor that drives the gripping mechanism to move upwards or downwards, thereby acquiring the position information of the gripping mechanism. In another embodiment, each layer of the shelf is provided with a positioning identifier, and the position information of the gripping mechanism may be determined by identifying the positioning identifier.

In step S132, the position information of the gripping mechanism is sent to the control center, the control center compares the position information of the gripping mechanism with the storage position information to generate a taking command.

In the present embodiment, the movable device sends the acquired position information of the gripping mechanism to the control center, then the control center compares the position information of the gripping mechanism with the height information in the storage position information. If the position information of the gripping mechanism matches the height information, the control center generates a taking command and sends the taking command to the movable device.

In step S133, the taking command sent by the control center is received.

In the present embodiment, the movable device receives the taking command sent by the control center.

In step S134, the gripping mechanism is controlled to take goods.

In the present embodiment, after receiving the taking command sent by the control center, the movable device controls the gripping mechanism to extend to take the goods from the storage cell of the shelf to the storage unit of the movable device.

In the present embodiment, the position information of the gripping mechanism is acquired and compared with the placement position information, and in a case that the acquired position information of the gripping mechanism matches the placement position information, the step of controlling the gripping mechanism to place the goods also includes: acquiring the position information of the gripping mechanism, and sending the acquired position information of the gripping mechanism to the control center. The control center compares the position information of the gripping mechanism with the height information in the storage position information. If the position information of the gripping mechanism matches the height information, the control center generates a placing command and sends the placing command to the movable device. The movable device receives the placing command and controls the gripping mechanism to extend to place the goods in the temporary storage cell of the shelf of the picking station.

With above picking method, the movable device only transports the goods required by the order from the storage area to the picking station when picking the goods, thereby greatly reducing the workload of the movable device, and the movable device can directly leave the picking station to take next goods after placing the goods required by the order in the picking station, thereby improving the picking efficiency.

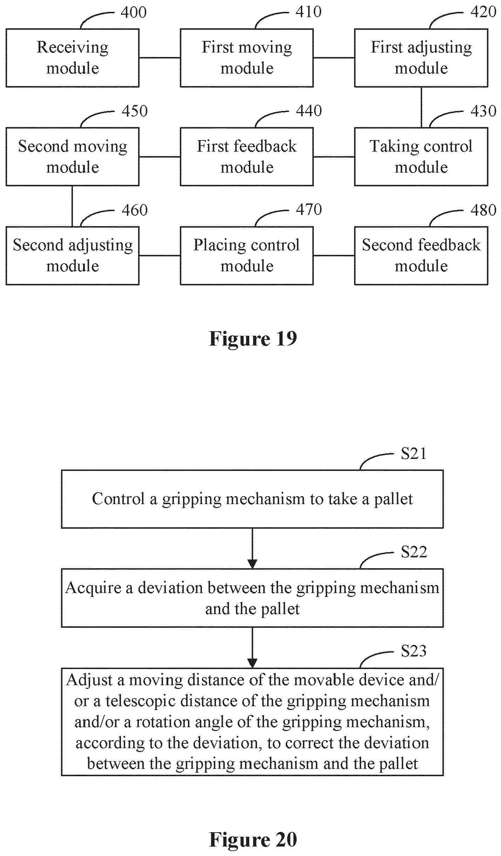

Reference is made to Figure 19, which is a picking device provided according to an embodiment. The picking device includes a receiving module 400, a first moving module 410, a first adjusting module 420, a taking control module 430, and a first feedback module 440, a second moving module 450, a second adjusting module 460, a placing control module 470, and a second feedback module 480.

The receiving module 400 is configured to receive picking information. The picking information includes first designated position information, storage position information about a storage position where a to-be-picked goods is currently located, second designated position information, and placement position information about a placement position where the to-be-picked goods is to be placed.

The first moving module 410 is configured to cause the movable device to move to a first designated position according to the first designated position information.

The first adjusting module 420 is configured to adjust a position of a gripping mechanism based on a difference between a coordinate of the first designated position and a coordinate of the storage position.

The taking control module 430 is configured to acquire position information of the gripping mechanism, and compare the position information of the gripping mechanism with the storage position information, and control the gripping mechanism to take goods when the acquired position information of the gripping mechanism matches the storage position information.

The first feedback module 440 is configured to send a taking completion signal.

The second moving module 450 is configured to cause the movable device to move to a second designated position according to the second designated position information.

The second adjusting module 460 is configured to adjust the position of the gripping mechanism based on a difference between a coordinate of the second designated position and a coordinate of the placement position.

The placing control module 470 is configured to acquire position information of the gripping mechanism, and compare the position information of the gripping mechanism with the placement position information, and control the gripping mechanism to place the goods on the placement position when the acquired position information of the gripping mechanism matches the placement position information.

The second feedback module 480 is configured to send a placing completion signal.

In an embodiment, a taking control module is provided. The taking control module includes a first acquiring unit, a comparing unit, and a first taking control unit.

The first acquiring unit is configured to acquire the position information of the gripping mechanism.

The comparing unit is configured to compare the position information of the gripping mechanism with the storage position information in the movable device.

The first taking control unit is configured to control the gripping mechanism to take goods when the acquired position information of the gripping mechanism matches the storage position information.

In another embodiment, a taking control module is provided. The taking control module includes a second acquiring unit, a feeding unit, a receiving unit, and a second taking control unit.

The second acquiring unit is configured to acquire the position information of the gripping mechanism.

The feeding unit is configured to send the position information of the gripping mechanism to a control center. The control center compares the position information of the gripping mechanism with the storage position information to generate a taking command.

The receiving unit is configured to receive the taking command sent by the control center.

The second taking control unit is configured to control the gripping mechanism to take goods.

For the specific definition of the picking device, reference may be made to the definition of the picking method in the above, and details are not described herein again. The modules in the above picking device may be implemented in whole or in part by software, hardware, and combinations thereof. Each of the above modules may be embedded in or independent of the processor in the computer device in a hardware form, or may be stored in a memory in the computer device in a software form, so that the processor may invoke the software to perform the operations corresponding to the above modules.

Reference is made to Figure 20, which is a method for correcting a position deviation of a pallet according to an embodiment of the present disclosure, to perform the step of correcting the position of the goods. The method for correcting a position deviation of a pallet includes the following steps S21 to S23.

In step S21, the gripping mechanism is controlled to take a pallet.

Specifically, in order to take the pallet from a shelf to a storage unit of the movable device, the movable device controls the gripping mechanism to take the pallet, the gripping mechanism may be configured as a fork tooth.

In step S22, a deviation between the gripping mechanism and the pallet is acquired.

Specifically, the movable device acquires a deviation between the gripping mechanism and the pallet when the gripping mechanism is taking the pallet. When the gripping mechanism of the movable device is to take a pallet, the gripping mechanism may rotate 90° to the right to take the pallet on the shelf on the right of the movable device, or rotate 90° to the left to take the pallet on the shelf on the left of the movable device. The deviation between the gripping mechanism and the pallet includes a X-axis deviation, a Y-axis deviation, and an angle deviation. The X-axis deviation, Y-axis deviation, and angle deviation may be acquired simultaneously. The X-axis deviation may be zero, the Y-axis deviation may be zero, and the angle deviation may be zero. The X-axis deviation is the deviation between the image of the positioning identifier and the standard image on the X-axis, the Y-axis deviation is the deviation between the image of the positioning identifier and the standard image on the Y-axis, and the angle deviation is the deviation between the image of the positioning identifier and the standard image in the direction of the spin. The X-axis deviation indicates that the image of the positioning identifier is offset from the standard image by a certain distance to the left or right in the X-axis direction, the Y-axis deviation indicates that the image of the positioning identifier is offset from the standard image by a certain distance upward or downward in the Y-axis direction, and the angle deviation indicates that the image of the positioning identifier is offset from the standard image by a certain angle in a clockwise spin direction or a counterclockwise spin direction.

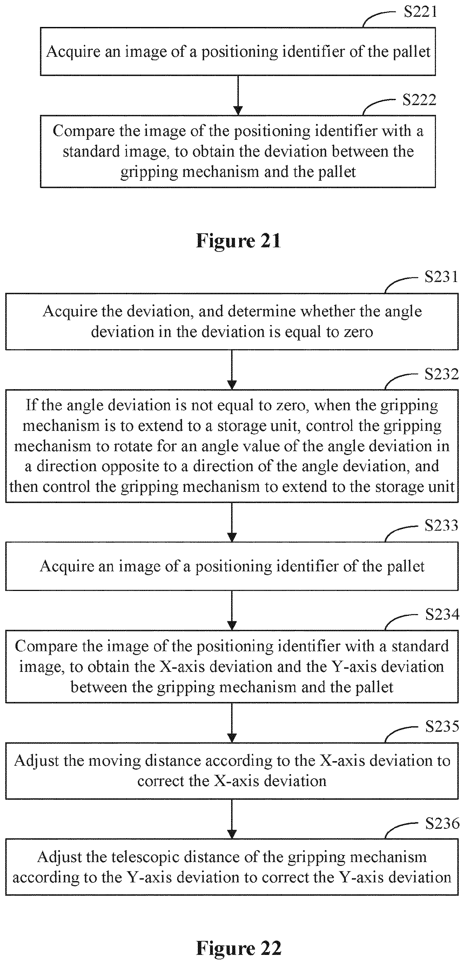

Reference is made to Figure 21, which is a method for acquiring a deviation, including the following steps S221 to S222.

In step S221, an image of the positioning identifier of the pallet is acquired.

Specifically, the positioning identifier is an image provided on the surface of the pallet, and the image is provided at a fixed position on the surface of the pallet. Preferably, the positioning identifier may be a two-dimensional code, a barcode, a groove, a protrusion, or a sensor. There is an image acquiring device provided on the gripping mechanism of the movable device, and the position of the image acquiring device corresponds to the position of the positioning identifier. When the movable device takes the pallet by the gripping mechanism, the image of the positioning identifier is acquired by the image acquiring device provided on the gripping mechanism.

In step S222, the image of the positioning identifier is compared with a standard image to obtain a deviation between the gripping mechanism and the pallet.

Specifically, the image of the positioning identifier acquired by the image acquiring device is compared with a standard image. The standard image is an image acquired by the image acquiring device when there is no position deviation for the pallet. The acquired image of the positioning identifier is compared with the standard image, and the distance that is offset to the left or right in the X-axis direction is taken as an X-axis deviation, and the distance that is offset upward or downward in the Y-axis direction is taken as a Y-axis deviation, and the angle for which the acquired image of the positioning identifier is biased in the clockwise or counterclockwise direction is taken as an angle deviation.

The method for calculating the deviation is as follows. A coordinate of a midpoint of the positioning identifier in the image of the positioning identifier and a coordinate of a midpoint of the positioning identifier in the standard image are acquired. The difference between the X-axis coordinate of the midpoint of the positioning identifier in the image of the positioning identifier and the X-axis coordinate of the midpoint of the positioning identifier in the standard image is taken as the X-axis deviation. The difference between the Y-axis coordinate of the midpoint of the positioning identifier in the image of the positioning identifier and the Y-axis coordinate of the midpoint of the positioning identifier in the standard image is taken as the Y-axis deviation. According to the X-axis deviation and the Y-axis deviation, the image of the positioning identifier is moved by moving the midpoint of the positioning identifier in the image of the positioning identifier to the coordinate of the midpoint of the positioning identifier in the standard image. A coordinate of a positioning point of the positioning identifier in the image of the positioning identifier and a coordinate of a positioning point of the positioning identifier in the standard image are acquired. The angle deviation is acquired by calculating the angle between a connection line, including the positioning point and the midpoint of the positioning identifier in the image of the positioning identifier, and a connection line, including the positioning point and the midpoint of the positioning identifier in the standard image.

The deviation may also be calculated as follows. First, an abscissa X1 and an ordinate Y1 of all the pixels in the image of the positioning identifier, and an image angle $\theta1$ of the image of the positioning identifier are acquired, and an abscissa X0 and an ordinate Y0 of all the pixels in the standard image, and an image angle $\theta0$ of the standard image are acquired. The above values are substituted in a deviation calculation equation to obtain the X-axis deviation, the Y-axis deviation, and the angle deviation.

The deviation calculation equation may be expressed as follows.

$$T = (dx, \quad dy)$$

R represents the angle deviation, dx represents the X-axis deviation, and dy represents the Y-axis deviation.

With the above method for calculating the deviation, the X-axis deviation, the Y-axis deviation, and the angle deviation can be accurately calculated based on the image of the positioning identifier and the standard image, so that the position of the pallet can be accurately corrected by the subsequent correction step.

In step S23, a moving distance of the movable device and/or a telescopic distance of the gripping mechanism and/or a rotation angle of the gripping mechanism are adjusted according to the deviation, to correct the deviation between the gripping mechanism and the pallet.

Specifically, the deviation between the gripping mechanism and the pallet is corrected by adjusting the moving distance of the movable device, the telescopic distance of the gripping mechanism, and the rotation angle of the gripping mechanism.

Reference is made to Figure 22, which is a method for correcting a position deviation, including the following steps S231 to S236. In step S231, the deviation is acquired and it is determined whether the angle deviation in the deviation is equal to zero. Specifically, the calculated deviation is obtained, where the deviation includes an X-axis deviation, a Y-axis deviation, and an angle deviation. It is determined whether the angle deviation in the deviation is equal to zero.

In step S232, if the angle deviation is not equal to zero, when the gripping mechanism is to extend to a storage unit, the gripping mechanism is controlled to rotate for an angle value of the angle deviation in a direction opposite to a direction of the angle deviation, and then the gripping mechanism is controlled to extend to the storage unit.

Specifically, if the angle deviation is not equal to zero, when the gripping mechanism extends to the storage unit, that is, when the gripping mechanism carrying the pallet extends to the storage unit of the movable device after the gripping mechanism takes the pallet, the gripping mechanism is controlled to rotate for an angle value of the angle deviation in a direction opposite to a direction of the angle deviation. More specifically, in the case that the angle deviation is offset in the clockwise direction, the gripping mechanism is controlled to rotate for an angle value of the angle deviation in the counterclockwise direction to correct the angle deviation. In the case that the angle deviation is offset in the counterclockwise direction, the gripping mechanism is controlled to rotate for an angle value of the angle deviation in the clockwise direction to correct the angle deviation. After rotating for an angle value of the angle deviation, the gripping mechanism is controlled to extend to the storage unit. That is, the angle deviation is converted into an X-axis deviation and a Y-axis deviation, and the X-axis deviation and the Y-axis deviation are further corrected to achieve the purpose of correcting the angle deviation. If the angle deviation is equal to zero, the X-axis deviation is corrected by adjusting the moving distance according to the X-axis deviation, and the Y-axis deviation is corrected by adjusting the telescopic distance of the gripping mechanism according to the Y-axis deviation.

In step S233, an image of the positioning identifier of the pallet is acquired.

Specifically, the positioning identifier is an image provided on the surface of the pallet, and the image is provided at a fixed position on the surface of the pallet. Preferably, the positioning identifier may be a two-dimensional code, a barcode, a groove, a protrusion, or a sensor. There is an image acquiring device provided on the gripping mechanism of the movable device, and the position of the image acquiring device corresponds to the position of the positioning identifier. When the movable device takes the pallet by the gripping mechanism, the image of the positioning identifier is acquired by the image acquiring device provided on the gripping mechanism.

In step S234, the image of the positioning identifier is compared with a standard image, to obtain the X-axis deviation and the Y-axis deviation between the gripping mechanism and the pallet.

Specifically, the image of the positioning identifier acquired by the image acquiring device is compared with a standard image. The standard image is an image acquired by the image acquiring device when there is no position deviation for the pallet. The acquired image of the positioning identifier is compared with the standard image, and the distance that is offset to the left or right in the X-axis direction is taken as an X-axis deviation, and the distance that is offset upward or downward in the Y-axis direction is taken as a Y-axis deviation.

In step S235, the moving distance is adjusted according to the X-axis deviation to correct the X-axis deviation.

Specifically, the X-axis deviation is corrected by adjusting the moving distance of the movable device in the X-axis direction according to the X-axis deviation.

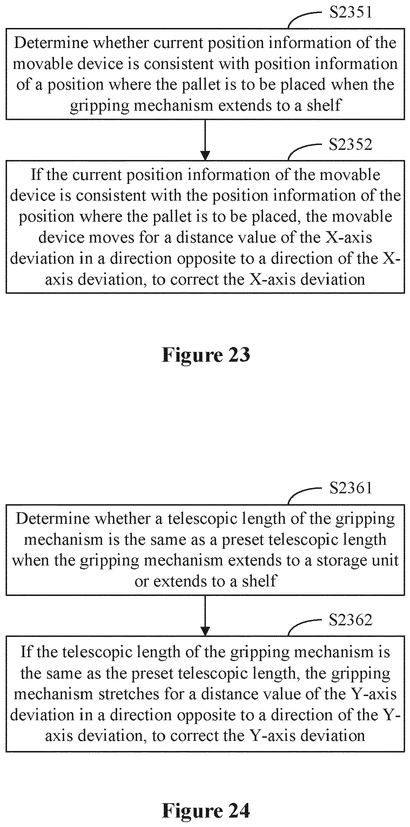

Reference is made to Figure 23, which is a method for correcting an X-axis deviation, including the following steps S2351 and S2352.

In step S2351, it is determined whether current position information of the movable device is consistent with position information of a position where the pallet is to be placed when the gripping mechanism extends to a shelf.

Specifically, when the gripping mechanism extends to the shelf, that is, when the gripping mechanism, carrying the pallet on the movable device, extends to the shelf, it is determined whether the current position information of the movable device is consistent with the position information of the pallet where the pallet is to be placed. The movable device scans the two-dimensional code positioning information of the shelf to determine whether the current position is the position where the pallet is to be placed.

In step S2352, if the current position information of the movable device is consistent with the position information of the position where the pallet is to be placed, the movable device moves for a distance value of the X-axis deviation in a direction opposite to a direction of the X-axis deviation, to correct the X-axis deviation.

Specifically, the movable device scans the landmark on the ground for positioning. If the current position is the position where the pallet is to be placed, the movable device moves for a distance value of the X-axis deviation in a direction opposite to a direction of the X-axis deviation, to correct the X-axis deviation. That is, in a case that the X-axis deviation is a left deviation by a certain distance, the movable device is controlled to move for the deviation distance to the right relative to the shelf to correct the X-axis deviation, and in a case that the X-axis deviation is a right deviation by a certain distance, the movable device is controlled to move for the deviation distance to the left relative to the shelf to correct the X-axis deviation. If the current position of the movable device is not the position where the pallet is to be placed, the movable device is controlled to continue to move until the current position information is consistent with the position information of the position where the pallet is to be placed, and then the movable device is controlled to move for the X-axis deviation distance in a direction opposite to a direction of the X-axis deviation, to correct the X-axis deviation.

With the above method for correcting the X-axis deviation, the deviation distance of the pallet in the X-axis direction can be accurately corrected according to the X-axis deviation, to make the placing position of the pallet on the shelf more precise.

In step S236, the telescopic distance of the gripping mechanism is adjusted according to the Y-axis deviation to correct the Y-axis deviation.

Specifically, the Y-axis deviation is corrected by adjusting the telescopic distance of the gripping mechanism in the Y-axis direction according to the Y-axis deviation.

Reference is made to Figure 24, which is a method for correcting a Y-axis deviation, including the following steps S2361 and S2362.

In step S2361, it is determined whether a telescopic length of the gripping mechanism is the same as a preset telescopic length when the gripping mechanism extends to a storage unit or extends to a shelf.

Specifically, when the gripping mechanism extends to the storage unit or extends to the shelf, that is, when the gripping mechanism, carrying the pallet, extends to the storage unit of the movable device after the gripping mechanism takes the pallet, or when the gripping mechanism, carrying the pallet on the movable device, extends to the shelf, it is determined whether the telescopic length of the gripping mechanism is the same as a preset telescopic length.

In step S2362, if the telescopic length of the gripping mechanism is the same as the preset telescopic length, the gripping mechanism stretches for a distance value of the Y-axis deviation in a direction opposite to a direction of the Y-axis deviation, to correct the Y-axis deviation.

Specifically, when the telescopic length of the gripping mechanism is the same as the preset telescopic length, the Y-axis deviation is corrected by stretching for a distance value of the Y-axis deviation in a direction opposite to a direction of the Y-axis deviation. That is, in a case that the Y-axis deviation is an upward deviation by a certain distance, the gripping mechanism is controlled to retract for the deviation distance to correct the Y-axis deviation, and in a case that the Y-axis deviation is a downward deviation by a certain distance, the gripping mechanism is controlled to extend for the deviation distance to correct the Y-axis deviation. If the telescopic length of the gripping mechanism is not the same as the preset telescopic length, the gripping mechanism is controlled to continue to stretch until the telescopic length of the gripping mechanism is the same as the preset telescopic length, and then the gripping mechanism is controlled to stretch for a distance value of the Y-axis deviation in a direction opposite to a direction of the Y-axis deviation, to correct the Y-axis deviation.

With the above method for correcting the Y-axis deviation, the deviation distance of the pallet in the Y-axis direction can be accurately corrected according to the Y-axis deviation, to make the placing position of the pallet on the shelf more precise.

Preferably, a method for correcting the deviation may include: acquiring the deviation, and determining whether the angle deviation in the deviation is equal to zero. Specifically, a calculated deviation is acquired, which includes an X-axis deviation, a Y-axis deviation, and an angle deviation. It is determined whether the angle deviation in the deviation is equal to zero. If the angle deviation is not equal to zero, the rotation angle of the gripping mechanism and the telescopic distance of the gripping mechanism are cooperatively adjusted, to correct the X-axis deviation, the Y-axis deviation, and the angle deviation simultaneously. That is, when the fork tooth places the goods in the storage unit or when the goods in the storage unit are taken out by the fork tooth, the angle deviation is first corrected by adjusting the rotation angle of the fork tooth, and the X-axis deviation and the Y-axis deviation are corrected by adjusting the telescopic distance of the fork tooth. Alternatively, the X-axis deviation, the Y-axis deviation, and the angle deviation may be simultaneously corrected by adjusting the rotation angle of the fork tooth and the telescopic distance of the fork tooth.

Preferably, a method for correcting the deviation may include: acquiring the deviation and determining whether the angle deviation in the deviation is equal to zero. Specifically, a calculated deviation is acquired, which includes an X-axis deviation, a Y-axis deviation, and an angle deviation. If the angle deviation is equal to zero, the moving distance is adjusted according to the X-axis deviation to correct the X-axis deviation. Specifically, it is determined whether the current position information is consistent with the position information of a position where the pallet is to be placed when the gripping mechanism extends to the shelf, and if the current position information is consistent with the position information of the position where the pallet is to be placed, the X-axis deviation is corrected by moving for a distance value of the X-axis deviation in a direction opposite to a direction of the X-axis deviation. The Y-axis deviation is corrected by adjusting the telescopic distance of the gripping mechanism according to the Y-axis deviation. Specifically, it is determined whether a telescopic length of the gripping mechanism is the same as a preset telescopic length when the gripping mechanism extends to a storage unit or extends to a shelf, and if the telescopic length of the gripping mechanism is the same as the preset telescopic length, the Y-axis deviation is corrected by stretching for a distance value of the Y-axis deviation in a direction opposite to a direction of the Y-axis deviation.

Preferably, after acquiring the deviation between the gripping mechanism and the pallet in step S22, the following operations may also be performed. It is determined whether the deviation is greater than a preset threshold. If the deviation is greater than the preset threshold, at least one of the adjusting the moving distance, adjusting the telescopic distance of the gripping mechanism, and adjusting the rotation angle of the gripping mechanism, is performed according to the deviation, to correct the deviation. Determining whether the deviation is greater than a preset threshold refers to determining whether the X-axis deviation is greater than a threshold of the X-axis deviation, determining whether the Y-axis deviation is greater than a threshold of the Y-axis deviation, and determining whether the angle deviation is greater than a threshold of the angle deviation. If at least one of the X-axis deviation, the Y-axis deviation and the angle deviation exceeds a corresponding threshold, at least one of the correcting the deviation by adjusting the moving distance according to the deviation, the correcting the deviation by adjusting the telescopic distance of the gripping mechanism according to the deviation, and the correcting the deviation by adjusting the rotation angle of the gripping mechanism according to the deviation, is performed.

More specifically, the correction of deviation may be performed in different cases. In a case that it is detected that the deviation needs to be corrected when the gripping mechanism takes the pallet, the angle deviation and the Y-axis deviation may be corrected when the pallet is placed in the storage unit of the movable device, and then the X-axis deviation may be corrected when the gripping mechanism places the pallet from the storage unit of the movable device on the shelf. Alternatively, the X-axis deviation, the Y-axis deviation, and the angle deviation may also be simultaneously corrected when the gripping mechanism places the pallet from the storage unit of the movable device on the shelf. In a case that it is detected that the deviation needs to be corrected when the gripping mechanism takes the pallet, the X-axis deviation, the Y-axis deviation, and the angle deviation may be simultaneously corrected when the gripping mechanism re-places the pallet on the shelf. In a case that it is detected that the deviation needs to be corrected when the gripping mechanism takes the pallet, the X-axis deviation, the Y-axis deviation, and the angle deviation may be simultaneously corrected when the movable device moves to a designated position.

More specifically, in a process that the movable device takes the goods on the shelf, firstly the fork tooth is at the initial position, then the fork tooth moves upwards in the vertical direction to the same height of the goods, and then the fork tooth extends to the shelf to take the goods. After the goods are taken, the fork tooth retracts and moves downwards to the initial position. After rotating by 90 degrees in the initial position, the fork tooth places the goods in the storage unit of the movable device. During the whole process, the fork tooth takes the goods back to the initial position, the image of the positioning identifier of the pallet is acquired, and the image of the positioning identifier is compared with a standard image to obtain the deviation between the gripping mechanism and the pallet.

In the specific implementation of a method for correcting a position deviation of a pallet, for example, when controlling the gripping mechanism to take the pallet, the movable device determines that the image of the positioning identifier is shifted by 5mm to the right on the X-axis relative to the standard image, that is, the X-axis deviation is an offset to the right by 5mm. When the movable device needs to move to the position with the coordinate (50, 70, 0) and put the goods into the position with the coordinate (51, 70, 5), the movable device acquires the current coordinate information during the movement, and determines whether the current coordinate of the movable device is (50, 70, 0). If the current coordinate of the movable device is (50, 70, 0), the movable device is controlled to move to the left by 5mm from the current position relative to the position where the goods is to be placed, and then the X-axis deviation is corrected. After the correction, the fork tooth is controlled to place the goods on a position with the coordinate (51, 70, 5) on the shelf.

For example, when controlling the gripping mechanism to take the pallet, the movable device determines that the image of the positioning identifier is shifted upward by 4mm on the Y-axis relative to the standard image, that is, the Y-axis deviation is an offset upward by 4mm. When the movable device needs to move to the position with the coordinate (50, 70, 0) and put the goods into the position with the coordinate (51, 70, 5), the movable device acquires the current coordinate information during the movement, and determines whether the current coordinate of the movable device is (50, 70, 0). If the current coordinate of the movable device is (50, 70, 0), the movable device controls the fork tooth to rotate, move upwards, and extend to a position with the coordinate (51, 70, 5) on the shelf, and the movable device controls the fork tooth to retract by 4mm, and then the Y-axis deviation is corrected. After the correction, the fork tooth is controlled to place the goods on a position with the coordinate (51, 70, 5) on the shelf.

For example, when controlling the gripping mechanism to take the pallet, the movable device determines that the image of the positioning identifier is shifted to the right by 1 degree in the spin direction relative to the standard image, that is, the angle deviation is offset in the clockwise direction by 1 degree. When the movable device extends to the storage unit of the movable device, the fork tooth rotates 1 degree counterclockwise to correct the angle deviation, and then places the goods to the storage unit of the movable device. With the method and device for correcting a position deviation of a pallet, the deviation between the gripping mechanism and the pallet is acquired when the pallet is taken by the gripping mechanism. According to the deviation, the deviation is corrected by adjusting the moving distance, the telescopic distance of the gripping mechanism, and the rotation angle of the gripping mechanism, thereby correcting the position deviation of pallet when the pallet is placed on the shelf by the movable device, further ensuring the accuracy of the movement of the pallet in the entire system.

It should be understood that although the steps in the flow charts in Figure 20 to Figure 24 are sequentially displayed as indicated by the arrows, these steps are not necessarily performed in the order indicated by the arrows. Except as explicitly stated herein, the execution of these steps is not strictly limited, and the steps may be performed in other orders. Moreover, at least some of the steps in Figure 20 to Figure 24 may include multiple sub-steps or multiple stages, which are unnecessarily performed at the same time, but may be performed at different times. The order of execution of these sub-steps or stages is unnecessarily performed sequentially, but may be performed alternately with other steps or at least a portion of sub-steps or stages of other steps.

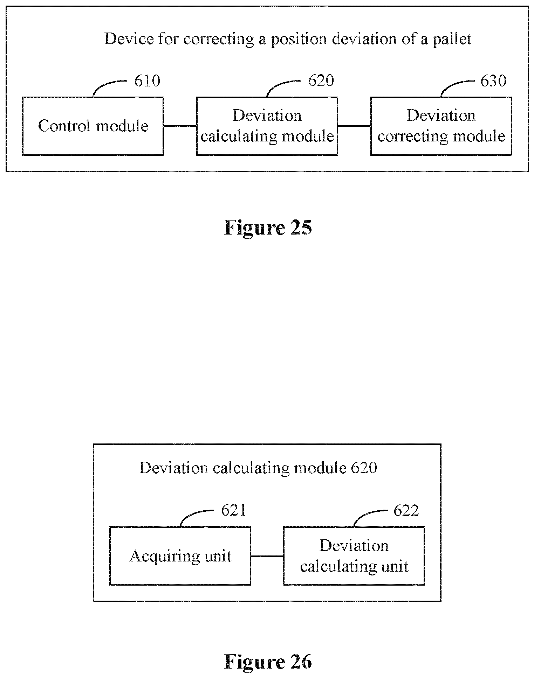

Reference is made to Figure 25, which is a structural block diagram of a device for correcting a position deviation of a pallet. The device includes a control module 610, a deviation calculating module 620, and a deviation correcting module 630.

The control module 610 is configured to control a gripping mechanism to take a pallet.

The deviation calculating module 620 is configured to acquire a deviation between the gripping mechanism and the pallet. The deviation includes a X-axis deviation, a Y-axis deviation, and an angle deviation.

The deviation correcting module 630 is configured to adjusting a moving distance of the movable device and/or a telescopic distance of the gripping mechanism and/or a rotation angle of the gripping mechanism, according to the deviation, to correct the deviation between the gripping mechanism and the pallet.

Reference is made to Figure 26, which is a structural block diagram of a deviation calculating module according to an embodiment. The deviation calculating module 620 includes an acquiring unit 621 and a deviation calculating unit 622.

The acquiring unit 621 is configured to acquire an image of a positioning identifier of the pallet.

The deviation calculating unit 622 is configured to compare the image of the positioning identifier with a standard image, to obtain the deviation between the gripping mechanism and the pallet.

For the specific definition of the device for correcting a position deviation of a pallet, reference may be made to the definition of the above method for correcting a position deviation of a pallet, and details are not described herein again. The modules in the above device for correcting a position deviation of a pallet may be implemented in whole or in part by software, hardware, and combinations thereof. Each of the above modules may be embedded in or independent of the processor in the computer device in a hardware form, or may be stored in a memory in the computer device in a software form, so that the processor may invoke the software to perform the operations corresponding to the above modules.

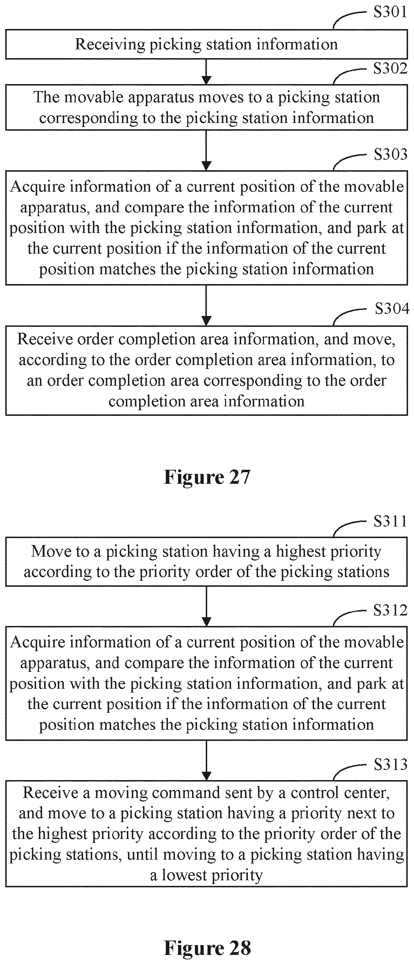

Reference is made to Figure 27, which shows a scheduling method according to the present disclosure, the method is used cause the charging vehicle and the movable device to move to a picking station corresponding to the charging vehicle and the movable device. The method includes the following steps S301 to S304.

In step S301, picking station information is received.

Specifically, the picking station information includes an X-axis coordinate and a Y-axis coordinate of a position of at least one picking station. In another embodiment, the picking station information includes a position serial number, the position serial number includes an X-axis coordinate and a Y-axis coordinate. The picking station information also includes a priority order of the picking stations. In a case that the picking station information includes the X-axis coordinate and the Y-axis coordinate of a position of one picking station, the one picking station is the picking station having the highest priority. In a case that the picking station information includes the X-axis coordinates and the Y-axis coordinates of positions of multiple picking stations, the movable apparatus moves to the picking stations according to the priority order of the picking stations. The order of the shortest distances to all the picking stations may be taken as the priority order, and the first picking station in the priority order is taken as the picking station having the highest priority. Alternatively, the order of the numbers of in-the-order goods included in all the picking stations may be taken as the priority order, and the picking station with the most in-the-order goods is taken as the picking station having the highest priority.

In step S302, the movable apparatus moves to a picking station corresponding to the picking station information.

Specifically, the movable apparatus moves to a picking station according to the X-axis coordinate and the Y-axis coordinate of the position of the picking station in the picking station information. In a case that the picking station information includes the X-axis coordinate and the Y-axis coordinate of a position of one picking station, the movable apparatus moves to the one picking station. In a case that the picking station information includes the X-axis coordinates and the Y-axis coordinates of positions of multiple picking stations, the movable apparatus moves to the picking stations according to the priority order of the picking stations.

Reference is made to Figure 28, which shows a method for moving to a picking station. The method includes the following steps S311 to S313.

In step S311, the movable apparatus moves to a picking station having the highest priority according to the priority order of the picking stations.

Specifically, the movable apparatus moves to a picking station according to the X-axis coordinate and the Y-axis coordinate of the position of the picking station in the picking station information. The picking station information includes the X-axis coordinates and the Y-axis coordinates of positions of multiple picking stations and the priority order of the picking stations. The movable apparatus preferentially moves to the picking station having a higher priority for picking. According to the priority order, the movable apparatus first goes to the picking station having the highest priority.

In step S312, information of a current position of the movable apparatus is acquired, and the information of the current position is compared with the picking station information, and the movable apparatus parks at the current position if the information of the current position matches the picking station information.

Specifically, after reaching the picking station having the highest priority, the movable apparatus compares the X-axis coordinate and the Y-axis coordinate of the current position with the X-axis coordinate and the Y-axis coordinate of the position of the picking station in the picking station information. If the X-axis coordinate and the Y-axis coordinate of the current position are the same as the X-axis coordinate and the Y-axis coordinate of the position of the picking station in the picking station information, the movable apparatus determines that the current position is the position of the picking station having the highest priority. If the X-axis coordinate and the Y-axis coordinate of the current position are not same as the X-axis coordinate and the Y-axis coordinate of the position of the picking station in the picking station information, the movable apparatus continues to move, until the X-axis coordinate and the Y-axis coordinate of the current position are the same as the X-axis coordinate and the Y-axis coordinate of the position of the picking station in the picking station information. In a case that the X-axis coordinate and the Y-axis coordinate of the current position are the same as the X-axis coordinate and the Y-axis coordinate of the position of the picking station in the picking station information, the movable apparatus parks at the current position and waits for the picker to pick the in-the-order goods in the current picking station to the movable apparatus.

In step S313, the movable apparatus receives a moving command sent by a control center, and moves to a picking station having a priority next to the highest priority according to the priority order of the picking stations, until the movable apparatus moves to a picking station having a lowest priority.

Specifically, after all the in-the-order goods, in the picking station having the highest priority, are picked to the movable apparatus, the picking station having the highest priority sends a completing message to the control center, and the control center sends a moving command to the movable apparatus again. After receiving the moving command, the movable apparatus moves to a picking station having a priority next to the highest priority according to the priority order of the picking stations. After reaching the picking station having the priority next to the highest priority, the movable apparatus first acquires the current position information of the movable apparatus, and compares the current position information with the position information of the picking station having the priority next to the highest priority. If the current position information of the movable apparatus is consistent with the position information of the picking station having the priority next to the highest priority, the movable apparatus parks at the current position and waits for the picker to pick goods. After completing picking goods, the picking station having the priority next to the highest priority sends a completing message to the control center, and the control center sends a moving command to the movable apparatus, then the movable apparatus moves to a picking station having a lower priority next to the current priority according to the priority order of the picking stations in the picking station information, until the movable apparatus moves to the picking station having the lowest priority.

With the above method for moving to the picking station, the order, according to which the movable apparatus moves to the picking stations, can be reasonably planned according to the priority order of the picking stations, thereby effectively improving the order completion efficiency.

In step S303, information of a current position of the movable apparatus is acquired, and the information of the current position is compared with the picking station information, and the movable apparatus parks at the current position if the information of the current position matches the picking station information.

Specifically, in a case that the picking station information includes the X-axis coordinate and the Y-axis coordinate of a position of one picking station, after reaching the position of the one picking station, the movable apparatus compares the X-axis coordinate and the Y-axis coordinate of the current position with the X-axis coordinate and the Y-axis coordinate of the position of the picking station in the picking station information. If the X-axis coordinate and the Y-axis coordinate of the current position are the same as the X-axis coordinate and the Y-axis coordinate of the position of the picking station in the picking station information, the movable apparatus determines that the current position is the position of the picking station. If the X-axis coordinate and the Y-axis coordinate of the current position are not the same as the X-axis coordinate and the Y-axis coordinate of the position of the picking station in the picking station information, the movable apparatus continues to move, until the X-axis coordinate and the Y-axis coordinate of the current position are the same as the X-axis coordinate and the Y-axis coordinate of the position of the picking station in the picking station information.

Specifically, in a case that the picking station information includes the X-axis coordinates and the Y-axis coordinates of positions of multiple picking stations, after reaching the position of the picking station, the movable apparatus compares the X-axis coordinate and the Y-axis coordinate of the current position with the X-axis coordinate and the Y-axis coordinate of the position of the picking station having the lowest priority in the picking station information. If the X-axis coordinate and the Y-axis coordinate of the current position are the same as the X-axis coordinate and the Y-axis coordinate of the position of the picking station having the lowest priority in the picking station information, the movable apparatus determines that the current position is the position of the picking station having the lowest priority. If the X-axis coordinate and the Y-axis coordinate of the current position are not the same as the X-axis coordinate and the Y-axis coordinate of the position of the picking station having the lowest priority in the picking station information, the movable apparatus continues to move, until the X-axis coordinate and the Y-axis coordinate of the current position are the same as the X-axis coordinate and the Y-axis coordinate of the position of the picking station having the lowest priority in the picking station information.

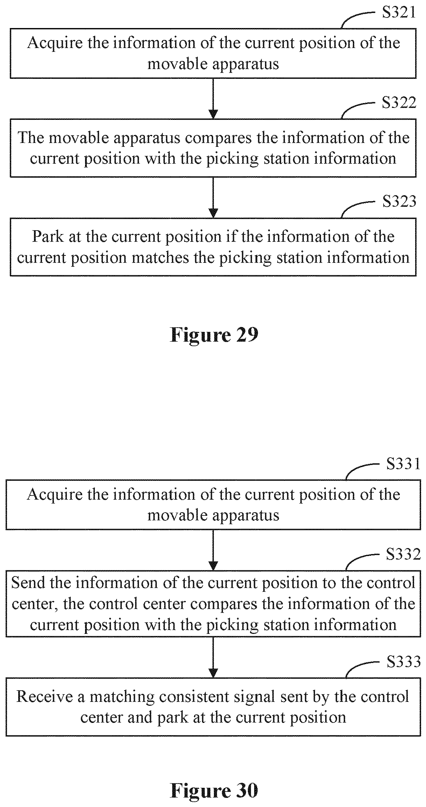

Reference is made to Figure 29, which show a method for matching a current position with a picking station position. The method includes the following steps S321 to S323.

In step S321, the information of the current position of the movable apparatus is acquired.

Specifically, the movable apparatus determines the information of the current position, including the X-axis coordinate and the Y-axis coordinate of the current position, by scanning the positioning identifier on the ground of the current position. The movable apparatus may also determine the information of the current position, including the X-axis coordinate and the Y-axis coordinate of the current position, by a positioning device carried by the movable apparatus.

In step S322, the movable apparatus compares the information of the current position with the picking station information.

Specifically, the movable apparatus compares the X-axis coordinate and the Y-axis coordinate of the current position with the X-axis coordinate and the Y-axis coordinate of the position of the picking station in the picking station information.

In step S323, the movable apparatus parks at the current position if the information of the current position matches the picking station information.

Specifically, if the X-axis coordinate and the Y-axis coordinate of the current position are the sane as the X-axis coordinate and the Y-axis coordinate of the position of the picking station in the picking station information, the movable apparatus parks at the current position and waits for the picker to pick goods into the movable apparatus. If the X-axis coordinate and the Y-axis coordinate of the current position are not the same as the X-axis coordinate and the Y-axis coordinate of the picking station in the picking station information, the movable apparatus continues to move and compare the coordinates, until the X-axis coordinate and the Y-axis coordinate of the current position are the same as the X-axis coordinate and the Y-axis coordinate of the picking station in the picking station information.

With the method for matching the current position with a position of the picking station, it can be accurately determined whether the current position is the position of the picking station where the goods is to be taken, and the accurate positioning can further improve the order completion efficiency.

Reference is made to Figure 30, which shows a method for matching a current position with a picking station position. The method includes the following steps S331 to S333.

In step S331, the information of the current position of the movable apparatus is acquired.

Specifically, the movable apparatus determines the information of the current position, including the X-axis coordinate and the Y-axis coordinate of the current position, by scanning the positioning identifier on the ground of the current position. The movable apparatus may also determine the information of the current position, including the X-axis coordinate and the Y-axis coordinate of the current position, by a positioning device carried by the movable apparatus.

In step S332, the information of the current position is sent to the control center, the control center compares the information of the current position with the picking station information.

Specifically, the movable apparatus sends the acquired X-axis coordinate and Y-axis coordinate of the current position to the control center, and the control center compares the X-axis coordinate and the Y-axis coordinate of the current position with the X-axis coordinate and the Y-axis coordinate of the position of the picking station in the picking station information, then the control center generates a comparison result and sends the comparison result to the movable apparatus.

In step S333, the movable apparatus receives a matching consistent signal sent by the control center and parks at the current position.

Specifically, if the comparison result sent by the control center is a matching consistent signal indicating that the information of the current position is consistent with the picking station information, the movable apparatus parks at the current position and waits for the picker to pick goods into the movable apparatus. If the comparison result sent by the control center indicates that the information of the current position is not consistent with the picking station information, the movable apparatus continues to move and the information of the current position is compared with the picking station information, until the movable apparatus receives the comparison result sent by the control center is the matching consistent signal.

With the method for matching the current position with a position of the picking station, it can be accurately determined whether the current position is the position of the picking station where the goods is to be taken, and the accurate positioning can further improve the order completion efficiency.

In step S304, the movable device receives order completion area information, and moves, according to the order completion area information, to an order completion area corresponding to the order completion area information.

Specifically, in a case that the picking station information includes the X-axis coordinate and the Y-axis coordinate of a position of one picking station, and after the movable apparatus completes picking goods from the current picking station, the picking station sends an order completion signal to the control center, then the control center sends the order completion area information to the movable apparatus. The order completion area information includes an X-axis coordinate and a Y-axis coordinate of the position of the order completion area. In another embodiment, the order completion area information includes a position serial number, the position serial number includes an X-axis coordinate and a Y-axis coordinate. The movable apparatus receives the order completion area information, and moves, according to the order completion area information, to the order completion area corresponding to the order completion area information for subsequent processing.

Specifically, in a case that the picking station information includes the X-axis coordinates and the Y-axis coordinates of positions of multiple picking stations, and after the movable apparatus completes picking goods from the picking station having the lowest priority, the picking station having the lowest priority sends an order completion signal to the control center, then the control center sends the order completion area information to the movable apparatus. The order completion area information includes an X-axis coordinate and a Y-axis coordinate of the position of the order completion area. The movable apparatus receives the order completion area information, and moves, according to the order completion area information, to the order completion area corresponding to the order completion area information for subsequent processing.

With the above scheduling method, the movable apparatus receives the picking station information, and moves to the picking station corresponding to the picking station information, then the movable apparatus acquires information of the current position and compares the information of the current position with the picking station information, and the movable apparatus parks at the current position and waits for picking goods if the information of the current position matches the picking station information. After receiving the order completion area information, the movable apparatus moves to the order completion area to package the goods. The movable apparatus of the picking system replaces the manpower for handling, thereby saving human resources and further improving the order completion efficiency.

It should be understood that although the steps in the flow charts in Figure 27 to Figure 30 are sequentially displayed as indicated by the arrows, these steps are not necessarily performed in the order indicated by the arrows. Except as explicitly stated herein, the execution of these steps is not strictly limited, and the steps may be performed in other orders. Moreover, at least some of the steps in Figure 27 to Figure 30 may include multiple sub-steps or multiple stages, which are unnecessarily performed at the same time, but may be performed at different times. The order of execution of these sub-steps or stages is unnecessarily performed sequentially, but may be performed alternately with other steps or at least a portion of sub-steps or stages of other steps.

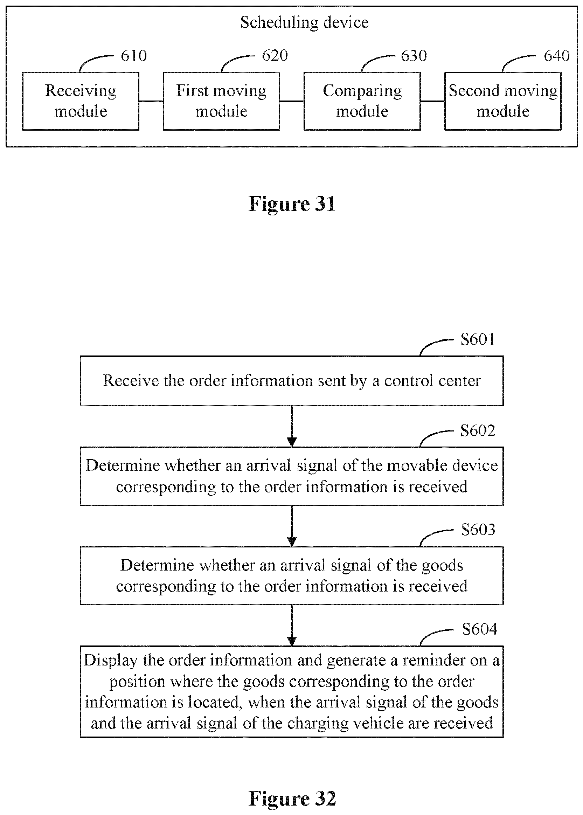

Reference is made to Figure 31, which is a picking device according to an embodiment. The device is a movable device, including a receiving module 610, a first moving module 620, a comparing module 630, and a second moving module 640.

The receiving module 610 is configured to receive picking station information.

The first moving module 620 is configured to cause the movable apparatus to move to a picking station corresponding to the picking station information.

The comparing module 630 is configured to acquire information of a current position of the movable apparatus, and compare the information of the current position with the picking station information, and cause the movable apparatus to park at the current position if the information of the current position matches the picking station information.

The second moving module 640 is configured to receive order completion area information, and move, according to the order completion area information, to an order completion area corresponding to the order completion area information.

Specifically, the picking station information includes an X-axis coordinate and a Y-axis coordinate of at least one picking station. The order completion area information includes an X-axis coordinate and a Y-axis coordinate of the position of the order completion area. The picking station information further includes a priority order of the picking stations.

More specifically, the first moving module is further configured to cause the movable apparatus to move sequentially to the picking stations according to the priority order of the picking stations.

Reference is made to Figure 32, which shows a method for generating a reminder for picking, with which the picking station generates a reminder based on the picking information. The method includes the following steps S601 to S604.

In step S601, the order information, sent by the control center, is received.

Specifically, each charging vehicle corresponds to a piece of order information, and the order information of the charging vehicle corresponds to a container. The charging vehicle, carrying the containers corresponding to order information, goes to the picking station for picking. The control center sends the position of the designated picking station to the charging vehicle, so that the charging vehicle goes to the designated picking station for picking. The control center sends order information to the picking reminding device of the designated picking station. The order information, sent by the control center, is received. The order information includes names of the goods, a quantity of the goods, a position of the container corresponding to the order, and pictures of the goods. The names of the goods include the names of all the goods in the current order, the quantity of the goods include the number of each kind of goods, and the pictures of the goods include the pictures of each kind of goods.

In step S602, it is determined whether an arrival signal of the charging vehicle corresponding to the order information is received.

Specifically, after receiving the order information sent by the control center, it is detected in a real time manner whether the arrival signal of the charging vehicle corresponding to the order information is received. The arrival signal may be sent by the charging vehicle corresponding to the order information. After arriving at the picking position of the picking station, the charging vehicle sends the arrival signal to the picking reminding device. The arrival signal may also be sent by the control center. After arriving at the picking position of the picking station, the charging vehicle sends feedback information of arriving at the designated position to the control center. After receiving the feedback information, the control center sends the arrival signal, of the charging vehicle corresponding to the order information, to the picking reminding device.

In step S603, it is determined whether an arrival signal of the goods corresponding to the order information is received.

Specifically, it is detected in a real time manner whether the picking station receives the arrival signal of the goods corresponding to the order information. The arrival signal of the goods is obtained after the goods in the order are transported to the picking station. It is determined whether the arrival signal of the goods is obtained.

In step S604, the order information is displayed and a reminder is generated on a position where the goods corresponding to the order information is located, when the arrival signal of the goods and the arrival signal of the charging vehicle are received.

Specifically, after the arrival signal of the goods and the arrival signal of the charging vehicle are detected, that is, after the arrival signal of the charging vehicle is received and the arrival signal of the goods is received, the order information is displayed on the display screen. The temporary storage cell of the shelf of the picking station stores the goods, and each temporary storage cell is provided with a reminding device. Preferably, the reminding device is a light. The reminder is generated on a temporary storage cell where the goods corresponding to the order information is located. That is, the light on the temporary storage cell corresponding to the order information is turned on to indicate that the temporary storage cell has the goods included in the order information.

According to the above method for generating a reminder for picking, the order information is received, and it is determined whether the charging vehicle corresponding to the order information reaches the picking station and whether the goods corresponding to the order information reaches the picking station. If both the charging vehicle corresponding to the order information and the goods corresponding to the order information reach the picking station, the order information is displayed and a reminder is generated on a temporary storage cell of the shelf where the goods corresponding to the order information is located. With the order information displayed on a large screen and the reminder on the temporary storage cell of the shelf where the goods corresponding to the order information is located, the picking efficiency can be improved, and the electronic display saves the use of paper orders and further saves resources.

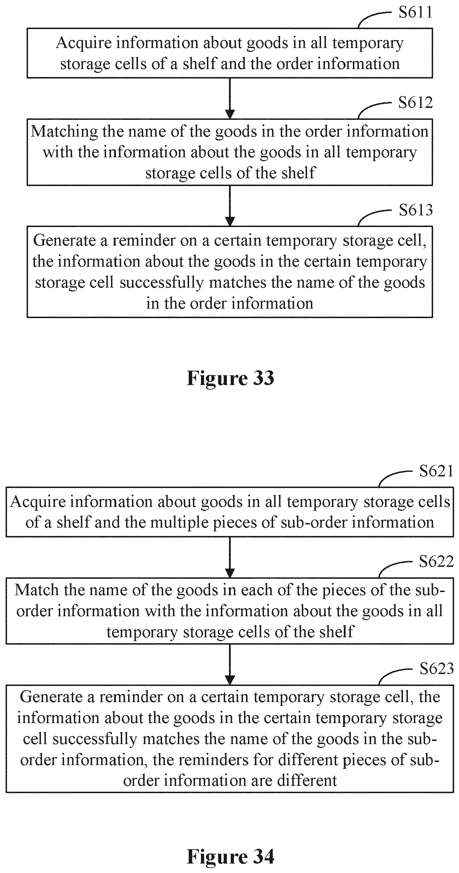

Reference is made to Figure 33, which shows a method for generating a reminder based on order information according to an embodiment. The method includes the following steps S611 to S613.

In step S611, information about goods in all temporary storage cells of a shelf and the order information are acquired.

Specifically, the temporary storage cells in the shelf of the picking station are used for storing goods, and the temporary storage cells include the temporary storage unit with goods and the temporary storage unit without goods. First, information about goods in all temporary storage cells is acquired. The information about goods includes: the name of the goods, the position of the goods in the shelf, the remaining quantity of the goods, and the picture of the goods. The order information includes: the name of the goods, the quantity of the goods, and the picture of the goods.

In step S612, the name of the goods in the order information is matched with the information about the goods in all temporary storage cells of the shelf.

Specifically, the names of all the goods in the order information are matched with the information about the goods in all temporary storage cells of the shelf. Specifically, the order information includes the names of all the goods in the current order, and the names of all the goods in the order information are matched with the information about the goods in the temporary storage cells respectively. The information about goods also includes the name of the goods, that is, the names of all the goods in the order information are matched with the name of the goods in the temporary storage cell.

In step S613, a reminder is generated on a certain temporary storage cell. The information about the goods in the certain temporary storage cell successfully matches the name of the goods in the order information.

Specifically, the reminder is generated on a temporary storage cell where the goods corresponding to the order information is located. A reminding device may be provided for each temporary storage cell. The reminder may be a light reminder with different colors, and the reminder is generated by turning on the light. If there is only one order, the reminders for all the goods may be lights with the same color. The reminders for all the goods may be lights with different colors.

With the above method for generating a reminder based on order information, a reminder may be generated on a temporary storage cell of the shelf where the goods corresponding to the order information is located, thereby improving the picking efficiency.

Reference is made to Figure 34, which shows a method for generating a reminder based on order information according to another embodiment of the present disclosure, the order information includes multiple pieces of sub-order information. The method includes the following steps S621 to S623.

In step S621, information about goods in all temporary storage cells of a shelf and the multiple pieces of sub-order information are acquired.

Specifically, the temporary storage cells in the shelf of the picking station are used for storing goods, and the temporary storage cells include the temporary storage unit with goods and the temporary storage unit without goods. First, information about goods in all temporary storage cells is acquired. The information about goods includes: the name of the goods, the position of the goods in the shelf, the remaining quantity of the goods, and the picture of the goods. The order information includes multiple pieces of sub-order information, and the sub-order information includes: the name of the goods, the quantity of the goods, and the picture of the goods.

In step S622, the name of the goods in each of the pieces of the sub-order information is matched with the information about the goods in all temporary storage cells of the shelf.

Specifically, the names of all the goods in each piece of the sub-order information are matched with the information about the goods in all temporary storage cells of the shelf. Specifically, the sub-order information includes the names of all the goods in the current order, and the names of all the goods in the sub-order information are matched with the information about the goods in the temporary storage cells respectively. The information about goods also includes the name of the goods, that is, the names of all the goods in the order information are matched with the name of the goods in the temporary storage cell.

In step S623, a reminder is generated on a certain temporary storage cell, the information about the goods in the certain temporary storage cell successfully matches the name of the goods in the sub-order information, the reminders for different pieces of sub-order information are different.

Specifically, the reminder is generated on a temporary storage cell where the goods corresponding to each piece of sub-order information is located. The reminders for the goods in different pieces of sub-order information may be lights with different colors. The reminders for the goods in the same pieces of sub-order information may be lights with the same color.

With the above method for generating a reminder based on order information, in a case that multiple sub-orders are received at a time, the reminders for the goods in different sub-orders may be generated by using lights with different colors, thereby improving the picking efficiency.

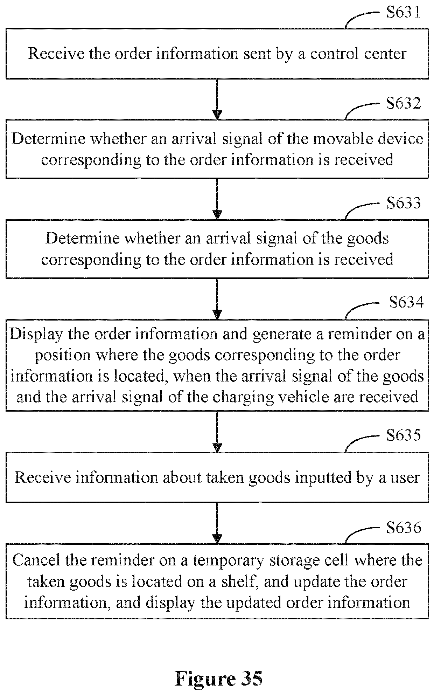

Reference is made to Figure 35, which shows a method for generating a reminder for picking goods according to an embodiment. The method includes the following steps S631 to S635.

In step S631, the order information, sent by the control center, is received.

Specifically, each charging vehicle corresponds to a piece of order information, and the order information of the charging vehicle corresponds to a container. The charging vehicle, carrying the containers corresponding to order information, goes to the picking station for picking. The control center sends the position of the designated picking station to the charging vehicle, so that the charging vehicle goes to the designated picking station for picking. The control center sends order information to the picking reminding device of the designated picking station. The order information, sent by the control center, is received. The order information includes names of the goods, a quantity of the goods, and pictures of the goods. The names of the goods include the names of all the goods in the current order, the quantity of the goods include the number of each kind of goods, and the pictures of the goods include the pictures of each kind of goods.

In step S632, it is determined whether an arrival signal of the charging vehicle corresponding to the order information is received.

Specifically, after receiving the order information sent by the control center, it is detected in a real time manner whether the arrival signal of the charging vehicle corresponding to the order information is received. The arrival signal may be sent by the charging vehicle corresponding to the order information. After arriving at the picking position of the picking station, the charging vehicle sends the arrival signal to the picking reminding device. The arrival signal may also be sent by the control center. After arriving at the picking position of the picking station, the charging vehicle sends feedback information of arriving at the designated position to the control center. After receiving the feedback information, the control center sends the arrival signal, of the charging vehicle corresponding to the order information, to the picking reminding device.

In step S633, it is determined whether an arrival signal of the goods corresponding to the order information is received.

Specifically, it is detected in a real time manner whether the picking station receives the arrival signal of the goods corresponding to the order information. The arrival signal of the goods is obtained after the goods in the order are transported to the picking station. It is determined whether the arrival signal of the goods is obtained.

In step S634, the order information is displayed and a reminder is generated on a position where the goods corresponding to the order information is located, when the arrival signal of the goods and the arrival signal of the charging vehicle are received.

Specifically, after the arrival signal of the goods and the arrival signal of the charging vehicle are detected, that is, after the arrival signal of the charging vehicle is received and the arrival signal of the goods is received, the order information is displayed on the display screen. The goods information of the temporary storage cell corresponding to the goods in the order information may also be displayed on the display screen. The temporary storage cell of the shelf of the picking station stores the goods, and each temporary storage cell is provided with a reminding device. Preferably, the reminding device is a light. The reminder is generated on a temporary storage cell where the goods corresponding to the order information is located. That is, the light on the temporary storage cell corresponding to the order information is turned on to indicate that the temporary storage cell has the goods included in the order information.

In step S634, information about taken goods, inputted by a user, is received.

Specifically, after taking away the goods in the temporary storage cell where the reminder is generated, the picker inputs information about taken goods into the picking reminding device. Specifically, the temporary storage cell is provided with a button, and after the picker completes the picking of the current goods, the picker presses the button on the temporary storage cell where the current goods is placed, to indicate that the current goods are taken. The picker may also scan the taken goods with a scanning device to indicate that the current goods are taken. The picker may also input the information about taken goods with an inputting device.

In step S635, the reminder on a temporary storage cell where the taken goods is located on a shelf is cancelled, and the order information is updated and the updated order information is displayed.

Specifically, the reminder on a temporary storage cell where the taken goods is located is cancelled. That is, the light on the temporary storage cell where the taken goods is located is turned off. The order information is updated, and the taken goods in the original order information is deleted. The order information, in which the taken goods is deleted, is taken as the updated order information. The updated order information is displayed on the display screen.

After picking the goods of the order on a charging vehicle, the picking station may continue to receive the next charging vehicle, and pick goods according to the order on the next charging vehicle. The above process is repeated, and the order on the charging vehicle is continuously completed.

With the above method for generating a reminder based on order information, the picking efficiency is improved, and the electronic display saves the use of paper orders and further saves resources.

It should be understood that although the steps in the flow charts in Figure 32 to Figure 35 are sequentially displayed as indicated by the arrows, these steps are not necessarily performed in the order indicated by the arrows. Except as explicitly stated herein, the execution of these steps is not strictly limited, and the steps may be performed in other orders. Moreover, at least some of the steps in Figure 32 to Figure 35 may include multiple sub-steps or multiple stages, which are unnecessarily performed at the same time, but may be performed at different times. The order of execution of these sub-steps or stages is unnecessarily performed sequentially, but may be performed alternately with other steps or at least a portion of sub-steps or stages of other steps.

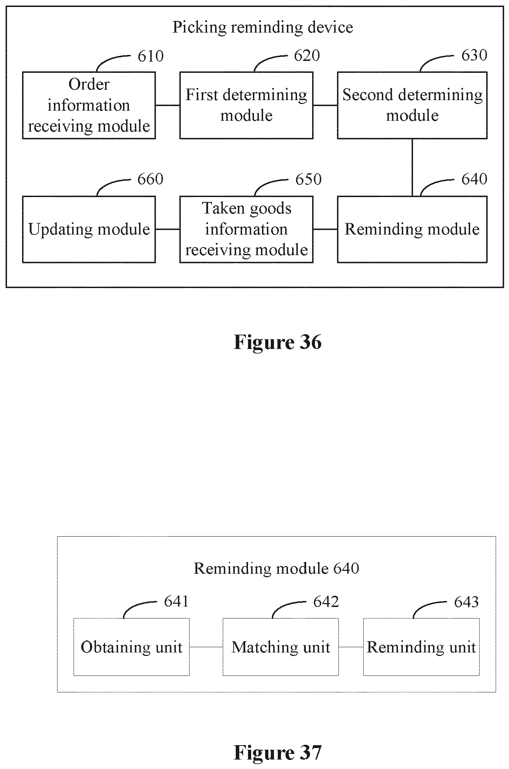

Reference is made to Figure 36, which is a structural block diagram of a picking reminding device according to an embodiment. The device includes an order information receiving module 610, a first determining module 620, a second determining module 630, and a reminding module 640.

The order information receiving module 610 is configured to receive the order information sent by a control center.

The first determining module 620 is configured to determine whether an arrival signal of the charging vehicle corresponding to the order information is received.

The second determining module 630 is configured to determine whether an arrival signal of the goods corresponding to the order information is received.

The reminding module 640 is configured to display the order information and generate a reminder on a position where the goods corresponding to the order information is located, when the arrival signal of the goods and the arrival signal of the charging vehicle are received.

Reference is made to Figure 37, which is a structural block diagram of a reminding module according to an embodiment. The reminding module 640 includes an obtaining unit 641, a matching unit 642, and a reminding unit 643.

The obtaining unit 641 is configured to acquire information about goods in all temporary storage cells of a shelf and the order information.

The matching unit 642 is configured to match the name of the goods in the order information with the information about the goods in all temporary storage cells of the shelf.

The reminding unit 643 is configured to generate a reminder on a certain temporary storage cell, the information about the goods in the certain temporary storage cell successfully matches the name of the goods in the order information.

The picking reminding device further includes: a taken goods information receiving module 650, and an updating module 660.

The taken goods information receiving module 650 is configured to receive information about taken goods inputted by a user.

The updating module 660 is configured to cancel the reminder on a temporary storage cell where the taken goods is located on a shelf, and update the order information, and display the updated order information.

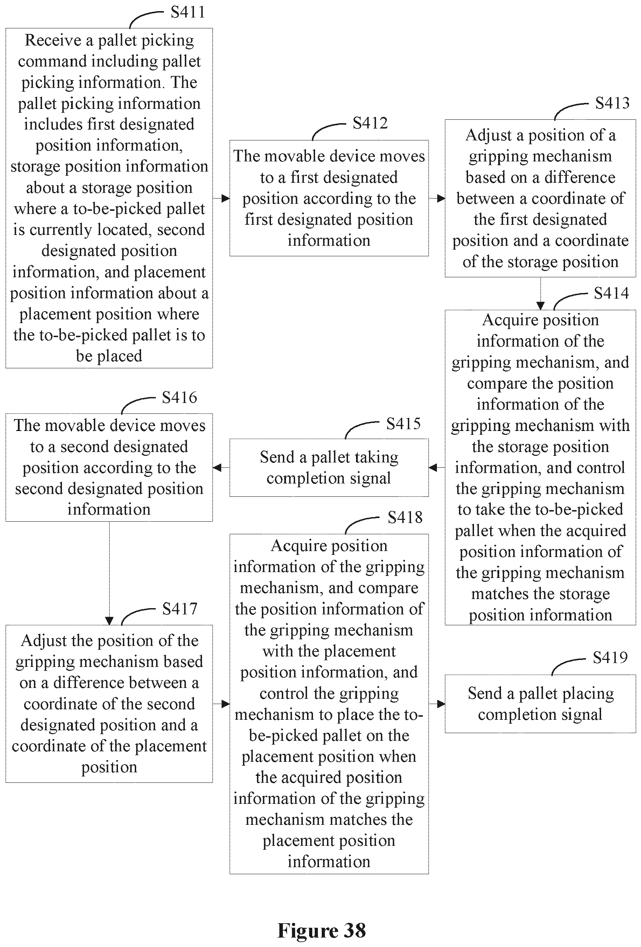

Reference is made to Figure 38, which is a schematic flow chart of a method for picking a pallet according to another embodiment of the present disclosure. With the method, after the goods at the picking station are picked, the remaining goods are moved to other areas. In the present embodiment, the method for picking a pallet is applied to a movable device, the movable device includes a gripping mechanism capable of adjusting the position of the gripping mechanism, and the pallet is capable of storing goods.

In the present embodiment, the method for picking a pallet includes the following steps S411 to S419.

In step S411, a pallet picking command is received. The pallet picking command includes pallet picking information. The pallet picking information includes first designated position information, storage position information about a storage position where a to-be-picked pallet is currently located, second designated position information, and placement position information about a placement position where the to-be-picked pallet is to be placed.

In the present embodiment, the control center, after receiving a feedback signal that the goods in a certain pallet are picked, sends a pallet picking command to the movable device. The pallet picking command includes pallet picking information. The pallet picking information includes first designated position information, storage position information about a storage position where a to-be-picked pallet is currently located, second designated position information, and placement position information about a placement position where the to-be-picked pallet is to be placed. In the present embodiment, the storage position information of the to-be-picked pallet includes the position coordinate of the to-be-picked pallet, that is, the X-axis coordinate, Y-axis coordinate, and Z-axis coordinate of the to-be-picked pallet in the warehouse.

In the present embodiment, the pallet picking information includes one piece of pallet taking information and one piece of pallet placing information. The pallet taking information includes the first designated position information and the storage position information about a storage position where the to-be-picked pallet is currently located. The pallet placing information includes the second designated position information and the placement position information about a placement position where the to-be-picked pallet is to be placed.

In another embodiment, the pallet picking information includes multiple pieces of pallet taking information and multiple pieces of pallet placing information. Each piece of the pallet taking information includes one piece of the first designated position information and one piece of the storage position information about a storage position where the to-be-picked pallet is currently located. Each piece of the pallet placing information includes one piece of the second designated position information and one piece of the placement position information about a placement position where the to-be-picked pallet is to be placed.

In the present embodiment, the placement position information of the to-be-picked pallet includes the coordinate of a position. Specifically, the placement position information includes the coordinate of a storage cell of a storage area, that is, the X-axis coordinate, the Y-axis coordinate, and the Z-axis coordinate of the storage cell of the storage area in the warehouse. After the movable device takes the to-be-picked pallet, the to-be-picked pallet is placed in the storage cell of the storage area according to the placement position information.

In the present embodiment, the first designated position information includes the coordinate of a position corresponding to the storage position information, that is, the X-axis coordinate, the Y-axis coordinate, and the Z-axis coordinate of a first designated position in the warehouse. Specifically, the first designated position is a position of the aisle in front of a temporary storage cell of a picking station where the to-be-picked pallet is located.

In the present embodiment, the second designated position information includes the coordinate of a position corresponding to the placement position information, that is, the X-axis coordinate, the Y-axis coordinate, and the Z-axis coordinate of a second designated position in the warehouse. Specifically, the second designated position is a position of the aisle in front of the storage position of the storage area.

Specifically, there is a difference between the coordinate of the first designated position and the coordinate of the storage position, and there is a difference between the coordinate of the second designated position and the coordinate of the placement position. The differences in the X-axis coordinates and the Y-axis coordinates between the first designated position and the storage position are constant values, and the difference in the Z-axis coordinates between the first designated position and the storage position is a variable value. The differences in the X-axis coordinates and the Y-axis coordinates between the second designated position and the placement position are constant values, and the difference in the Z-axis coordinates between the second designated position and the placement position is a variable value.

In another embodiment, the first designated position information, the storage position information of the to-be-picked pallet, the second designated position information, and the placement position information of the to-be-picked pallet may be a serial number of the position where the pallet, the storage cell, or the temporary storage cell are located. The serial number of the position corresponds to the X-axis coordinate, the Y-axis coordinate, and the Z-axis coordinate of the position.

In step S412, the movable device moves to a first designated position according to the first designated position information.

In the present embodiment, after receiving the pallet picking information, the movable device moves to the first designated position according to the first designated position information in the pallet picking information. The positioning unit of the movable device performs a positioning operation to acquire position information. The position information includes the X-axis coordinate and the Y-axis coordinate of the position where the movable device is current located, and the movable device compares the acquired position information with the coordinate of the first designated position. If the acquired position information matches the coordinate of the first designated position, the next step is performed. If the acquired position information does not match the coordinate of the first designated position, the movable device continues to move and perform the positioning operation and the comparison operation again, until the movable device reaches the first designated position.

In another embodiment, after receiving the pallet picking information, the movable device moves to the first designated position according to the first designated position information in the pallet picking information. The positioning unit of the movable device performs a positioning operation to acquire position information. The position information includes the X-axis coordinate and the Y-axis coordinate of the position where the movable device is current located, and the movable device feeds the acquired position information back to the control center, and then the control center compares the acquired position information with the coordinate of the first designated position. If the acquired position information matches the coordinate of the first designated position, the control center sends a command of adjusting the gripping mechanism to the movable device, and the movable device receives the command to perform the next step. If the acquired position information does not match the coordinate of the first designated position, the movable device continues to move and perform the positioning operation again, and the comparison operation is performed again, until the movable device reaches the first designated position.

In step S413, a position of a gripping mechanism is adjusted based on a difference between a coordinate of the first designated position and a coordinate of the storage position.

In the present embodiment, the shelf of the picking station containing the to-be-picked pallet includes multiple layers of temporary storage cells. The storage position information further includes the height information of the to-be-picked pallet. The difference between the coordinate of the first designated position and the coordinate of the storage position in the Z-axis direction is the difference between the height of the gripping mechanism and the height of the to-be-picked pallet. The movable device adjusts the position of the gripping mechanism based on the difference. Specifically, in an initial state, the gripping mechanism faces to the moving direction of the movable device, and when the position of the gripping mechanism is initially adjusted, the gripping mechanism is controlled to rotate by 90 degrees to face to the direction of the to-be-picked pallet, and then the gripping mechanism is controlled to move upwards or downwards to the position of the height of the to-be-picked pallet.

In the present embodiment, the gripping mechanism is a fork tooth.

In step S414, position information of the gripping mechanism is acquired, and the position information of the gripping mechanism is compared with the storage position information, and the gripping mechanism is controlled to take the to-be-picked pallet when the acquired position information of the gripping mechanism matches the storage position information.

In the present embodiment, the position information of the gripping mechanism is acquired and compared with the height information in the storage position information, and when the acquired position information of the gripping mechanism matches the height information, the gripping mechanism is controlled to extend to take the to-be-picked pallet from the temporary storage cell of the shelf to the storage unit of the movable device.

In the present embodiment, the height, for which the gripping mechanism moves upwards, may be acquired by acquiring a rotation amount of a motor that drives the gripping mechanism to move upwards, thereby acquiring the position information of the gripping mechanism. In another embodiment, each layer of the shelf is provided with a positioning identifier, and the position information of the gripping mechanism may be determined by identifying the positioning identifier.

Specifically, the comparison may be performed by the control unit of the movable device, or may be performed by the control center.

In step S415, a pallet taking completion signal is sent.

Specifically, the movable device sends a pallet taking completion signal to the control center after taking the to-be-picked pallet from the temporary storage cell of the shelf in the picking station to the storage unit of the movable device. In the present embodiment, the pallet taking completion signal includes the position information of the storage unit, where the to-be-picked pallet is located, of the movable device.

In the embodiment in which the pallet picking information includes one piece of pallet taking information and one piece of pallet placing information, the movable device sends the pallet taking completion signal to the control center, after the movable device takes a pallet in the pallet taking information.

In the embodiment in which the pallet picking information includes multiple pieces of pallet taking information and multiple pieces of pallet placing information, the movable device sends the pallet taking completion signal to the control center after taking the pallet in one piece of pallet taking information, then the movable device continues to take the next pallet in the next piece of pallet taking information, until the movable device takes away all the pallets in the multiple pieces of pallet taking information in the pallet picking information, then the movable device performs the next step.

In step S416, the movable device moves to a second designated position according to the second designated position information.

In the present embodiment, the movable device moves to the second designated position according to the second designated position information in the pallet picking information, after the movable device takes the to-be-picked pallet to a storage unit. The positioning unit of the movable device performs a positioning operation to acquire position information. The position information includes the X-axis coordinate and the Y-axis coordinate of the position where the movable device is current located, and the movable device feeds the acquired position information back to the control center, and then the control center compares the acquired position information with the coordinate of the second designated position. If the acquired position information matches the coordinate of the second designated position, the control center sends a command of adjusting the gripping mechanism to the movable device, and the movable device receives the command to perform the next step. If the acquired position information does not match the coordinate of the second designated position, the movable device continues to move and perform the positioning operation again, and the comparison operation is performed again, until the movable device reaches the second designated position.

In another embodiment, the comparison operation performed on the position information of the movable device and the coordinate of the second designated position may also be performed by the control center.

In step S417, the position of the gripping mechanism is adjusted based on a difference between a coordinate of the second designated position and a coordinate of the placement position.

In the present embodiment, the shelf of the storage area includes multiple storage units, and each of the storage units includes multiple layers of storage cells. When the movable device moves to the second designated position, the gripping mechanism takes the to-be-picked pallet out of the storage unit of the movable device, and the movable device adjusts the position of the gripping mechanism based on the difference. Specifically, in an initial state, the gripping mechanism faces to the moving direction of the movable device, and when the position of the gripping mechanism is initially adjusted, the gripping mechanism is controlled to rotate by 90 degrees to face to the direction of the placement position, and then the gripping mechanism is controlled to move upwards or downwards to the position of the height of the placement position.

In step S418, position information of the gripping mechanism is acquired, and the position information of the gripping mechanism is compared with the placement position information, and the gripping mechanism is controlled to place the to-be-picked pallet on the placement position when the acquired position information of the gripping mechanism matches the placement position information.

In the present embodiment, the position information of the gripping mechanism is acquired and compared with the height information in the placement position information, and when the acquired position information of the gripping mechanism matches the placement position information, the gripping mechanism is controlled to extend to put the to-be-picked pallet on the gripping mechanism in the placement position, that is, in the storage cell of the storage area.

Specifically, the comparison may be performed by the control unit of the movable device, or may be performed by the control center.

In step S419, a pallet placing completion signal is sent.

Specifically, the movable device sends a pallet placing completion signal to the control center after taking the to-be-picked pallet from the storage unit to the storage cell of the storage area.

In the embodiment in which the pallet picking information includes one piece of pallet taking information and one piece of pallet placing information, the movable device sends the pallet placing completion signal to the control center, after the movable device places the pallet in the pallet placing information in the storage cell of the storage area.

In the embodiment in which the pallet picking information includes multiple pieces of pallet taking information and multiple pieces of pallet placing information, the movable device sends the pallet taking completion signal to the control center after placing the to-be-picked pallet in one piece of pallet placing information in the storage cell of the storage area, then the movable device continues to place the next to-be-picked pallet in the next pieces of pallet placing information in the storage cell of the storage area, until the movable device places all the pallets in the multiple pieces of pallet placing information, of the pallet picking information, in the storage cell of the storage area.

For example, in a case that the coordinate of the temporary storage cell in the picking station, where the to-be-picked pallet is located, is (50, 50, 5), then the storage position coordinate of the to-be-picked pallet is (50, 50, 5). The coordinate of the position of the aisle in front of the temporary storage cell in the picking station, where the to-be-picked pallet is located, is (51, 50, 0), then the coordinate of the first designated position is (51, 50, 0). The coordinate of the storage cell of the storage area, where the to-be-picked pallet is to be placed, is (10, 10, 8), then the coordinates of the placement position is (10, 10, 8). The coordinate of the position of the aisle in front of the storage cell of the storage area is (11, 10, 0), then the coordinate of the second designated position is (11, 10, 0). After receiving the pallet picking command, the movable device goes to the first designated position (51, 50, 0), and after the movable device reaches the first designated position, the coordinate of the gripping mechanism is (51, 50, 0). There is a distance between the gripping mechanism and the to-be-picked pallet on the X-axis and the Z-axis, so the grasping mechanism rotates by 90 degrees towards the direction of the to-be-picked pallet, then moves upwards for 5 length units to reach the height of the to-be-picked pallet, and then extends to reach the storage position (50, 50, 5) of the to-be-picked pallet. After reaching the position, the gripping mechanism takes the to-be-picked pallet to the storage unit of the movable device. After taking the to-be-picked pallet, the movable device goes to the storage cell of the storage area where the to-be-picked pallet is to be placed. The movable device first reaches the second designated position (11, 10, 0), then the gripping mechanism takes out the to-be-picked pallet from the storage unit, where the coordinate of the grasping mechanism is (11, 10, 0). There is a distance between the gripping mechanism and the storage cell on the X-axis and the Z-axis, so the grasping mechanism carrying the to-be-picked pallet rotates by 90 degrees towards the direction of the storage cell, and moves upwards for 8 length units to reach the height of the storage cell, and then extends to reach the placement position (10, 10, 8). After reaching the position, the gripping mechanism places the to-be-picked pallet to the storage cell, and retracts.

Reference is made to Figure 39, which shows a method for comparing position information of the gripping mechanism with storage position information and controlling the gripping mechanism to take a to-be-picked pallet, according to an embodiment. The method includes the following steps S421 to S423.

In step S421, the position information of the gripping mechanism is acquired.

In the present embodiment, the height, for which the gripping mechanism moves upwards, may be acquired by acquiring a rotation amount of a motor that drives the gripping mechanism to move upwards, thereby acquiring the position information of the gripping mechanism. In another embodiment, each layer of the shelf is provided with a positioning identifier, and the position information of the gripping mechanism may be determined by identifying the positioning identifier.

In step S422, the movable device compares the position information of the gripping mechanism with the storage position information.

In the present embodiment, the movable device inputs the acquired position information of the gripping mechanism and storage position information into a control unit of the movable device. The control unit compares the position information of the gripping mechanism with the height information in the storage position information. If the position information of the gripping mechanism matches the height information, the control unit outputs a pallet taking command.

In step S423, the gripping mechanism is controlled to take the to-be-picked pallet when the acquired position information of the gripping mechanism matches the storage position information.

In a case that the acquired position information of the gripping mechanism matches the storage position information, the control unit outputs a pallet taking command to control the gripping mechanism to extend to take the to-be-picked pallet from the temporary storage cell of the shelf to the storage unit of the movable device.

Reference is made to Figure 40, which shows a method for comparing position information of the gripping mechanism with storage position information and controlling the gripping mechanism to take a to-be-picked pallet, according to another embodiment. The method includes the following steps S431 to S434.

In step S431, the position information of the gripping mechanism is acquired.

In the present embodiment, the height, for which the gripping mechanism moves upwards, may be acquired by acquiring a rotation amount of a motor that drives the gripping mechanism to move upwards, thereby acquiring the position information of the gripping mechanism. In another embodiment, each layer of the shelf is provided with a positioning identifier, and the position information of the gripping mechanism may be determined by identifying the positioning identifier.

In step S432, the position information of the gripping mechanism is sent to a control center, the control center compares the position information of the gripping mechanism with the storage position information to generate a pallet taking command.

In the present embodiment, the movable device sends the acquired position information of the gripping mechanism to the control center, and then the control center compares the position information of the gripping mechanism with the height information in the storage position information. If the position information of the gripping mechanism matches the height information, the control center generates a pallet taking command and sends the pallet taking command to the movable device.

In step S433, the pallet taking command sent by the control center is received.

In the present embodiment, the movable device receives the pallet taking command sent by the control center.

In step S434, the gripping mechanism is controlled to take the to-be-picked pallet.

In the present embodiment, after receiving the pallet taking command sent by the control center, the movable device controls the gripping mechanism to extend to take the to-be-picked pallet from the temporary storage cell of the shelf to the storage unit of the movable device.

In the present embodiment, the position information of the gripping mechanism is acquired and compared with the placement position information, and in a case that the acquired position information of the gripping mechanism matches the placement position information, the step of controlling the gripping mechanism to place the pallet also includes comparing the position information of the gripping mechanism with the placement position information by the control unit or the control center.

Reference is made to Figure 41, which shows a method for picking a pallet according to an embodiment. The method includes the following steps S441 to S443.

In step S441, a goods picking completion signal is received.

In the present embodiment, after the goods in one order are picked, the movable device, responsible for the picking for the one order, feeds a goods picking completion signal to the control center, and the control center receives the goods picking completion signal.

In step S442, a pallet picking command is sent to the movable device in response to the goods picking completion signal, to control the movable device to pick a pallet.

In the present embodiment, after receiving the goods picking completion signal, the control center sends a pallet picking command to the movable device to control the movable device to pick the pallet.

In step S443, a pallet taking completion signal and a pallet placing completion signal, sent from the movable device, are received.

In the present embodiment, after the control center sends the pallet picking command to the movable device, the movable device performs the pallet picking command as follows. After the movable device takes out the to-be-picked pallet from the temporary storage cell of the shelf of the picking station, and places the to-be-picked pallet in the storage unit of the movable device, the movable device feeds a pallet taking completion signal to the control center. After the movable device takes out the to-be-picked pallet from the storage unit of the movable device, and places the to-be-picked pallet in the storage cell of the shelf of the storage area, the movable device feeds a pallet placing completion signal to the control center. The control center receives the pallet taking completion signal and the pallet placing completion signal.

Reference is made to Figure 42, which shows an execution terminal of a pallet picking system according to an embodiment. The execution terminal includes a first receiving module 500, a first moving module 510, a first adjusting module 520, a pallet taking control module 530, a first feedback module 540, a second moving module 550, a second adjusting module 560, a pallet placing control module 570, and a second feedback module 580.

The first receiving module 500 is configured to receive a pallet picking command including pallet picking information. The pallet picking information includes first designated position information, storage position information about a storage position where a to-be-picked pallet is currently located, second designated position information, and placement position information about a placement position where the to-be-picked pallet is to be placed.

The first moving module 510 is configured to cause the movable device to move to a first designated position according to the first designated position information.

The first adjusting module 520 is configured to adjust a position of a gripping mechanism based on a difference between a coordinate of the first designated position and a coordinate of the storage position.

The pallet taking control module 530 is configured to acquire position information of the gripping mechanism, and compare the position information of the gripping mechanism with the storage position information, and control the gripping mechanism to take the to-be-picked pallet when the acquired position information of the gripping mechanism matches the storage position information.

The first feedback module 540 is configured to send a pallet taking completion signal.

The second moving module 550 is configured to cause the movable device to move to a second designated position according to the second designated position information.

The second adjusting module 560 is configured to adjust the position of the gripping mechanism based on a difference between a coordinate of the second designated position and a coordinate of the placement position.

The pallet placing control module 570 is configured to acquire position information of the gripping mechanism, and compare the position information of the gripping mechanism with the placement position information, and control the gripping mechanism to place the to-be-picked pallet on the placement position when the acquired position information of the gripping mechanism matches the placement position information.

The second feedback module 580 is configured to send a pallet placing completion signal.

In an embodiment, a pallet taking control module is provided, which includes a first acquiring unit, a comparing unit, and a first pallet taking control unit.

The first acquiring unit is configured to acquire the position information of the gripping mechanism.

The comparing unit is configured to compare the position information of the gripping mechanism with the storage position information in the movable device.

The first pallet taking control unit is configured to control the gripping mechanism to take the to-be-picked pallet when the acquired position information of the gripping mechanism matches the storage position information.

In another embodiment, a pallet taking control module is provided, which includes a second acquiring unit, a feedback unit, a receiving unit, and a second pallet taking control unit.

The second acquiring unit is configured to acquire the position information of the gripping mechanism.

The feedback unit is configured to send the position information of the gripping mechanism to a control center. The control center compares the position information of the gripping mechanism with the storage position information to generate a pallet taking command.

The receiving unit is configured to receive the pallet taking command sent by the control center.

The second pallet taking control unit is configured to control the gripping mechanism to take the to-be-picked pallet.

Reference is made to Figure 43, which shows a control terminal of the pallet picking system according to an embodiment. The control terminal includes a second receiving module 800, a command sending module 810, and a third receiving module 820.

The second receiving module 800 is configured to receive a goods picking completion signal.

The command sending module 810 is configured to send a pallet picking command to the movable device in response to the goods picking completion signal, to control the movable device to pick a pallet.

The third receiving module 820 is configured to receive a pallet taking completion signal and a pallet placing completion signal sent from the movable device.

Reference is made to Figure 44, which is a schematic flow chart of a method for replenishing according to an embodiment of the present disclosure. In the present embodiment, the method for replenishing is applied to a movable device, and the movable device includes a gripping mechanism capable of adjusting the position of the gripping mechanism. The method for replenishing is used for the above replenishing process in a low-frequency picking area.

In the present embodiment, the method for replenishing includes the following steps S501 to S518.

In step S501, a pallet replenishing command including pallet replenishing information is received. The pallet replenishing information includes first designated position information, first storage position information about a first storage position where a to-be-replenished pallet is currently located, second designated position information, and first placement position information about a first placement position where the to-be-replenished pallet is to be placed.

In the present embodiment, the control center receives a placing signal when each goods is placed in the storage area, and the control center counts when the control center receives the placing signal, so that the quantity of the goods stored in the storage area may be acquired. The control center receives a taking signal when each goods is taken away from the picking station, and the control center counts when the control center receives the taking signal, so that the quantity of the goods taken away may be acquired. Therefore, the quantity of the existing goods in the warehouse, that is, the inventory information, may be acquired by subtracting the quantity of the goods taken away from the quantity of goods stored in the storage area. If the quantity of existing goods in the warehouse is less than a preset threshold, the control center generates an inventory insufficient signal, and sends a pallet replenishing command to the movable device based on the inventory insufficient signal. The pallet replenishing command includes pallet replenishing information. The pallet replenishing information includes first designated position information, first storage position information about a first storage position where a to-be-replenished pallet is currently located, second designated position information, and first placement position information about a first placement position where the to-be-replenished pallet is to be placed. In the present embodiment, the first storage position information of the to-be-replenished pallet includes the coordinate of the position of the to-be-replenished pallet in the storage area, that is, the x-axis coordinate, y-axis coordinate, and z-axis coordinate of the to-be-replenished pallet in the warehouse.

In the present embodiment, the pallet replenishing information includes one piece of pallet taking information and one piece of pallet reaching information. The pallet taking information includes the first designated position information and the first storage position information about a first storage position where a to-be-replenished pallet is currently located. The pallet reaching information includes the second designated position information and the first placement position information about a first placement position where the to-be-replenished pallet is to be placed.

In another embodiment, the pallet replenishing information includes multiple pieces of pallet taking information and multiple pieces of pallet reaching information. Each piece of the pallet taking information includes one piece of the designated position information and one piece of the storage position information of the to-be-replenished pallet. Each piece of the pallet reaching information includes one piece of the designated position information and one piece of the placement position information of the to-be-replenished pallet.

In the present embodiment, the first placement position information of the to-be-replenished pallet includes the coordinate of a position. Specifically, the first placement position information includes the coordinate of a temporary storage cell of a replenishing station, that is, the x-axis coordinate, the y-axis coordinate, and the z-axis coordinate of the temporary storage cell of the replenishing station in the warehouse. After the movable device takes the to-be-replenished pallet, the to-be-replenished pallet is placed in the temporary storage cell of the replenishing station according to the first placement position information.

In the present embodiment, the first designated position information includes the coordinate of a position corresponding to the first storage position information, that is, the x-axis coordinate, the y-axis coordinate, and the z-axis coordinate of a first designated position in the warehouse. Specifically, the first designated position is a position of the aisle in front of a storage cell of a shelf where the to-be-replenished pallet is located.

In the present embodiment, the second designated position information includes the coordinate of a position corresponding to the first placement position information, that is, the x-axis coordinate, the y-axis coordinate, and the z-axis coordinate of a second designated position in the warehouse. Specifically, the second designated position is a position of the aisle in front of the temporary storage cell of the replenishing station.

Specifically, there is a difference between the coordinate of the first designated position and the coordinate of the first storage position, and there is a difference between the coordinate of the second designated position and the coordinate of the first placement position. The differences in the x-axis coordinates and the y-axis coordinates between the first designated position and the first storage position are constant values, and the difference in the z-axis coordinates between the first designated position and the first storage position is a variable value. The differences in the x-axis coordinates and the y-axis coordinates between the second designated position and the first placement position are constant values, and the difference in the z-axis coordinates between the second designated position and the first placement position is a variable value.

In another embodiment, the first designated position information, the first storage position information of the to-be-replenished pallet, the second designated position information, and the first placement position information of the to-be-replenished pallet, may be a serial number of the position where the pallet, the storage cell, or the temporary storage cell are located. The serial number of the position corresponds to the X-axis coordinate, the Y-axis coordinate, and the Z-axis coordinate of the position.

In step S502, the movable device moves to a first designated position according to the first designated position information.

In the present embodiment, after receiving the pallet replenishing information, the movable device moves to the first designated position according to the first designated position information in the pallet replenishing information. The positioning unit of the movable device performs a positioning operation to acquire position information. The position information includes the x-axis coordinate and the y-axis coordinate of the position where the movable device is current located, and the control unit of the movable device compares the acquired position information with the coordinate of the first designated position. If the acquired position information matches the coordinate of the first designated position, the next step is performed. If the acquired position information does not match the coordinate of the first designated position, the movable device continues to move and perform the positioning operation and the comparison operation again, until the movable device reaches the first designated position. Specifically, the first designated position is a position of the aisle in front of a storage cell of a shelf where the to-be-replenished pallet is located.

In another embodiment, after receiving the pallet replenishing information, the movable device moves to the first designated position according to the first designated position information in the pallet replenishing information. The positioning unit of the movable device performs a positioning operation to acquire position information. The position information includes the x-axis coordinate and the y-axis coordinate of the position where the movable device is current located. The process of comparing the acquired position information with the coordinate of the first designated position and adjusting the position of the movable device may also be performed by the control center.

In step S503, a position of a gripping mechanism is adjusted based on a difference between a coordinate of the first designated position and a coordinate of the first storage position.

In the present embodiment, the shelf of the storage area containing the to-be-replenished pallet includes multiple layers of storage cells. The first storage position information further includes the z-axis coordinate of the to-be-replenished pallet. The difference between the coordinate of the first designated position and the coordinate of the first storage position in the z-axis direction is the difference between the height of the gripping mechanism and the height of the to-be-replenished pallet. The movable device adjusts the position of the gripping mechanism based on the difference. Specifically, in an initial state, the gripping mechanism faces to the moving direction of the movable device, and when the position of the gripping mechanism is initially adjusted, the gripping mechanism is controlled to rotate by 90 degrees to face to the direction of the to-be-replenished pallet, and then the gripping mechanism is controlled to move upwards or downwards to the position of the height of the to-be-replenished pallet.

In the present embodiment, the gripping mechanism is a fork tooth.

In step S504, position information of the gripping mechanism is acquired, and the position information of the gripping mechanism is compared with the first storage position information, and the gripping mechanism is controlled to take the to-be-replenished pallet when the acquired position information of the gripping mechanism matches the first storage position information.

In the present embodiment, the position information of the gripping mechanism is acquired and compared with the height information in the first storage position information, and when the acquired position information of the gripping mechanism matches the height information, the gripping mechanism is controlled to extend to take the to-be-replenished pallet from the storage cell of the shelf to the storage unit of the movable device.

In the present embodiment, the height of the gripping mechanism may be acquired by acquiring a rotation amount of a motor that drives the gripping mechanism to adjust the position of the gripping mechanism, thereby acquiring the position information of the gripping mechanism. In another embodiment, each layer of the shelf is provided with a positioning identifier, and the position information of the gripping mechanism may be determined by identifying the positioning identifier.

Specifically, the comparison may be performed by the control unit of the movable device, or may be performed by the control center.

In step S505, a first pallet taking completion signal is sent.

Specifically, the movable device sends a pallet taking completion signal to the control center after taking the to-be-replenished pallet from the storage cell of the storage area to the storage unit of the movable device. In the present embodiment, the pallet taking completion signal includes the position information of the storage unit, where the to-be-replenished pallet is located, of the movable device.

In the embodiment in which the pallet replenishing information includes one piece of pallet taking information and one piece of pallet reaching information, the movable device sends a first pallet taking completion signal to the control center, after the movable device takes a pallet in the pallet taking information.

In the embodiment in which the pallet replenishing information includes multiple pieces of pallet taking information and multiple pieces of pallet reaching information, the movable device sends a first pallet taking completion signal to the control center after taking the pallet in one piece of pallet replenishing information, then the movable device continues to take the next pallet in the next piece of pallet taking information, until the movable device takes away all the pallets in the multiple pieces of pallet taking information in the pallet replenishing information, then the movable device performs the next step.

In step S506, the movable device moves to a second designated position according to the second designated position information.

In the present embodiment, the movable device moves to the second designated position according to the second designated position information in the pallet replenishing information, after the movable device takes the to-be-replenished pallet to a storage unit. The positioning unit of the movable device performs a positioning operation to acquire position information. The position information includes the x-axis coordinate and the y-axis coordinate of the position where the movable device is current located. The process, of comparing the acquired position information with the coordinate of the second designated position and adjusting the position of the movable device according to the comparison result, may be performed by the control unit of the movable device, and may also be performed by the control center.

In step S507, the position of the gripping mechanism is adjusted based on a difference between a coordinate of the second designated position and a coordinate of the first placement position.

In the present embodiment, the shelf of the replenishing station includes multiple layers of temporary storage cells. The first placement position information includes the z-axis coordinate of the temporary storage cell of the replenishing station, and the difference between the coordinate of the second designated position and the coordinate of the first placement position in the z-axis direction is the difference between the height of the gripping mechanism and the height of the temporary storage cell of the replenishing station. When the movable device moves to the second designated position, the gripping mechanism takes the to-be-replenished pallet out of the storage unit of the movable device, and the movable device adjusts the position of the gripping mechanism based on the difference. Specifically, in an initial state, the gripping mechanism faces to the moving direction of the movable device, and when the position of the gripping mechanism is initially adjusted, the gripping mechanism is controlled to rotate by 90 degrees to face to the direction of the replenishing position, and then the gripping mechanism is controlled to move upwards or downwards to the position of the height of the replenishing position.

In step S508, position information of the gripping mechanism is acquired, and the position information of the gripping mechanism is compared with the first placement position information, and the gripping mechanism is controlled to place the to-be-replenished pallet on the first placement position when the acquired position information of the gripping mechanism matches the first placement position information.

In the present embodiment, the position information of the gripping mechanism is acquired and compared with the height information in the first placement position information, and when the acquired position information of the gripping mechanism matches the first placement position information, the gripping mechanism is controlled to extend to put the to-be-replenished pallet on the gripping mechanism into the replenishing position, that is, in the temporary storage cell of the replenishing station.

Specifically, the comparison may be performed by the control unit of the movable device, or may be performed by the control center.

In step S509, a pallet reaching signal is sent.

Specifically, the movable device sends a pallet reaching signal to the control center after taking the to-be-replenished pallet from the storage unit to the temporary storage cell of the replenishing station.

In the embodiment in which the pallet replenishing information includes one piece of pallet taking information and one piece of pallet reaching information, the movable device sends the pallet reaching signal to the control center, after the movable device places the pallet in the pallet reaching information in the temporary storage cell of the replenishing station.

In the embodiment in which the pallet replenishing information includes multiple pieces of pallet taking information and multiple pieces of pallet reaching information, the movable device sends the pallet reaching signal to the control center after placing the pallet in one piece of the pallet reaching information in the temporary storage cell of the replenishing station, then the movable device continues to place the next pallet in the next piece of pallet reaching information in the temporary storage cell of the replenishing station, until the movable device places all the pallets in the multiple pieces of pallet reaching information, of the pallet replenishing information, in the temporary storage cell of the replenishing station.

In step S510, a pallet returning command including pallet returning information is received. The pallet returning information includes third designated position information, second storage position information about a second storage position where a replenished pallet is currently located, fourth designated position information, and second placement position information about a second placement position where the replenished pallet is to be placed.

In the present embodiment, the pallet returning information includes one piece of pallet taking information and one piece of pallet placing information. The pallet taking information includes the third designated position information and the second storage position information about a second storage position where a replenished pallet is currently located. The pallet placing information includes the fourth designated position information and the second placement position information about a second placement position where the replenished pallet is to be placed.

In another embodiment, the pallet returning information includes multiple pieces of pallet taking information and multiple pieces of pallet placing information. Each piece of the pallet taking information includes one piece of the designated position information and one piece of the storage position information of the replenished pallet. Each piece of the pallet placing information includes one piece of the designated position information and one piece of the placement position information of the replenished pallet.

In the present embodiment, when the to-be-replenished pallet is placed in the temporary storage cell of the replenishing station, the control center receives the pallet reaching signal sent by the movable device, then the control center sends a replenishing command to the replenishing station. The operator in the replenishing station puts the goods into the to-be-replenished pallet, and sends a replenishing completion signal to the control center. After receiving the replenishing completion signal, the control center sends a pallet returning command to the movable device. The pallet returning command includes pallet returning information. The pallet returning information includes third designated position information, second storage position information about a second storage position where a replenished pallet is currently located, fourth designated position information, and second placement position information about a second placement position where the replenished pallet is to be placed. In the present embodiment, the second storage position information of the replenished pallet includes the coordinate of a position of the replenished pallet, that is, the x-axis coordinate, y-axis coordinate, and z-axis coordinate of the replenished pallet in the warehouse.

In the present embodiment, the second placement position information includes the coordinate of a position. Specifically, the second placement position information includes the coordinate of a storage cell of a storage area, that is, the x-axis coordinate, the y-axis coordinate, and the z-axis coordinate of the storage cell of a storage area in the warehouse. After the movable device takes the replenished pallet, the replenished pallet is placed in the storage cell of a storage area according to the second placement position information. In another embodiment, the second placement position may be the coordinate of a temporary storage cell of a picking station, the control center controls the movable device to transport the replenished pallet directly to the picking station for picking. In another embodiment, the second placement position may also be any position of the replenishing station, and the pallet may be remained in the place after the replenishment is completed.

In the present embodiment, the third designated position information includes the coordinate of a position corresponding to the second storage position information, that is, the x-axis coordinate, the y-axis coordinate, and the z-axis coordinate of a third designated position in the warehouse. Specifically, the third designated position is a position of the aisle in front of a temporary storage cell of a replenishing station where the replenished pallet is located.

In the present embodiment, the fourth designated position information includes the coordinate of a position corresponding to the second placement position information, that is, the x-axis coordinate, the y-axis coordinate, and the z-axis coordinate of a fourth designated position in the warehouse. Specifically, the fourth designated position is a position of the aisle in front of a storage cell of a storage area.

Specifically, there is a difference between the coordinate of the third designated position and the coordinate of the second storage position, and there is a difference between the coordinate of the fourth designated position and the coordinate of the second placement position. The differences in the x-axis coordinates and the y-axis coordinates between the third designated position and the second storage position are constant values, and the difference in the z-axis coordinates between the third designated position and the second storage position is a variable value. The differences in the x-axis coordinates and the y-axis coordinates between the fourth designated position and the second placement position are constant values, and the difference in the z-axis coordinates between the fourth designated position and the second placement position is a variable value.

In another embodiment, the third designated position information, the second storage position information of the replenished pallet, the fourth designated position information, and the second placement position information of the replenished pallet, may be a serial number of the position where the pallet, the storage cell, or the temporary storage cell are located. The serial number of the position corresponds to the X-axis coordinate, the Y-axis coordinate, and the Z-axis coordinate of the position.

In step S511, the movable device moves to a third designated position according to the third designated position information.

In the present embodiment, after receiving the pallet returning information, the movable device moves to the third designated position according to the third designated position information in the pallet returning information. The positioning unit of the movable device performs a positioning operation to acquire position information. The position information includes the x-axis coordinate and the y-axis coordinate of the position where the movable device is current located. The process of comparing the acquired position information with the coordinate of the third designated position and adjusting the position of the movable device according to the comparison result, may be performed by the control unit of the movable device, and may also be performed by the control center.

In step S512, the position of the gripping mechanism is adjusted based on a difference between a coordinate of the third designated position and a coordinate of the second storage position.

In the present embodiment, the shelf of the replenishing station containing the replenished pallet includes multiple layers of temporary storage cells. The pallet position information includes the z-axis coordinate of the replenished pallet. The difference between the coordinate of the third designated position and the coordinate of the second storage position in the z-axis direction is the difference between the height of the gripping mechanism and the height of the replenished pallet. The movable device adjusts the position of the gripping mechanism based on the difference. Specifically, in an initial state, the gripping mechanism faces to the moving direction of the movable device, and when the position of the gripping mechanism is initially adjusted, the gripping mechanism is controlled to rotate by 90 degrees to face to the direction of the replenished pallet, and then the gripping mechanism is controlled to move upwards or downwards to the position of the height of the replenished pallet.

In step S513, position information of the gripping mechanism is acquired, and the position information of the gripping mechanism is compared with the second storage position information, and the gripping mechanism is controlled to take the replenished pallet when the acquired position information of the gripping mechanism matches the second storage position information.

In the present embodiment, the position information of the gripping mechanism is acquired and compared with the height information in the second storage position information, and when the acquired position information of the gripping mechanism matches the height information, the gripping mechanism is controlled to extend to take the replenished pallet from the temporary storage cell of the replenishing station to the storage unit of the movable device.

Specifically, the comparison may be performed by the control unit of the movable device, or may be performed by the control center.

In step S514, a second pallet taking completion signal is sent.

Specifically, the movable device sends a second pallet taking completion signal to the control center after taking the replenished pallet from the temporary storage cell of the replenishing station to the storage unit of the movable device.

In the embodiment in which the pallet returning information includes one piece of pallet taking information and one piece of pallet placing information, the movable device sends a pallet taking completion signal to the control center, after the movable device takes a pallet in the pallet taking information.

In the embodiment in which the pallet returning information includes multiple pieces of pallet taking information and multiple pieces of pallet placing information, the movable device sends a pallet taking completion signal to the control center after taking the pallet in one piece of pallet taking information, then the movable device continues to take the next pallet in the next piece of pallet taking information, until the movable device takes away all the pallets in the multiple pieces of pallet taking information in the pallet returning information, then the movable device performs the next step.

In step S515, the movable device moves to a fourth designated position according to the fourth designated position information.

In the present embodiment, the movable device moves to the fourth designated position according to the fourth designated position information in the pallet returning information, after the movable device takes the replenished pallet to a storage unit. The positioning unit of the movable device performs a positioning operation to acquire position information. The position information includes the x-axis coordinate and the y-axis coordinate of the position where the movable device is current located. The process, of comparing the acquired position information with the coordinate of the fourth designated position and adjusting the position of the movable device according to the comparison result, may be performed by the control unit of the movable device, and may also be performed by the control center.

In step S516, the position of the gripping mechanism is adjusted based on a difference between a coordinate of the fourth designated position and a coordinate of the second placement position.

In the present embodiment, the shelf of the storage area includes multiple storage units, and each of the storage units includes multiple layers of storage cells. The second placement position information includes the z-axis coordinate of the storage cell of the storage area, and the difference between the coordinate of the fourth designated position and the coordinate of the second placement position in the z-axis direction is the difference between the height of the gripping mechanism and the height of the storage cell of the storage area. When the movable device moves to the fourth designated position, the gripping mechanism takes the replenished pallet out of the storage unit of the movable device, and the movable device adjusts the position of the gripping mechanism based on the difference. Specifically, in an initial state, the gripping mechanism faces to the moving direction of the movable device, and when the position of the gripping mechanism is initially adjusted, the gripping mechanism is controlled to rotate by 90 degrees to face to the direction of the placement position, and then the gripping mechanism is controlled to move upwards or downwards to the position of the height of the placement position.

In step S517, position information of the gripping mechanism is acquired, and the position information of the gripping mechanism is compared with the second placement position information, and the gripping mechanism is controlled to place the replenished pallet on the second placement position when the acquired position information of the gripping mechanism matches the second placement position information.

In the present embodiment, the position information of the gripping mechanism is acquired and compared with the height information in the second placement position information, and when the acquired position information of the gripping mechanism matches the second placement position information, the gripping mechanism is controlled to extend to put the replenished pallet on the gripping mechanism into the placement position, that is, in the storage cell of the storage area.

Specifically, the comparison may be performed by the control unit of the movable device, or may be performed by the control center.

In step S518, a pallet returning completion signal is sent.

Specifically, the movable device sends a pallet returning completion signal to the control center, after taking the replenished pallet from the storage unit to the storage cell of the storage area.

In the embodiment in which the pallet returning information includes one piece of pallet taking information and one piece of pallet placing information, the movable device sends the pallet returning completion signal to the control center after the movable device places the pallet in the pallet placing information in the storage cell of the storage area.

In the embodiment in which the pallet returning information includes multiple pieces of pallet taking information and multiple pieces of pallet placing information, the movable device sends the pallet returning signal to the control center after placing the pallet in one piece of the pallet placing information in the storage cell of the storage area, then the movable device continues to place the next pallet in the next piece of pallet placing information in the storage cell of the storage area, until the movable device places all the pallets in the multiple pieces of pallet placing information, of the pallet returning information, in the storage cell of the storage area.

For example, in a case that the coordinate of the storage cell in the storage area, where the to-be-replenished pallet is located, is (50, 50, 5), then the first storage position coordinate of the to-be-replenished pallet is (50, 50, 5). The coordinate of the position of the aisle in front of the storage cell in the storage are, where the to-be-replenished pallet is located, is (51, 50, 0), then the coordinate of the first designated position is (51, 50, 0). The coordinate of the temporary storage cell of the replenishing station, where the to-be-replenished pallet is to be replenished, is (10, 10, 8), then the coordinate of the first placement position is (10, 10, 8). The coordinate of the position of the aisle in front of the temporary storage cell of the replenishing station is (11, 10, 0), then the coordinate of the second designated position is (11, 10, 0). After receiving the pallet replenishing command, the movable device goes to the first designated position (51, 50, 0), and after the movable device reaches the first designated position, the coordinate of the gripping mechanism is (51, 50, 0). There is a distance between the gripping mechanism and the to-be-replenished pallet on the x-axis and the z-axis, so the grasping mechanism rotates by 90 degrees towards the direction of the to-be-replenished pallet, then moves upwards for 5 length units to reach the height of the to-be-replenished pallet, and then extends to reach the first storage position (50, 50, 5) of the to-be-replenished pallet. After reaching the position, the gripping mechanism takes the to-be-replenished pallet to the storage unit of the movable device. After taking the to-be-replenished pallet, the movable device goes to the temporary storage cell of the replenishing station where the to-be-replenished pallet is to be replenished. The movable device first reaches the second designated position (11, 10, 0), then the gripping mechanism takes out the to-be-replenished pallet from the storage unit, where the coordinate of the grasping mechanism is (11, 10, 0). There is a distance between the gripping mechanism and the temporary storage cell on the x-axis and the z-axis, so the grasping mechanism carrying the to-be-replenished pallet rotates by 90 degrees towards the direction of the temporary storage cell, and moves upwards for 8 length units to reach the height of the temporary storage cell, and then extends to reach the first placement position (10, 10, 8). After reaching the position, the gripping mechanism places the to-be-replenished pallet to the temporary storage cell, and retracts.

The process of taking the replenished pallet and returning the replenished pallet to the storage cell of the storage area, is similar to the above process of taking the to-be-replenished pallet and transporting the to-be-replenished pallet to the temporary storage cell of the replenishing station.

Reference is made to Figure 45, which shows a method for comparing the position information of the gripping mechanism with the first storage position information, and controlling the gripping mechanism to take the to-be-replenished pallet, according to an embodiment. The method includes the following steps S521 to S523.

In step S521, the position information of the gripping mechanism is acquired.

In the present embodiment, the height of the gripping mechanism may be acquired by acquiring a rotation amount of a motor that drives the gripping mechanism to adjust position, thereby acquiring the position information of the gripping mechanism. In another embodiment, each layer of the shelf is provided with a positioning identifier, and the position information of the gripping mechanism may be determined by identifying the positioning identifier.

In step S522, the movable device compares the position information of the gripping mechanism with the first storage position information.

In the present embodiment, the movable device inputs the acquired position information of the gripping mechanism and first storage position information into a control unit of the movable device. The control unit compares the position information of the gripping mechanism with the height information in the first storage position information. If the position information of the gripping mechanism matches the height information, the control unit outputs a pallet taking command.

In step S523, the gripping mechanism is controlled to take the to-be-replenished pallet when the acquired position information of the gripping mechanism matches the first storage position information.

In a case that the acquired position information of the gripping mechanism matches the first storage position information, the control unit outputs a pallet taking command to control the gripping mechanism to extend to take the to-be-replenished pallet from the storage cell of the shelf to the storage unit of the movable device.

Reference is made to Figure 46, which shows a method for comparing the position information of the gripping mechanism with the first storage position information, and controlling the gripping mechanism to take the to-be-replenished pallet, according to an embodiment. The method includes the following steps S531 to S534.

In step S531, the position information of the gripping mechanism is acquired.

In the present embodiment, the height of the gripping mechanism may be acquired by acquiring a rotation amount of a motor that drives the gripping mechanism to adjust position, thereby acquiring the position information of the gripping mechanism. In another embodiment, each layer of the shelf is provided with a positioning identifier, and the position information of the gripping mechanism may be determined by identifying the positioning identifier.

In step S532, the position information of the gripping mechanism is sent to a control center, the control center compares the position information of the gripping mechanism with the first storage position information to generate a pallet taking command.

In the present embodiment, the movable device sends the acquired position information of the gripping mechanism to the control center, and then the control center compares the position information of the gripping mechanism with the height information in the first storage position information. If the position information of the gripping mechanism matches the height information, the control center generates a pallet taking command and sends the pallet taking command to the movable device.

In step S533, the pallet taking command sent by the control center is received.

In the present embodiment, the movable device receives the pallet taking command sent by the control center.

In step S534, the gripping mechanism is controlled to take the to-be-replenished pallet.

In the present embodiment, after receiving the pallet taking command sent by the control center, the movable device controls the gripping mechanism to extend to take the to-be-replenished pallet from the storage cell of the shelf to the storage unit of the movable device.

Reference is made to Figure 47, which shows a method for replenishing according to an embodiment. The method includes the following steps S541 to S547.

In step S541, inventory information of a storage area is acquired, and an inventory insufficient signal is generated based on the inventory information.

In the present embodiment, the control center receives a placing signal when each goods is placed in the storage area, and the control center counts when the control center receives the placing signal, so that the quantity of the goods stored in the storage area may be acquired. The control center receives a taking signal when each goods is taken away from the picking station, and the control center counts when the control center receives the taking signal, so that the quantity of the goods taken away may be acquired. Therefore, the quantity of the existing goods in the warehouse, that is, the inventory information, may be acquired by subtracting the quantity of the goods taken away from the quantity of goods stored in the storage area. If the quantity of existing goods in the warehouse is less than a preset threshold, the control center generates an inventory insufficient signal.

In step S542, a pallet replenishing command is sent to the movable device in response to the inventory insufficient signal, to control the movable device to replenish a pallet.

In the present embodiment, after the control center generates the inventory insufficient signal, a pallet replenishing command is sent to the movable device based on the inventory insufficient signal, to control the movable device to replenish the to-be-replenished pallet in the storage area.

In step S543, a first pallet taking completion signal and a pallet reaching signal, sent by the movable device, are received.

In the present embodiment, after the control center sends the pallet replenishing command to the movable device, the movable device executes the pallet replenishing command as follows. The movable device feeds a first pallet taking completion signal to the control center after taking the to-be-replenished pallet from the storage cell of the storage area to the storage unit of the movable device. The movable device feeds a pallet reaching signal to the control center after taking the to-be-replenished pallet from the storage unit of the movable device to the temporary storage cell of the replenishing station. The control center receives the first pallet taking completion signal and the pallet reaching signal.

In step S544, a replenishing command is sent in response to the pallet reaching signal.

In the present embodiment, the control center receives the pallet reaching signal fed by the movable device when the to-be-replenished pallet is placed in the temporary storage cell of the replenishing station, then the control center sends a replenishing command to the replenishing station, to cause the operator in the replenishing station to put the goods in the to-be-replenished pallet.

In step S545, a replenishing completion signal is received.

In the present embodiment, the operator in the replenishing station puts the goods in the to-be-replenished pallet when receiving the replenishing command, and the operator sends a replenishing completion signal to the control center after the goods is putted in the to-be-replenished pallet. The control center receives the replenishing completion signal.

In step S546, a pallet returning command is sent to the movable device in response to the replenishing completion signal.

In the present embodiment, the control center sends a pallet returning command to the movable device in response to the control center receiving the replenishing completion signal, and then the movable device returns the replenished pallet to the storage cell of the storage area.

In step S547, a second pallet taking completion signal and a pallet returning completion signal, sent by the movable device, are received.

In the present embodiment, after the control center sends a pallet returning command to the movable device, the movable device executes the pallet returning command as follows. The movable device feed a second pallet taking completion signal to the control center after taking the replenished pallet from the temporary storage cell of the replenishing station to the storage unit of the movable device. The movable device feeds back a pallet returning completion signal to the control center, after returning the replenished pallet from the storage unit to the storage cell of the storage area. The control center receives the second pallet taking completion signal and the pallet returning completion signal.

Reference is made to Figure 48, which shows an execution terminal of a replenishing system according to an embodiment. The execution terminal includes a first receiving module 502, a first moving module 504, a first adjusting module 506, a first pallet taking control module 508, a first feedback module 510, a second moving module 512, a second adjusting module 514, a pallet reaching control module 516, a second feedback module 518, a second receiving module 520, a third moving module 522, a third adjusting module 524, a second pallet taking control module 526, a third feedback module 528, a fourth moving module 530, a fourth adjusting module 532, a pallet returning control module 534, and a fourth feedback module 536.

The first receiving module 502 is configured to receive a pallet replenishing command including pallet replenishing information. The pallet replenishing information includes first designated position information, first storage position information about a first storage position where a to-be-replenished pallet is currently located, second designated position information, and first placement position information about a first placement position where the to-be-replenished pallet is to be placed.

The first moving module 504 is configured to cause the movable device to move to a first designated position according to the first designated position information.

The first adjusting module 506 is configured to adjust a position of a gripping mechanism based on a difference between a coordinate of the first designated position and a coordinate of the first storage position.

The first pallet taking control module 508 is configured to acquire position information of the gripping mechanism, and compare the position information of the gripping mechanism with the first storage position information, and control the gripping mechanism to take the to-be-replenished pallet when the acquired position information of the gripping mechanism matches the first storage position information.

The first feedback module 510 is configured to send a pallet taking completion signal.

The second moving module 512 is configured to cause the movable device to move to a second designated position according to the second designated position information.

The second adjusting module 514 is configured to adjust the position of the gripping mechanism based on a difference between a coordinate of the second designated position and a coordinate of the first placement position.

The pallet reaching control module 516 is configured to acquire position information of the gripping mechanism, and compare the position information of the gripping mechanism with the first placement position information, and control the gripping mechanism to place the to-be-replenished pallet on the first placement position when the acquired position information of the gripping mechanism matches the first placement position information.

The second feedback module 518 is configured to send a pallet reaching signal.

The second receiving module 520 is configured to receive a pallet returning command including pallet returning information. The pallet returning information includes third designated position information, second storage position information about a second storage position where a replenished pallet is currently located, fourth designated position information, and second placement position information about a second placement position where the replenished pallet is to be placed.

The third moving module 522 is configured to cause the movable device to move to a third designated position according to the third designated position information.

The third adjusting module 524 is configured to adjust the position of the gripping mechanism based on a difference between a coordinate of the third designated position and a coordinate of the second storage position.

The second pallet taking control module 526 is configured to acquire position information of the gripping mechanism, and compare the position information of the gripping mechanism with the second storage position information, and control the gripping mechanism to take the replenished pallet when the acquired position information of the gripping mechanism matches the second storage position information.

The third feedback module 528 is configured to send a second pallet taking completion signal.

The fourth moving module 530 is configured to cause the movable device to move to a fourth designated position according to the fourth designated position information.

The fourth adjusting module 532 is configured to adjust the position of the gripping mechanism based on a difference between a coordinate of the fourth designated position and a coordinate of the second placement position.

The pallet returning control module 534 is configured to acquire position information of the gripping mechanism, and compare the position information of the gripping mechanism with the second placement position information, and control the gripping mechanism to place the replenished pallet on the second placement position when the acquired position information of the gripping mechanism matches the second placement position information.

The fourth feedback module 536 is configured to send a pallet returning completion signal.

Reference is made to Figure 49, which shows a control terminal of the replenishing system according to an embodiment, the control terminal includes an acquiring module 800, a first command sending module 810, a third receiving module 820, a second command sending module 830, a fourth receiving module 840, a third command sending module 850, and a fifth receiving module 860.

The acquiring module 800 is configured to acquire inventory information of a storage area, and generating an inventory insufficient signal based on the inventory information.

The first command sending module 810 is configured to send a pallet replenishing command to the movable device in response to the inventory insufficient signal, to control the movable device to replenish a pallet.

The third receiving module 820 is configured to receive a first pallet taking completion signal and a pallet reaching signal sent by the movable device.

The second command sending module 830 is configured to send a replenishing command in response to the pallet reaching signal.

The fourth receiving module 840 is configured to receive a replenishing completion signal.

The third command sending module 850 is configured to send a pallet returning command to the movable device in response to the replenishing completion signal.

The fifth receiving module 860 is configured to receive a second pallet taking completion signal and a pallet returning completion signal sent by the movable device.

The order completion system and the order completion method according to the present disclosure have the following effects (1) to (9).

In effect (1), in a warehouse of the order completion system, a positioning identifier is provided on the pallet, the movable device can obtain position information of the movable device through the positioning identifier, and eliminate the error between the position information of the movable device and the standard position by adjusting the posture of of the movable device according to the position information. In this way, the positioning between the movable device and the goods is accurate, the stability and reliability of the operation of the entire order completion system are improved, and the warehouse and the order completion system using in the above warehouse have broad application prospects.

In effect (2), in the order completion system, the intermediate cooperation area is provided with a workstation, and at least one shelf is arranged on the side of the picking work area, so that the workstation can interact with multiple movable devices, thereby improving the working efficiency of the workstation. The order completion system with the above workstation provided according to the present disclosure has relatively high work efficiency.

In effect (3), in the order completion system, the movable device includes the telescopic driving unit and the fork tooth unit, so that the movable device can grip the goods by side fork, and the movable device does not need to make a turn or rotate at a fixed position, thereby saving the width of the aisle. The arrangement of the warehouse is more compact, which improves the utilization rate of the warehouse, shortens the distance of transportation, improving the efficiency of transportation.

In effect (4), with the system and method according to the present disclosure, the movable device can only transport the goods required for the order from the storage area to the picking station when picking the goods, thereby greatly reducing the workload of the movable device. The movable device can directly leave the picking station to take the next goods after placing the goods required for the order in the picking station, thereby improving the picking efficiency.

In effect (5), with the system and method according to the present disclosure, when the grasping mechanism takes the pallet, the deviation between the grasping mechanism and the pallet is acquired and the deviation is corrected by adjusting the moving distance of the movable device, the telescopic distance of the grasping mechanism, and the rotation angle of the grasping mechanism based on the deviation, so that the position deviation of the pallet, when the pallet is placed on the shelf by the movable device, is corrected, thereby further ensuring the accuracy of the movement of the pallet in the system.

In effect (6), with the system and method according to the present disclosure, the order information is received, and it is determined whether the charging vehicle corresponding to the order information reaches the picking station and whether the goods corresponding to the order information reach the picking station. If both the charging vehicle and the goods reach the picking station, the order information is displayed and a reminder is generated on the temporary storage cell of the shelf where the goods are located. With the order information displayed on the large screen and the reminder on the temporary storage cell of the shelf where the goods in the order are located, the picking efficiency can be improved, and the use of paper orders is reduced with the electronic display, thereby further saving resources.

In effect (7), with the system and apparatus according to the present disclosure, the movable apparatus moves to the position of the picking station corresponding to the picking station information after the movable apparatus receives the picking station information. The current position information of the movable apparatus is acquired, and the current position information is compared with the picking station information. The moving terminal of the picking system parks at the current position and waits for picking when the current position information is consistent with the picking station information. The movable device is moves to the order completion area to package the order after receiving the order completion area information. By replacing the manual handling with the moving terminal of the picking system, human resources are saved, and the order completion efficiency is further improved.

In effect (8), with the system and method according to the present disclosure, after completing the picking of one order, the pallet left at the picking station is returned to the original position of the pallet or placed in another position of the storage area, to avoid the situation that all temporary storage cells of the picking station are occupied and picking process cannot be performed, and the remaining goods in the pallet can be effectively dispatched, thereby improving the order completion efficiency.

In effect (9), with the system and method according to the present disclosure, the empty pallet is transported to the position for replenishing by the movable device, and then the replenished pallet is returned to the replenishment position, thereby avoiding the manual replenishment, greatly reducing the cost and increasing the replenishment efficiency.

The technical features of the above described embodiments may be arbitrarily combined. For the sake of brevity of description, all possible combinations of the technical features in the above embodiments are not described, however, as long as there is no contradiction in the combinations of these technical features, the combinations of these technical features should be considered as the scope of the present specification.

Some embodiments of the present disclosure are described specifically and in detail in the above content, which should not be taken as limitation to the scope of the present disclosure. It should be noted that, the person skilled in the art may make many possible changes and modifications to the technical solutions of the present disclosure, without departing from the concept of the present application. And the changes and modifications fall in the protection scope of the present disclosure. Therefore, the protection scope of the disclosure should be determined by the appended claims.

## Claims

1. An order completion system, comprising: a warehouse, a charging vehicle for transporting an order, a movable apparatus for transporting the charging vehicle, a movable device for transporting goods, and a control center, wherein
the warehouse comprises: an order preparation area, a high-frequency picking area, a low-frequency picking area, and an intermediate cooperation area, wherein
the order preparation area is configured for associating the order with the charging vehicle for transporting the order and associating the charging vehicle for transporting the order with the movable apparatus for transporting goods,
the high-frequency picking area is configured for the charging vehicle for transporting the order to pick goods,
the low-frequency picking area is configured for the movable device for transporting goods to pick goods,
the intermediate cooperation area is configured for the movable device for transporting goods to place the goods, picked by the movable device, in the intermediate cooperation area, and is configured for the charging vehicle to park at the intermediate cooperation area and to pick the goods, in the intermediate cooperation area placed by the movable device for transporting goods, into the charging vehicle, and
the control center is configured to control the charging vehicle for transporting the order, the movable apparatus for transporting goods, and the intermediate cooperation area to operate.

2. The order completion system according to claim 1, wherein the warehouse further comprises a replenishing area configured for the movable device for transporting goods to replenish the low-frequency picking area with goods.

3. The order completion system according to claim 1, wherein the warehouse further comprises an order completion area configured for unloading the goods in the charging vehicle and packaging the goods.

4. The order completion system according to claim 1, wherein
the warehouse comprises a plurality of clusters of shelves arranged in a direction parallel to an X-axis in a three-dimensional coordinate system, and each cluster of the shelves extend in a direction parallel to a Y-axis in the three-dimensional coordinate system,
an aisle is formed between adjacent two clusters of the shelves for the movable device to shuttle, and the aisle extends in a direction parallel to the Y-axis,
each cluster of the shelves comprises two columns of shelves facing away from each other,
each column of the shelves comprises a plurality of storage cells arranged in an array in a plane formed by a direction parallel to the Y-axis and a direction parallel to a Z-axis in the three-dimensional coordinate system,
each of one part of the storage cells is provided with a pallet for carrying goods, and the other part of the storage cells are vacant, and
the pallet is provided with a positioning identifier for determining position information of the pallet in the three-dimensional coordinate system.

5. The order completion system according to claim 4, wherein the positioning identifier is a two-dimensional code.

6. The order completion system according to claim 4, wherein a plurality of clusters of the shelves form one storage area, the warehouse comprises a plurality of storage areas, and a main road, extending in a direction parallel to the X-axis, is formed between adjacent two storage areas.

7. The order completion system according to claim 6, wherein the main road is capable of allowing a plurality of the movable devices to move oppositely in a direction parallel to the X-axis.

8. The order completion system according to claim 4, wherein a width of the aisle is capable of allowing only one movable device to move along a straight line in a direction parallel to the Y-axis.

9. The order completion system according to claim 8, wherein the aisle is 1.1 times to 1.3 times as wide as the movable device.

10. The order completion system according to claim 9, wherein the aisle is 1.1 times as wide as the movable device.

11. The order completion system according to claim 4, wherein the warehouse further comprises at least one picking station corresponding to the plurality of clusters of the shelves, and the picking station is configured for a picker to compare goods with order information of the order.

12. The order completion system according to claim 11, wherein the warehouse comprises a plurality of picking stations, and each of the picking stations corresponds to 200 to 3000 pallets.

13. The order completion system according to claim 1, wherein
the intermediate cooperation area is provided with a workstation, the workstation comprises a picking work area and a charging vehicle parking position, the charging vehicle parking position is arranged at a side of the picking work area,
the workstation further comprises at least one shelf, the shelf is arranged at a side of the picking work area, the shelf comprises a plurality of temporary storage cells, the temporary storage cell is configured to store the goods picked by the movable device, and the shelf is capable of allowing a plurality of movable devices to operate at the shelf simultaneously.

14. The order completion system according to claim 13, wherein the workstation comprises three shelves, each of the shelves is arranged along a straight line, and the three shelves are arranged at three sides of the picking work area.

15. The workstation according to claim 14, wherein the workstation comprises two shelves, each of the shelves is arranged along a straight line, and the two shelves are arranged at adjacent two sides or two opposite sides of the picking work area.

16. The order completion system according to claim 13, wherein the workstation comprises one shelf, and the shelf has a "U" shape or a "C" shape, and the shelf is arranged at three sides of the picking work area, or
the shelf has an "L" shape, and the shelf is arranged at adjacent two sides of the picking work area.

17. The workstation according to claim 13, wherein the workstation is one of a picking station, an arranging station, or a replenishing station, wherein
the picking station is configured for an operator to compare goods with order information of the order, the arranging station is configured for an operator to arrange goods, and the replenishing station is configured for an operator to replenish a storage area with goods.

18. The order completion system according to claim 17, wherein the workstation is a picking station, and the workstation further comprises a picking reminding device configured to display order information corresponding to the goods.

19. The order completion system according to claim 18, wherein the picking reminding device comprises an indicator light and a button,
the indicator light has a first state and a second state, the first state is used to indicate that the goods are to be compared with the order information, the second state is used to indicate that the goods are already compared with the order information, and
the button is configured to switch between the first state and the second state.

20. The order completion system according to claim 19, wherein the first state is distinguished from the second state by at least one of color, brightness, on-state or off-state, and flickering frequency of the indicator light.

21. The order completion system according to claim 13, wherein operations performed by the movable device comprises: parking at a side of the shelf, leaving the shelf, and transporting the goods picked by the movable device to the temporary storage cell corresponding to the goods.

22. The order completion system according to claim 1, wherein the movable device is configured to grip and carry a to-be-carried object, and the movable device comprises a main body and a gripping mechanism connected with the main body, wherein the main body is capable of moving, and the gripping mechanism is capable of moving relative to the main body.

23. The order completion system according to claim 22, wherein the gripping mechanism comprises a fork tooth unit and a telescopic driving unit for driving the fork tooth unit to move, wherein,
the fork tooth unit comprises a holder, a first fork tooth, and a second fork tooth,
the holder is mounted on the main body, the first fork tooth is mounted on the holder and is capable of moving relative to the holder, and the second fork tooth is connected with the first fork tooth and is capable of moving relative to the first fork tooth when the first fork tooth moves relative to the holder,
the telescopic driving unit is connected with the first fork tooth to drive the first fork tooth to move relative to the holder.

24. The order completion system according to claim 23, wherein the first fork tooth, the second fork tooth and the holder are connected via a connecting member, and the connecting member is configured to drive the second fork tooth to move relative to the first fork tooth when the first fork tooth moves relative to the holder.

25. The order completion system according to claim 24, wherein the connecting member is a stroke amplifying component capable of causing a movement stroke of the second fork tooth to be greater than a movement stroke of the first fork tooth relative to the holder when the telescopic driving unit drives the first fork tooth to move.

26. The order completion system according to claim 25, wherein the stroke amplifying component comprises: a first pulley, a first cable, a second pulley, and a second cable, wherein
the first pulley is fixed to the first fork tooth,
one end of the first cable is fixed to the holder, and the other end of the first cable is wound around the first pulley and is fixed to the second fork tooth,
the second pulley is fixed to the first fork tooth, and one end of the second cable is fixed to the second fork tooth, and the other end of the second cable is wound around the second pulley and is fixed to the holder.

27. The order completion system according to claim 23, wherein
a first guiding structure, for guiding movement of the first fork tooth, is arranged between the holder and the first fork tooth, and
a second guiding structure, for guiding movement of the second fork tooth, is arranged between the first fork tooth and the second fork tooth.

28. The order completion system according to claim 27, wherein
the first guiding structure comprises a first guiding wheel and a first guiding groove, wherein the first guiding wheel is arranged on the holder, the first guiding groove is arranged on the first fork tooth, and the first guide wheel is fitted to the first guiding groove, and
the second guiding structure comprises a second guiding wheel and a second guiding groove, wherein the second guiding wheel is arranged on the second fork tooth, the second guiding groove is arranged on the first fork tooth, and the second guiding wheel is fitted to the second guiding groove.

29. The order completion system according to claim 23, wherein the telescopic driving unit comprises a first driving member, a gear, and a rack, wherein the first driving member is provided with an output shaft, the first driving member is mounted on the holder, the gear is mounted on the output shaft, the rack is connected with the first fork tooth, and the rack is engaged with the gear.

30. The order completion system according to any one of claims 22 to 29, wherein the gripping mechanism further comprises a lifting unit, wherein the fork tooth unit is connected with the lifting unit, the lifting unit is mounted on the main body and is capable of moving in a vertical direction relative to the main body.

31. The order completion system according to claim 30, wherein the gripping mechanism further comprises a rotating unit, wherein the rotating unit is connected with the lifting unit and is capable of rotate relative to the lifting unit, and the rotating unit is configured to move upwards and downwards with the lifting unit, and the fork tooth unit is mounted on the rotating unit.

32. The order completion system according to claim 31, wherein the gripping mechanism further comprises an image acquiring unit configured to acquire posture information of the to-be-carried object on the second fork tooth.

33. The movable device according to claim 32, wherein the movable device further comprises a processing unit configured to process the posture information of the to-be-carried object acquired by the image acquiring unit, and to control an operation of the rotating unit and the lifting unit.

34. An order completion method, comprising:

in an order preparation area, associating an order with a charging vehicle and associating the charging vehicle with a movable apparatus for transporting goods;

transporting the charging vehicle to a high-frequency picking area for picking goods;

picking, by a movable device for transporting goods, goods in a low-frequency picking area and transporting, by the movable device, the goods to a workstation of an intermediate cooperation area; and

generating, by a picking station, a reminder based on order information of the order and placing, according to the reminder, the goods in a container corresponding to the order in the charging vehicle.

35. The order completion method according to claim 34, wherein the picking, by a movable device for transporting goods, goods in a low-frequency picking area and transporting, by the movable device, the goods to a workstation of an intermediate cooperation area comprises:

receiving a goods picking command comprising picking information, wherein the picking information comprises first designated position information, storage position information about a storage position where a to-be-picked goods is currently located, second designated position information, and placement position information about a placement position where the to-be-picked goods is to be placed;

moving, by the movable device, to a first designated position according to the first designated position information;

adjusting a position of a gripping mechanism based on a difference between a coordinate of the first designated position and a coordinate of the storage position;

acquiring position information of the gripping mechanism, and comparing the position information of the gripping mechanism with the storage position information, and controlling the gripping mechanism to take goods when the acquired position information of the gripping mechanism matches the storage position information;

sending a taking completion signal;

moving, by the movable device, to a second designated position according to the second designated position information;

adjusting the position of the gripping mechanism based on a difference between a coordinate of the second designated position and a coordinate of the placement position;

acquiring position information of the gripping mechanism, and comparing the position information of the gripping mechanism with the placement position information, and controlling the gripping mechanism to place the goods on the placement position when the acquired position information of the gripping mechanism matches the placement position information; and

sending a placing completion signal.

36. The order completion method according to claim 35, wherein the storage position information comprises an X-axis coordinate, a Y-axis coordinate, and a Z-axis coordinate of a position where the goods is located, or a serial number of the position where the goods is located, wherein the serial number of the position corresponds to the X-axis coordinate, the Y-axis coordinate, and the Z-axis coordinate of the position.

37. The order completion method according to claim 35, wherein the adjusting a position of a gripping mechanism based on a difference between a coordinate of the first designated position and a coordinate of the storage position comprises: controlling the gripping mechanism to rotate or move upwards or move downwards based on the difference.

38. The order completion method according to claim 35, wherein the acquiring position information of the gripping mechanism, and comparing the position information of the gripping mechanism with the storage position information, and controlling the gripping mechanism to take goods when the acquired position information of the gripping mechanism matches the storage position information comprises:

acquiring the position information of the gripping mechanism;

comparing, by the movable device, the position information of the gripping mechanism with the storage position information; and

controlling the gripping mechanism to take goods when the acquired position information of the gripping mechanism matches the storage position information.

39. The order completion method according to claim 35, wherein the acquiring position information of the gripping mechanism, and comparing the position information of the gripping mechanism with the storage position information, and controlling the gripping mechanism to take goods when the acquired position information of the gripping mechanism matches the storage position information comprises:

acquiring the position information of the gripping mechanism;

sending the position information of the gripping mechanism to a control center, wherein the control center compares the position information of the gripping mechanism with the storage position information to generate a taking command;

receiving the taking command sent by the control center; and

controlling the gripping mechanism to take goods.

40. The order completion method according to claim 38 or 39, wherein the acquiring the position information of the gripping mechanism comprises: acquiring a rotation amount of a motor that drives the gripping mechanism to adjust the position, to acquire the position information of the gripping mechanism.

41. The order completion method according to claim 38 or 39, wherein the controlling the gripping mechanism to take goods comprises: controlling the gripping mechanism to extend, to take the goods out of a storage cell where the goods is located and place the goods to a storage unit of the movable device.

42. The order completion method according to claim 41, wherein the taking completion signal comprises information of a position in the storage unit of the movable device where the goods is located.

43. The order completion method according to claim 38 or 39, wherein the controlling the gripping mechanism to place the goods comprises: controlling the gripping mechanism to take the goods from a storage unit of the movable device and place the goods into a temporary storage cell of the picking station.

44. The order completion method according to claim 34, further comprising:
correcting a position of the goods in a process that the movable device picks the goods.

45. The order completion method according to claim 44, wherein the correcting a position of the goods in a process that the movable device picks the goods comprises:

controlling a gripping mechanism to take a pallet;

acquiring a deviation between the gripping mechanism and the pallet, wherein the deviation comprises a X-axis deviation, a Y-axis deviation, and an angle deviation; and

adjusting a moving distance of the movable device and/or a telescopic distance of the gripping mechanism and/or a rotation angle of the gripping mechanism, according to the deviation, to correct the deviation between the gripping mechanism and the pallet.

46. The order completion method according to claim 45, wherein the X-axis deviation, the Y-axis deviation, and the angle deviation are acquired simultaneously.

47. The order completion method according to claim 45, wherein the adjusting a moving distance of the movable device and/or a telescopic distance of the gripping mechanism and/or a rotation angle of the gripping mechanism, according to the deviation, to correct the deviation between the gripping mechanism and the pallet comprises:

acquiring the deviation, and determining whether the angle deviation in the deviation is equal to zero;

if the angle deviation is not equal to zero, when the gripping mechanism is to extend to a storage unit, controlling the gripping mechanism to rotate for an angle value of the angle deviation in a direction opposite to a direction of the angle deviation, and then controlling the gripping mechanism to extend to the storage unit;

acquiring an image of a positioning identifier of the pallet;

comparing the image of the positioning identifier with a standard image, to obtain the X-axis deviation and the Y-axis deviation between the gripping mechanism and the pallet;

adjusting the moving distance according to the X-axis deviation to correct the X-axis deviation; and

adjusting the telescopic distance of the gripping mechanism according to the Y-axis deviation to correct the Y-axis deviation.

48. The order completion method according to claim 45, wherein the adjusting a moving distance of the movable device and/or a telescopic distance of the gripping mechanism and/or a rotation angle of the gripping mechanism, according to the deviation, to correct the deviation between the gripping mechanism and the pallet comprises:

acquiring the deviation, and determining whether the angle deviation in the deviation is equal to zero; and

if the angle deviation is not equal to zero, cooperatively adjusting the rotation angle of the gripping mechanism and the telescopic distance of the gripping mechanism, to simultaneously correct the X-axis deviation, the Y-axis deviation, and the angle deviation.

**49.** The order completion method according to claim 45, wherein the adjusting a moving distance of the movable device and/or a telescopic distance of the gripping mechanism and/or a rotation angle of the gripping mechanism, according to the deviation, to correct the deviation between the gripping mechanism and the pallet comprises:

acquiring the deviation, and determining whether the angle deviation in the deviation is equal to zero; and
if the angle deviation is equal to zero, adjusting the moving distance according to the X-axis deviation to correct the X-axis deviation; and adjusting the telescopic distance of the gripping mechanism according to the Y-axis deviation to correct the Y-axis deviation.

**50.** The order completion method according to claim 47 or 49, wherein the adjusting the moving distance according to the X-axis deviation to correct the X-axis deviation comprises:

determining whether current position information of the movable device is consistent with position information of a position where the pallet is to be placed when the gripping mechanism extends to a shelf; and
if the current position information of the movable device is consistent with the position information of the position where the pallet is to be placed, moving, by the movable device, for a distance value of the X-axis deviation in a direction opposite to a direction of the X-axis deviation, to correct the X-axis deviation.

**51.** The order completion method according to claim 47 or 49, wherein the adjusting the telescopic distance of the gripping mechanism according to the Y-axis deviation to correct the Y-axis deviation comprises:

determining whether a telescopic length of the gripping mechanism is the same as a preset telescopic length when the gripping mechanism extends to a storage unit or extends to a shelf; and
if the telescopic length of the gripping mechanism is the same as the preset telescopic length, stretching, by the gripping mechanism, for a distance value of the Y-axis deviation in a direction opposite to a direction of the Y-axis deviation, to correct the Y-axis deviation.

**52.** The order completion method according to claim 45, wherein after acquiring the deviation between the gripping mechanism and the pallet, the method further comprises:

determining whether the deviation is greater than a preset threshold; and
if the deviation is greater than the preset threshold, performing an operation of adjusting the moving distance, the telescopic distance of the gripping mechanism and the rotation angle of the gripping mechanism according to the deviation, to correct the deviation.

**53.** The order completion method according to claim 52, wherein the determining whether the deviation is greater than a preset threshold comprises:

determining whether the X-axis deviation is greater than an X-axis deviation threshold;
determining whether the Y-axis deviation is greater than a Y-axis deviation threshold; and
determining whether the angle deviation is greater than an angle deviation threshold.

**54.** The order completion method according to claim 45, wherein the acquiring a deviation between the gripping mechanism and the pallet comprises:

acquiring an image of a positioning identifier of the pallet; and
comparing the image of the positioning identifier with a standard image, to obtain the deviation between the gripping mechanism and the pallet.

**55.** The order completion method according to claim 34, wherein the generating, by a picking station, a reminder based on order information of the order comprises:

receiving the order information sent by a control center;
determining whether an arrival signal of the charging vehicle corresponding to the order information is received;
determining whether an arrival signal of the goods corresponding to the order information is received; and
displaying the order information and generating a reminder on a position where the goods corresponding to the order information is located, when the arrival signal of the goods and the arrival signal of the charging vehicle are received.

**56.** The order completion method according to claim 55, wherein the order information comprises: a name of the goods, a quantity of the goods, and a position of the container corresponding to the order.

**57.** The order completion method according to claim 56, wherein the generating a reminder on a position where the goods corresponding to the order information is located comprises:

acquiring information about goods in all temporary storage cells of a shelf and the order information;

matching the name of the goods in the order information with the information about the goods in all temporary storage cells of the shelf; and

generating a reminder on a certain temporary storage cell, wherein the information about the goods in the certain temporary storage cell successfully matches the name of the goods in the order information.

58. The order completion method according to claim 56, wherein the order information comprises a plurality of pieces of sub-order information and the generating a reminder on a position where the goods corresponding to the order information is located comprises:

acquiring information about goods in all temporary storage cells of a shelf and the plurality of pieces of sub-order information;

matching the name of the goods in each of the pieces of the sub-order information with the information about the goods in all temporary storage cells of the shelf; and

generating a reminder on a certain temporary storage cell, wherein the information about the goods in the certain temporary storage cell successfully matches the name of the goods in the sub-order information, wherein the reminders for different pieces of sub-order information are different.

59. The order completion method according to any one of claims 57 to 58, wherein the information about the goods comprises: a name of the goods, a position of the goods in the shelf, and a remaining quantity of the goods.

60. The order completion method according to any one of claims 57 to 58, wherein the reminders are light reminders with different colors.

61. The order completion method according to claim 55, further comprising:

receiving information about taken goods inputted by a user; and

cancelling the reminder on a temporary storage cell where the taken goods is located on a shelf, and updating the order information, and displaying the updated order information.

62. The order completion method according to claim 34, further comprising: scheduling the charging vehicle and the movable device to move to a picking station corresponding to the charging vehicle and the movable device.

63. The order completion method according to claim 62, wherein the scheduling the charging vehicle and the movable device to move to a picking station corresponding to the charging vehicle and the movable device comprises:

receiving picking station information;

moving, by the movable apparatus, to a picking station corresponding to the picking station information;

acquiring information of a current position of the movable apparatus, and comparing the information of the current position with the picking station information, and parking at the current position if the information of the current position matches the picking station information; and

receiving order completion area information, and moving, according to the order completion area information, to an order completion area corresponding to the order completion area information.

64. The order completion method according to claim 63, wherein

the picking station information comprises an X-axis coordinate and a Y-axis coordinate of a position of at least one picking station; and

the order completion area information comprises an X-axis coordinate and a Y-axis coordinate of a position of the order completion area.

65. The order completion method according to claim 64, wherein the picking station information further comprises a priority order of picking stations.

66. The order completion method according to claim 62, wherein the moving, by the movable apparatus, to a picking station corresponding to the picking station information comprises: moving to picking stations in sequence according to the priority order of the picking stations.

67. The order completion method according to claim 66, wherein the moving to picking stations in sequence according to the priority order of the picking stations comprises:

moving to a picking station having a highest priority according to the priority order of the picking stations;

acquiring information of a current position of the movable apparatus, and comparing the information of the current position with the picking station information, and parking at the current position if the information of the current position matches the picking station information; and

receiving a moving command sent by a control center, and moving to a picking station having a priority next to the highest priority according to the priority order of the picking stations, until moving to a picking station having a lowest priority.

68. The order completion method according to claim 67, wherein the acquiring information of a current position of the movable apparatus, and comparing the information of the current position with the picking station information, and parking at the current position if the information of the current position matches the picking station information comprises:

   acquiring the information of the current position of the movable apparatus;
   comparing, by the movable apparatus, the information of the current position with the picking station information; and
   parking at the current position if the information of the current position matches the picking station information.

69. The order completion method according to claim 67, wherein the acquiring information of a current position of the movable apparatus, and comparing the information of the current position with the picking station information, and parking at the current position if the information of the current position matches the picking station information comprises:

   acquiring the information of the current position of the movable apparatus;
   sending the information of the current position to the control center, wherein the control center compares the information of the current position with the picking station information; and
   receiving a matching consistent signal sent by the control center and parking at the current position.

70. The order completion method according to claim 34, further comprising:
   taking a remaining goods out of the picking station.

71. The order completion method according to claim 70, wherein the taking a remaining goods out of the picking station comprises:

   receiving a pallet picking command comprising pallet picking information, wherein the pallet picking information comprises first designated position information, storage position information about a storage position where a to-be-picked pallet is currently located, second designated position information, and placement position information about a placement position where the to-be-picked pallet is to be placed;
moving, by the movable device, to a first designated position according to the first designated position information;
adjusting a position of a gripping mechanism based on a difference between a coordinate of the first designated position and a coordinate of the storage position;
acquiring position information of the gripping mechanism, and comparing the position information of the gripping mechanism with the storage position information, and controlling the gripping mechanism to take the to-be-picked pallet when the acquired position information of the gripping mechanism matches the storage position information;
sending a pallet taking completion signal;
moving, by the movable device, to a second designated position according to the second designated position information;
adjusting the position of the gripping mechanism based on a difference between a coordinate of the second designated position and a coordinate of the placement position;
acquiring position information of the gripping mechanism, and comparing the position information of the gripping mechanism with the placement position information, and controlling the gripping mechanism to place the to-be-picked pallet on the placement position when the acquired position information of the gripping mechanism matches the placement position information; and
sending a pallet placing completion signal.

72. The order completion method according to claim 71, wherein the storage position information comprises an X-axis coordinate, a Y-axis coordinate, and a Z-axis coordinate of a position where the to-be-picked pallet is located in a warehouse, or a serial number of the position where the to-be-picked pallet is located, wherein the serial number of the position corresponds to the X-axis coordinate, the Y-axis coordinate, and the Z-axis coordinate of the position.

73. The order completion method according to claim 71, wherein the adjusting a position of a gripping mechanism based on a difference between a coordinate of the first designated position and a coordinate of the storage position comprises: controlling the gripping mechanism to rotate or move upwards or move downwards based on the difference between the coordinate of the first designated position and the coordinate of the storage position.

74. The order completion method according to claim 71, wherein the acquiring position information of the gripping mechanism, and comparing the position information of the gripping mechanism with the storage position information, and controlling the gripping mechanism to take the to-be-picked pallet when the acquired position information of the gripping mechanism matches the storage position information comprises:

> acquiring the position information of the gripping mechanism;
> comparing, by the movable device, the position information of the gripping mechanism with the storage position information; and
> controlling the gripping mechanism to take the to-be-picked pallet when the acquired position information of the gripping mechanism matches the storage position information.

75. The order completion method according to claim 71, wherein the acquiring position information of the gripping mechanism, and comparing the position information of the gripping mechanism with the storage position information, and controlling the gripping mechanism to take the to-be-picked pallet when the acquired position information of the gripping mechanism matches the storage position information comprises:

> acquiring the position information of the gripping mechanism;
> sending the position information of the gripping mechanism to a control center, wherein the control center compares the position information of the gripping mechanism with the storage position information to generate a pallet taking command;
> receiving the pallet taking command sent by the control center; and
> controlling the gripping mechanism to take the to-be-picked pallet.

76. The order completion method according to claim 74 or 75, wherein the acquiring the position information of the gripping mechanism comprises: acquiring a rotation amount of a motor that drives the gripping mechanism to adjust the position, to acquire the position information of the gripping mechanism.

77. The order completion method according to claim 74 or 75, wherein the controlling the gripping mechanism to take the to-be-picked pallet comprises: controlling the gripping mechanism to extend, to take the to-be-picked pallet out of a storage cell where the to-be-picked pallet is located and place the to-be-picked pallet to a storage unit of the movable device.

78. The order completion method according to claim 70, wherein the taking a remaining goods out of the picking station comprises:

> receiving a goods picking completion signal;
> sending a pallet picking command to the movable device in response to the goods picking completion signal, to control the movable device to pick a pallet; and
> receiving a pallet taking completion signal and a pallet placing completion signal sent from the movable device.

79. The order completion method according to claim 34, further comprising:
replenishing the low-frequency picking area with goods.

80. The order completion method according to claim 79, wherein the replenishing the low-frequency picking area with goods comprises:

> receiving a pallet replenishing command comprising pallet replenishing information, wherein the pallet replenishing information comprises first designated position information, first storage position information about a first storage position where a to-be-replenished pallet is currently located, second designated position information, and first placement position information about a first placement position where the to-be-replenished pallet is to be placed;
> moving, by the movable device, to a first designated position according to the first designated position information;
> adjusting a position of a gripping mechanism based on a difference between a coordinate of the first designated position and a coordinate of the first storage position;
> acquiring position information of the gripping mechanism, and comparing the position information of the gripping mechanism with the first storage position information, and controlling the gripping mechanism to take the to-be-replenished pallet when the acquired position information of the gripping mechanism matches the first storage position information;
> sending a first pallet taking completion signal;
> moving, by the movable device, to a second designated position according to the second designated position information;
> adjusting the position of the gripping mechanism based on a difference between a coordinate of the second designated position and a coordinate of the first placement position;
> acquiring position information of the gripping mechanism, and comparing the position information of the gripping mechanism with the first placement position information, and controlling the gripping mechanism to place the to-be-replenished pallet on the first placement position when the acquired position information of the gripping mechanism matches the first placement position information;

sending a pallet reaching signal;

receiving a pallet returning command comprising pallet returning information, wherein the pallet returning information comprises third designated position information, second storage position information about a second storage position where a replenished pallet is currently located, fourth designated position information, and second placement position information about a second placement position where the replenished pallet is to be placed;

moving, by the movable device, to a third designated position according to the third designated position information;

adjusting the position of the gripping mechanism based on a difference between a coordinate of the third designated position and a coordinate of the second storage position;

acquiring position information of the gripping mechanism, and comparing the position information of the gripping mechanism with the second storage position information, and controlling the gripping mechanism to take the replenished pallet when the acquired position information of the gripping mechanism matches the second storage position information;

sending a second pallet taking completion signal;

moving, by the movable device, to a fourth designated position according to the fourth designated position information;

adjusting the position of the gripping mechanism based on a difference between a coordinate of the fourth designated position and a coordinate of the second placement position;

acquiring position information of the gripping mechanism, and comparing the position information of the gripping mechanism with the second placement position information, and controlling the gripping mechanism to place the replenished pallet on the second placement position when the acquired position information of the gripping mechanism matches the second placement position information; and

sending a pallet returning completion signal.

81. The order completion method according to claim 80, wherein the first storage position information comprises an X-axis coordinate, a Y-axis coordinate, and a Z-axis coordinate of a position where the to-be-replenished pallet is located in a warehouse, or a serial number of the position where the to-be-picked pallet is located, wherein the serial number of the position corresponds to the X-axis coordinate, the Y-axis coordinate, and the Z-axis coordinate of the position .

82. The order completion method according to claim 80, wherein the adjusting a position of a gripping mechanism based on a difference between a coordinate of the first designated position and a coordinate of the first storage position comprises: controlling the gripping mechanism to rotate or move upwards or move downwards based on the difference between the coordinate of the first designated position and the coordinate of the first storage position.

83. The order completion method according to claim 80, wherein the acquiring position information of the gripping mechanism, and comparing the position information of the gripping mechanism with the first storage position information, and controlling the gripping mechanism to take the to-be-replenished pallet when the acquired position information of the gripping mechanism matches the first storage position information comprises:

acquiring the position information of the gripping mechanism;

comparing, by the movable device, the position information of the gripping mechanism with the first storage position information; and

controlling the gripping mechanism to take the to-be-replenished pallet when the acquired position information of the gripping mechanism matches the first storage position information.

84. The order completion method according to claim 80, wherein the acquiring position information of the gripping mechanism, and comparing the position information of the gripping mechanism with the first storage position information, and controlling the gripping mechanism to take the to-be-replenished pallet when the acquired position information of the gripping mechanism matches the first storage position information comprises:

acquiring the position information of the gripping mechanism;

sending the position information of the gripping mechanism to a control center, wherein the control center compares the position information of the gripping mechanism with the first storage position information to generate a pallet taking command;

receiving the pallet taking command sent by the control center; and

controlling the gripping mechanism to take the to-be-replenished pallet.

85. The order completion method according to claim 83 or 84, wherein the controlling the gripping mechanism to take goods comprises: controlling the gripping mechanism to extend, to take the goods out of a storage cell where the goods is located and place the goods to a storage unit of the movable device.

86. The order completion method according to claim 79, wherein the replenishing the low-frequency picking area with goods comprises:

acquiring inventory information of a storage area, and generating an inventory insufficient signal based on the inventory information; sending a pallet replenishing command to the movable device in response to the inventory insufficient signal, to control the movable device to replenish a pallet with goods; receiving a first pallet taking completion signal and a pallet reaching signal sent by the movable device; sending a replenishing command in response to the pallet reaching signal; receiving a replenishing completion signal; sending a pallet returning command to the movable device in response to the replenishing completion signal; and receiving a second pallet taking completion signal and a pallet returning completion signal sent by the movable device.

87. The order completion method according to claim 86, wherein the inventory information is a value obtained by subtracting a quantity of picked goods from a storage quantity of goods in the storage area, and the inventory insufficient signal is generated when the inventory information is less than a preset threshold.

88. The order completion method according to claim 34, further comprising:
moving, by the charging vehicle, to an order completion area for packaging the goods.

Figure 1

**Figure 2**

**Figure 3**

**Figure 4**

331

Figure 5

331

332

**Figure 6**

**Figure 7**

**Figure 8**

**Figure 9**

**Figure 10**

**Figure 11**

**Figure 12**

**Figure 13**

**Figure 14**

**Figure 15**

Receive a goods picking command including picking information. The picking information includes first designated position information, storage position information about a storage position where a to-be-picked goods is currently located, second designated position information, and placement position information about a placement position where the to-be-picked goods is to be placed — S111

The movable device moves to a first designated position according to the first designated position information — S112

Adjust a position of a gripping mechanism based on a difference between a coordinate of the first designated position and a coordinate of the storage position — S113

Acquire position information of the gripping mechanism, and compare the position information of the gripping mechanism with the storage position information, and control the gripping mechanism to take goods when the acquired position information of the gripping mechanism matches the storage position information — S114

The movable device moves to a second designated position according to the second designated position information — S116

Send a taking completion signal — S115

Adjust the position of the gripping mechanism based on a difference between a coordinate of the second designated position and a coordinate of the placement position — S117

Acquire position information of the gripping mechanism, and compare the position information of the gripping mechanism with the placement position information, and control the gripping mechanism to place the goods on the placement position when the acquired position information of the gripping mechanism matches the placement position information — S118

Send a placing completion signal — S119

**Figure 16**

S121

Acquire the position information of the gripping mechanism

S122

The movable device compares the position information of the gripping mechanism with the storage position information

S123

Control the gripping mechanism to take goods when the acquired position information of the gripping mechanism matches the storage position information

Figure 17

S131

Acquire the position information of the gripping mechanism

S132

Send the position information of the gripping mechanism to a control center, the control center compares the position information of the gripping mechanism with the storage position information to generate a taking command

S134

Control the gripping mechanism to take goods

S133

Receive the taking command sent by the control center

Figure 18

400

Receiving module

410

First moving module

420

First adjusting module

450

Second moving module

440

First feedback module

430

Taking control module

460

Second adjusting module

470

Placing control module

480

Second feedback module

**Figure 19**

S21

Control a gripping mechanism to take a pallet

S22

Acquire a deviation between the gripping mechanism and the pallet

S23

Adjust a moving distance of the movable device and/ or a telescopic distance of the gripping mechanism and/or a rotation angle of the gripping mechanism, according to the deviation, to correct the deviation between the gripping mechanism and the pallet

**Figure 20**

S221

Acquire an image of a positioning identifier of the pallet

S222

Compare the image of the positioning identifier with a standard image, to obtain the deviation between the gripping mechanism and the pallet

**Figure 21**

S231

Acquire the deviation, and determine whether the angle deviation in the deviation is equal to zero

S232

If the angle deviation is not equal to zero, when the gripping mechanism is to extend to a storage unit, control the gripping mechanism to rotate for an angle value of the angle deviation in a direction opposite to a direction of the angle deviation, and then control the gripping mechanism to extend to the storage unit

S233

Acquire an image of a positioning identifier of the pallet

S234

Compare the image of the positioning identifier with a standard image, to obtain the X-axis deviation and the Y-axis deviation between the gripping mechanism and the pallet

S235

Adjust the moving distance according to the X-axis deviation to correct the X-axis deviation

S236

Adjust the telescopic distance of the gripping mechanism according to the Y-axis deviation to correct the Y-axis deviation

**Figure 22**

S2351

Determine whether current position information of the movable device is consistent with position information of a position where the pallet is to be placed when the gripping mechanism extends to a shelf

S2352

If the current position information of the movable device is consistent with the position information of the position where the pallet is to be placed, the movable device moves for a distance value of the X-axis deviation in a direction opposite to a direction of the X-axis deviation, to correct the X-axis deviation

**Figure 23**

S2361

Determine whether a telescopic length of the gripping mechanism is the same as a preset telescopic length when the gripping mechanism extends to a storage unit or extends to a shelf

S2362

If the telescopic length of the gripping mechanism is the same as the preset telescopic length, the gripping mechanism stretches for a distance value of the Y-axis deviation in a direction opposite to a direction of the Y-axis deviation, to correct the Y-axis deviation

**Figure 24**

Device for correcting a position deviation of a pallet

— 610

Control module

— 620

Deviation
calculating module

— 630

Deviation
correcting module

**Figure 25**

Deviation calculating module 620

— 621

Acquiring unit

— 622

Deviation
calculating unit

**Figure 26**

S301

Receiving picking station information

S302

The movable apparatus moves to a picking station corresponding to the picking station information

S303

Acquire information of a current position of the movable apparatus, and compare the information of the current position with the picking station information, and park at the current position if the information of the current position matches the picking station information

S304

Receive order completion area information, and move, according to the order completion area information, to an order completion area corresponding to the order completion area information

**Figure 27**

S311

Move to a picking station having a highest priority according to the priority order of the picking stations

S312

Acquire information of a current position of the movable apparatus, and compare the information of the current position with the picking station information, and park at the current position if the information of the current position matches the picking station information

S313

Receive a moving command sent by a control center, and move to a picking station having a priority next to the highest priority according to the priority order of the picking stations, until moving to a picking station having a lowest priority

**Figure 28**

S321

Acquire the information of the current position of the movable apparatus

S322

The movable apparatus compares the information of the current position with the picking station information

S323

Park at the current position if the information of the current position matches the picking station information

**Figure 29**

S331

Acquire the information of the current position of the movable apparatus

S332

Send the information of the current position to the control center, the control center compares the information of the current position with the picking station information

S333

Receive a matching consistent signal sent by the control center and park at the current position

**Figure 30**

Scheduling device

| Receiving module | First moving module | Comparing module | Second moving module |
|---|---|---|---|

610 620 630 640

**Figure 31**

Receive the order information sent by a control center

S601

Determine whether an arrival signal of the movable device corresponding to the order information is received

S602

Determine whether an arrival signal of the goods corresponding to the order information is received

S603

Display the order information and generate a reminder on a position where the goods corresponding to the order information is located, when the arrival signal of the goods and the arrival signal of the charging vehicle are received

S604

**Figure 32**

S611

Acquire information about goods in all temporary
storage cells of a shelf and the order information

S612

Matching the name of the goods in the order information
with the information about the goods in all temporary
storage cells of the shelf

S613

Generate a reminder on a certain temporary storage cell,
the information about the goods in the certain temporary
storage cell successfully matches the name of the goods
in the order information

**Figure 33**

S621

Acquire information about goods in all temporary storage cells
of a shelf and the multiple pieces of sub-order information

S622

Match the name of the goods in each of the pieces of the sub-
order information with the information about the goods in all
temporary storage cells of the shelf

S623

Generate a reminder on a certain temporary storage cell, the
information about the goods in the certain temporary storage
cell successfully matches the name of the goods in the sub-
order information, the reminders for different pieces of sub-
order information are different

**Figure 34**

S631

Receive the order information sent by a control center

S632

Determine whether an arrival signal of the movable device corresponding to the order information is received

S633

Determine whether an arrival signal of the goods corresponding to the order information is received

S634

Display the order information and generate a reminder on a position where the goods corresponding to the order information is located, when the arrival signal of the goods and the arrival signal of the charging vehicle are received

S635

Receive information about taken goods inputted by a user

S636

Cancel the reminder on a temporary storage cell where the taken goods is located on a shelf, and update the order information, and display the updated order information

**Figure 35**

Picking reminding device

610

Order information receiving module

620

First determining module

630

Second determining module

660

Updating module

650

Taken goods information receiving module

640

Reminding module

**Figure 36**

Reminding module 640

641

Obtaining unit

642

Matching unit

643

Reminding unit

**Figure 37**

S411

Receive a pallet picking command including pallet picking information. The pallet picking information includes first designated position information, storage position information about a storage position where a to-be-picked pallet is currently located, second designated position information, and placement position information about a placement position where the to-be-picked pallet is to be placed

S412

The movable device moves to a first designated position according to the first designated position information

S413

Adjust a position of a gripping mechanism based on a difference between a coordinate of the first designated position and a coordinate of the storage position

S414

Acquire position information of the gripping mechanism, and compare the position information of the gripping mechanism with the storage position information, and control the gripping mechanism to take the to-be-picked pallet when the acquired position information of the gripping mechanism matches the storage position information

S416

The movable device moves to a second designated position according to the second designated position information

S415

Send a pallet taking completion signal

S418

Acquire position information of the gripping mechanism, and compare the position information of the gripping mechanism with the placement position information, and control the gripping mechanism to place the to-be-picked pallet on the placement position when the acquired position information of the gripping mechanism matches the placement position information

S417

Adjust the position of the gripping mechanism based on a difference between a coordinate of the second designated position and a coordinate of the placement position

S419

Send a pallet placing completion signal

**Figure 38**

S421

| Acquiring the position information of the gripping mechanism |

S422

| The movable device compares the position information of the gripping mechanism with the storage position information |

S423

| Control the gripping mechanism to take the to-be-picked pallet when the acquired position information of the gripping mechanism matches the storage position information |

**Figure 39**

S431

| Acquire the position information of the gripping mechanism |

S432

| Send the position information of the gripping mechanism to a control center, the control center compares the position information of the gripping mechanism with the storage position information to generate a pallet taking command |

S433

| Receive the pallet taking command sent by the control center |

S434

| Control the gripping mechanism to take the to-be-picked pallet |

**Figure 40**

S441           S442           S443

| Receive a goods picking completion signal | Send a pallet picking command to the movable device in response to the goods picking completion signal, to control the movable device to pick a pallet | Receive a pallet taking completion signal and a pallet placing completion signal sent from the movable device |
|---|---|---|

**Figure 41**

500      510      520

| First receiving module | First moving module | First adjusting module |
|---|---|---|

550      540      530

| Second moving module | First feedback module | Pallet taking control module |
|---|---|---|

560      570      580

| Second adjusting module | Pallet placing control module | Second feedback module |
|---|---|---|

**Figure 42**

800      810      820

| Second receiving module | Command sending module | Third receiving module |
|---|---|---|

**Figure 43**

Receive a pallet replenishing command including pallet replenishing information, the pallet replenishing information includes first designated position information, first storage position information about a first storage position where a to-be-replenished pallet is currently located, second designated position information, and first placement position information about a first placement position where the to-be-replenished pallet is to be placed — S501

The movable device moves to a first designated position according to the first designated position information — S502

Adjust a position of a gripping mechanism based on a difference between a coordinate of the first designated position and a coordinate of the first storage position — S503

Acquire position information of the gripping mechanism, and compare the position information of the gripping mechanism with the first storage position information, and control the gripping mechanism to take the to-be-replenished pallet when the acquired position information of the gripping mechanism matches the first storage position information — S504

Send a first pallet taking completion signal — S505

The movable device moves to a second designated position according to the second designated position information — S506

Adjust the position of the gripping mechanism based on a difference between a coordinate of the second designated position and a coordinate of the first placement position — S507

Acquire position information of the gripping mechanism, and compare the position information of the gripping mechanism with the first placement position information, and control the gripping mechanism to place the to-be-replenished pallet on the first placement position when the acquired position information of the gripping mechanism matches the first placement position information — S508

Send a pallet reaching signal — S509

Receive a pallet returning command including pallet returning information, the pallet returning information includes third designated position information, second storage position information about a second storage position where a replenished pallet is currently located, fourth designated position information, and second placement position information about a second placement position where the replenished pallet is to be placed — S510

Adjust the position of the gripping mechanism based on a difference between a coordinate of the third designated position and a coordinate of the second storage position — S512

The movable device moves to a third designated position according to the third designated position information — S511

Acquire position information of the gripping mechanism, and compare the position information of the gripping mechanism with the second storage position information, and control the gripping mechanism to take the replenished pallet when the acquired position information of the gripping mechanism matches the second storage position information — S513

Send a second pallet taking completion signal — S514

The movable device moves to a fourth designated position according to the fourth designated position information — S515

Adjust the position of the gripping mechanism based on a difference between a coordinate of the fourth designated position and a coordinate of the second placement position — S516

Acquire position information of the gripping mechanism, and compare the position information of the gripping mechanism with the second placement position information, and control the gripping mechanism to place the replenished pallet on the second placement position when the acquired position information of the gripping mechanism matches the second placement position information — S517

Send a pallet returning completion signal — S518

**Figure 44**

86

S521

| Acquire the position information of the gripping mechanism | → | The movable device compares the position information of the gripping mechanism with the first storage position information | → | Control the gripping mechanism to take the to-be-replenished pallet when the acquired position information of the gripping mechanism matches the first storage position information |
|---|---|---|---|---|

S522 — S523

**Figure 45**

S531 — S532 — S533 — S534

| Acquire the position information of the gripping mechanism | → | Send the position information of the gripping mechanism to a control center, the control center compares the position information of the gripping mechanism with the first storage position information to generate a pallet taking command | → | Receive the pallet taking command sent by the control center | → | Control the gripping mechanism to take the to-be-replenished pallet |
|---|---|---|---|---|---|---|

**Figure 46**

S541

Acquire inventory information of a storage area, and generate an inventory insufficient signal based on the inventory information

S542

Send a pallet replenishing command to the movable device in response to the inventory insufficient signal, to control the movable device to replenish a pallet

S543

Receive a first pallet taking completion signal and a pallet reaching signal sent by the movable device

S544

Send a replenishing command in response to the pallet reaching signal

S545

Receive a replenishing completion signal

S546

Send a pallet returning command to the movable device in response to the replenishing completion signal

S547

Receive a second pallet taking completion signal and a pallet returning completion signal sent by the movable device

**Figure 47**

First receiving module — 502

First moving module — 504

First adjusting module — 506

Second moving module — 512

First feedback module — 510

First pallet taking control module — 508

Second adjusting module — 514

Pallet reaching control module — 516

Second feedback module — 518

Third adjusting module — 524

Third moving module — 522

Second receiving module — 520

Second pallet taking control module — 526

Third feedback module — 528

Fourth moving module — 530

Pallet returning control module — 536

Pallet returning control module — 534

Fourth adjusting module — 532

**Figure 48**

Acquiring module — 800

First command sending module — 810

Third receiving module — 820

Third command sending module — 850

Fourth receiving module — 840

Second command sending module — 830

Fifth receiving module — 860

**Figure 49**

## INTERNATIONAL SEARCH REPORT

| International application No. |
|---|
| **PCT/CN2018/095282** |

| A. | CLASSIFICATION OF SUBJECT MATTER |
|---|---|

B65G 1/137(2006.01)i; G06Q 50/28(2012.01)n

According to International Patent Classification (IPC) or to both national classification and IPC

| B. | FIELDS SEARCHED |
|---|---|

Minimum documentation searched (classification system followed by classification symbols)

B65G; G06Q

Documentation searched other than minimum documentation to the extent that such documents are included in the fields searched

Electronic data base consulted during the international search (name of data base and, where practicable, search terms used)

WPI, EPODOC, CNPAT, CNKI: 仓库, 货物, 订单, 商品, 拣选, 分拣, 拣货, 机器人, 分区, 货架, 频率, 高, 低, 畅销, 热销, 并行, depository, storage, goods, order, merchandise, pick, robot, shelf, frequency, salable, parallel

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 105858045 A (BEIJING GEEKPLUS TECHNOLOGY CO., LTD.) 17 August 2016 (2016-08-17) description, paragraphs 0043-0104 | 1-88 |
| Y | CN 102789601 A (BEIJING JINGDONG CENTURY TRADING CO., LTD.) 21 November 2012 (2012-11-21) description, paragraphs 0014 and 0033 | 1-88 |
| Y | CN 105775550 A (FUZHOU UNIVERSITY) 20 July 2016 (2016-07-20) description, paragraphs 0041 and 0046 | 1-88 |
| A | CN 106311615 A (SHANGHAI JILUO INTELLIGENT TECHNOLOGY CO., LTD.) 11 January 2017 (2017-01-11) entire document | 1-88 |
| A | WO 2008067516 A3 (TRANSBOTICS CORP.) 06 November 2008 (2008-11-06) entire document | 1-88 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 September 2018** | **27 September 2018** |

| Name and mailing address of the ISA/CN | Authorized officer |
|---|---|
| **State Intellectual Property Office of the P. R. China**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br><br>**PCT/CN2018/095282**</td></tr>
</table>

| Patent document cited in search report | | | Publication date (day/month/year) | Patent family member(s) | | | Publication date (day/month/year) |
|---|---|---|---|---|---|---|---|
| CN | 105858045 | A | 17 August 2016 | None | | | |
| CN | 102789601 | A | 21 November 2012 | US | 2015032498 | A1 | 29 January 2015 |
| | | | | EP | 2838059 | A4 | 18 November 2015 |
| | | | | AU | 2013247211 | B2 | 20 April 2017 |
| | | | | JP | 6017671 | B2 | 02 November 2016 |
| | | | | JP | 2015518209 | A | 25 June 2015 |
| | | | | WO | 2013152734 | A1 | 17 October 2013 |
| | | | | EP | 2838059 | A1 | 18 February 2015 |
| | | | | AU | 2013247211 | A1 | 28 January 2016 |
| CN | 105775550 | A | 20 July 2016 | None | | | |
| CN | 106311615 | A | 11 January 2017 | None | | | |
| WO | 2008067516 | A3 | 06 November 2008 | WO | 2008067516 | A2 | 05 June 2008 |
| | | | | US | 2008131255 | A1 | 05 June 2008 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710562402